# EUROPEAN PATENT SPECIFICATION

(11) **EP 3 541 011 B1**
(45) Date of publication and mention of the grant of the patent: **16.11.2022**
(21) Application number: 19161865.1
(22) Date of filing: 11.03.2019
(51) Int. Cl.: H04L 12/18

(54) **COMMUNICATION SYSTEM AND INFORMATION PROCESSING APPARATUS**
KOMMUNIKATIONSSYSTEM UND INFORMATIONSVERARBEITUNGSVORRICHTUNG
SYSTÈME DE COMMUNICATION ET APPAREIL DE TRAITEMENT D'INFORMATIONS

(30) Priority: 12.03.2018 JP 2018044809; 12.03.2018 JP 2018044810
(43) Date of publication of application: 18.09.2019
(73) Proprietor: Ricoh Company, Ltd., Tokyo 143-8555 (JP)
(72) Inventor: YAMADA, Tsuyoshi, Tokyo, 143-8555 (JP); HASHIMOTO, Takahiro, Tokyo, 143-8555 (JP); HAYASHI, Yasuhiro, Tokyo, 143-8555 (JP)
(74) Representative: SSM Sandmair

(56) References cited:
- JP-A- 2011 048 505
- US-A1- 2013 278 712
- US-A1- 2015 264 184
- US-A1- 2016 156 570
- US-A1- 2016 277 460

## Description

### BACKGROUND OF THE INVENTION

### 1. Field of the Invention

The present invention relates to a communication system and an information processing apparatus.

### 2. Description of the Related Art

A conference room, where a plurality of participants gathers and holds a conference, may be reserved in advance and used. In recent years, participants can reserve a conference room by using a schedule management system, etc.

There are cases where a participant uses a communication terminal or equipment such as a remote conference apparatus installed in a conference room, to hold a remote conference with a participant in another conference room at a remote location. The participant inputs, to the remote conference apparatus in the conference room, connection destination information for calling another remote conference apparatus in another conference room at the remote location, and connects to the other remote conference apparatus installed in the conference room at the remote location and starts a remote conference.

As described above, in the related art, at least one participant of two conference rooms that are located at remote locations from each other, needs to perform some kind of operation for calling the remote conference apparatus in the conference room at the remote location.

In order to address such inconveniences, a technique has been devised to reduce the operations by participants when starting a remote conference (see, for example, Patent Document 1). Patent Document 1 discloses a video conference system that connects remote conference apparatuses existing in two conference rooms, according to a conference start time that is reserved in advance.

Patent Document 1: Japanese Unexamined Patent Application Publication No. 2010-056979

US 2015/264184 A1 relates to a conference terminal control system, a conference terminal control device, and a conference terminal control method, which are able to simplify an operation required to start a conference over a network.

US 2016/156570 A1 relates to a method, a storage medium storing a management program of a management apparatus, a storage medium storing a terminal program of a terminal apparatus that are used in a case where the management apparatus and the terminal apparatus perform communication through a network for conducting an online meeting.

US 2016/277460 A1 provides a method and an apparatus for initiating a network conference, so that related information of the conference can be automatically generated.

The present disclosure has an object to provide a communication system capable of switching the communication terminal that is the connection destination to which a communication terminal at one site is to be connected.

The present disclosure has an object to provide a communication system in which equipment is connected after the participant becomes ready.

### SUMMARY OF THE INVENTION

The invention is set out by the appended set of claims. The embodiments and/or examples of the following description which are not covered by the claims, are provided for illustrative purpose only and are only intended to assist the reader in understanding the present invention. However, such embodiments and/or examples which are not covered by the claims do not form part of the present invention that is solely defined by the claims.

### BRIEF DESCRIPTION OF THE DRAWINGS

FIG. 1 is an example of a diagram for describing processing until remote conference apparatuses communicate with each other according to a first embodiment of the present invention;
FIG. 2 is an example of a schematic configuration diagram of a communication system according to embodiments of the present invention;
FIG. 3 is an example of a hardware configuration diagram of a remote conference apparatus according to embodiments of the present invention;
FIG. 4 is a hardware configuration diagram of an example of a computer system according to embodiments of the present invention;
FIG. 5 is an example of a functional block diagram illustrating functions of a terminal apparatus, a conference reservation system, and a remote conference apparatus in a block form according to the first embodiment of the present invention;
FIG. 6 is a diagram illustrating an example of a reservation screen displayed on a personal computer (PC) operated by a reserving person according to the first embodiment of the present invention;
FIG. 7 is a diagram illustrating an example of reservation information according to the first embodiment of the present invention;
FIG. 8 is a diagram illustrating an example of a standby screen displayed by a terminal apparatus according to the first embodiment of the present invention;
FIGS. 9A to 9D are diagrams illustrating an example of status update according to the first embodiment of the present invention;
FIG. 10 is an example of a sequence diagram illustrating a procedure in which a reserving person reserves a conference room and a terminal apparatus acquires reservation information according to the first embodiment of the present invention;
FIG. 11 is an example of a sequence diagram illustrating a procedure in which one remote conference apparatus that performs a remote conference connects to the other remote conference apparatus according to the first embodiment of the present invention;
FIG. 12 is an example of a flowchart illustrating a procedure in which the conference reservation system transmits a remote conference start report to each terminal apparatus according to the first embodiment of the present invention;
FIGS. 13A and 13B are diagrams illustrating another example of reservation information according to the first embodiment of the present invention;
FIG. 14 is a diagram illustrating an example of a reservation screen in which connection destination information is set for a participant according to the first embodiment of the present invention;
FIGS. 15A and 15B are diagrams illustrating an example of setting connection destination information on a reservation screen according to the first embodiment of the present invention;
FIG. 16 is a diagram illustrating an example of a reservation screen according to the first embodiment of the present invention;
FIG. 17 is an example of a diagram for describing an outline until the remote conference apparatus starts a remote conference according to a second embodiment of the present invention;
FIG. 18 is an example of a functional block diagram illustrating functions of a terminal apparatus, a conference reservation system, and a remote conference apparatus in a block form according to the second embodiment of the present invention;
FIGS. 19A and 19B are diagrams illustrating examples of reservation information according to the second embodiment of the present invention;
FIGS. 20A and 20B are diagrams illustrating examples of reservation information according to the second embodiment of the present invention;
FIG. 21 is an example of a sequence diagram illustrating a procedure in which one remote conference apparatus that performs a remote conference connects to the other remote conference apparatus according to the second embodiment of the present invention;
FIG. 22 is an example of a flowchart illustrating a procedure of comparing reservation information by a reservation information comparing unit according to the second embodiment of the present invention;
FIGS. 23A and 23B are diagrams illustrating an example of a check in confirmation screen displayed by the terminal apparatus according to the second embodiment of the present invention;
FIG. 24 is an example of a diagram for describing a process until remote conference apparatuses are connected to each other according to a third embodiment of the present invention;
FIG. 25 is an example of a functional block diagram illustrating functions of a terminal apparatus, a conference reservation system, and a remote conference apparatus in a block form according to the third embodiment of the present invention;
FIG. 26 is a diagram illustrating an example of a reservation screen displayed on a PC operated by a reserving person according to the third embodiment of the present invention;
FIGS. 27A and 27B are diagrams illustrating examples of reservation information according to the third embodiment of the present invention;
FIG. 28 is a diagram illustrating an example of a standby screen displayed by a terminal apparatus according to the third embodiment of the present invention;
FIGS. 29A to 29E are diagrams illustrating an example of status update according to the third embodiment of the present invention;
FIG. 30 is an example of a sequence diagram illustrating a procedure in which a reserving person reserves a conference room and a terminal apparatus acquires reservation information according to the third embodiment of the present invention;
FIG. 31 is an example of a sequence diagram illustrating a procedure in which one remote conference apparatus that performs a remote conference connects to the other remote conference apparatus according to the third embodiment of the present invention;
FIG. 32 is an example of a sequence diagram illustrating a procedure in which a remote conference apparatus for a third site connects to the other remote conference apparatus according to the third embodiment of the present invention;
FIG. 33 is an example of a flowchart illustrating a procedure in which a connection source determining unit determines a remote conference apparatus as a connection source and a remote conference apparatus as a connection destination according to the third embodiment of the present invention; and
FIGS. 34A and 34B are examples of diagrams for describing the transition of a standby screen displayed by a terminal apparatus when one of the remote conference apparatuses connects to the other remote conference apparatus according to the third embodiment of the present invention.

### DETAILED DESCRIPTION OF THE PREFERRED EMBODIMENTS

In the technique of the related art, there is a problem that it is difficult to switch the remote conference apparatus that is the connection destination to which a remote conference apparatus is to be connected. That is, as in the technique of the related art, if the two conference rooms in which the remote conference is to be held are fixedly set, it is possible to connect the remote conference apparatuses of the two conference rooms according to the conference start time. However, in general, there are a plurality of conference rooms in a company, and the conference rooms used for holding a remote conference may change each time a remote conference is held, and, therefore, it is desirable that there is a mechanism for dynamically switching the remote conference apparatus that is the connection destination to which a remote conference apparatus is to be connected, each time a remote conference is held.

Furthermore, in the technique of the related art, there is a problem that the remote conference is started in a state in which the participant is not ready to start the conference. That is, according to the technique of the related art, regardless of whether the participant is present in the conference room, one of the remote conference apparatuses connects to the other remote conference apparatus at the conference start time. For this reason, a remote conference may be started in a state where the participant of the conference is not in the conference room, or the remote conference may be started in a state in which the participant is not ready.

In the following, a description is given of embodiments of the present invention referring to drawings.

### [First embodiment]

### <Outline of first embodiment>

The communication system according to the present embodiment identifies a plurality of remote conference apparatuses to be used in a remote conference based on reservation information of a conference room.

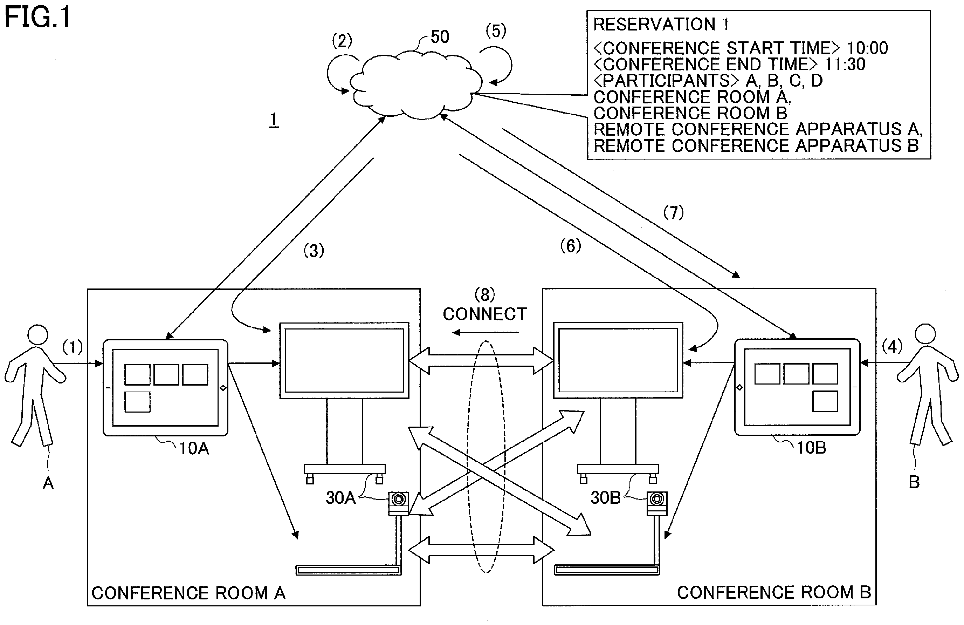

FIG. 1 is an example of a diagram for describing processes until remote conference apparatuses communicate with each other. As illustrated in FIG. 1, in a conference reservation system 50, reservation information including a conference start time, a conference end time, and participants, is registered. In the present embodiment, a conference room and a remote conference apparatus 30 may also be treated as participants; however, such a registration method is only an example. In FIG. 1, employees (A to D) at two sites where the remote conference is held, conference rooms A and B, and remote conference apparatuses A and B are managed as participants in one piece of reservation information.

Hereinafter, either one of the remote conference apparatuses 30A and 30B is referred to as the remote conference apparatus 30, and either one of terminal apparatuses 10A and 10B is referred to as a terminal apparatus 10. Note that in the reservation information, the reference numeral 30 of the remote conference apparatus is omitted.
(1) Participant A operates the terminal apparatus 10A in the conference room A and checks into the conference room A. The terminal apparatus 10A transmits a check in request to the conference reservation system 50.
(2) The conference reservation system 50 accepts the check in to the conference room A and refers to the illustrated reservation information to identify a plurality of the remote conference apparatuses 30A and 30B for performing the remote conference in the conference room A.
(3) The conference reservation system 50 transmits an activation request to activate the remote conference apparatus 30A in the conference room A in which check in is detected, to the remote conference apparatus 30A, via the terminal apparatus 10A. Note that when the remote conference apparatus 30A has already been activated, the activation process is unnecessary.
(4) Participant B operates the terminal apparatus 10B in the conference room B and checks into the conference room B. The terminal apparatus 10B transmits a check in request to the conference reservation system 50.
(5) The conference reservation system 50 accepts the check in to the conference room B, refers to the reservation information, and identifies a plurality of the remote conference apparatuses 30A and 30B for performing the remote conference in the conference room B.
(6) The conference reservation system 50 transmits an activation request to activate the remote conference apparatus 30B in the conference room B in which check in is detected, to the remote conference apparatus 30B, via the terminal apparatus 10B. Note that when the remote conference apparatus 30B has already been activated, the activation process is unnecessary.
(7) Both of the conference rooms have become "checked in", and, therefore, the conference reservation system 50 reports, to the remote conference apparatus 30B, the connection destination information for connecting to the remote conference apparatus 30A, and causes the remote conference apparatus 30B to start the remote conference. The conference reservation system 50 may report, to the remote conference apparatus 30A, the connection destination information for connecting to the remote conference apparatus 30B.
(8) The remote conference apparatus 30B specifies the remote conference apparatus 30A in the connection destination information, and starts a remote conference.

As described above, a communication system 1 according to the present embodiment can identify a plurality of remote conference apparatuses 30A and 30B that performs a remote conference, by using the reservation information related to the conference room reservation. Furthermore, the communication system 1 waits for the participants to check into the respective conference rooms where the remote conference is to be held, to start the remote conference, and, therefore, the remote conference is not held with a conference room where nobody is present. Furthermore, the participant only needs to input a check in operation for using the conference room A to the terminal apparatus 10, so it is possible to omit operations of manually inputting the connection destination information of the remote conference.

Note that the terminal apparatus 10 may not be provided at the location where the remote conference apparatus that is the connection destination is provided. For example, even when a participant is carrying the remote conference apparatus at a vacant space or outside instead of in the conference room, if the terminal apparatus 10, which corresponds to the conference room in which the remote conference apparatus that is the connection source is disposed, accepts the check in, the remote conference apparatuses can be connected with each other, even if the terminal apparatus 10 is not present at the connection destination. That is, when the remote conference apparatus that is the connection destination is not disposed in the conference room, the conference room may not be reserved in some cases. The terminal apparatus 10 is not necessarily required to be present at the location where the remote conference apparatus that is the connection destination is disposed.

### <Terms-first and second embodiments>

A site means a location where the terminal apparatus 10 and the remote conference apparatus 30 are installed. In this way, the site conceptually indicates the location; however, the site may indicate the terminal apparatus 10 per se or the remote conference apparatus 30 per se. Furthermore, the site may not only indicate a location but also a participant at the site. Specific examples of a site are a conference room, a branch office, a company, a department name within a company, and a satellite office, etc.; a location where the participant is present is the site.

In the case where there are two or more sites, it is not necessary for the sites to be at remote locations from each other, and two or more conference rooms in the same company are also two or more sites.

A communication terminal is an object (apparatus, device, or system, etc.) that can be used at a site. For example, a communication terminal refers to equipment that enables communication between a participant at one site and another participant at another site. In the present embodiment, the term "remote conference apparatus" will be used.

Starting the usage of a site means that a person, who can use a site according to a reservation, has started using the reserved site. In the present embodiment, the term "check in" will be used. Registration of starting the usage will be expressed by the term "checked in" in the present embodiment. The usage start request will be expressed by the term "check in request".

Reservation information is information including items necessary for managing the reservation of the communication terminal. Details will be described later.

A connection request is a request to connect one communication terminal to another communication terminal. The connection may be referred to as communication start, conference start, session establishment, calling, etc.

### <System configuration example-all embodiments>

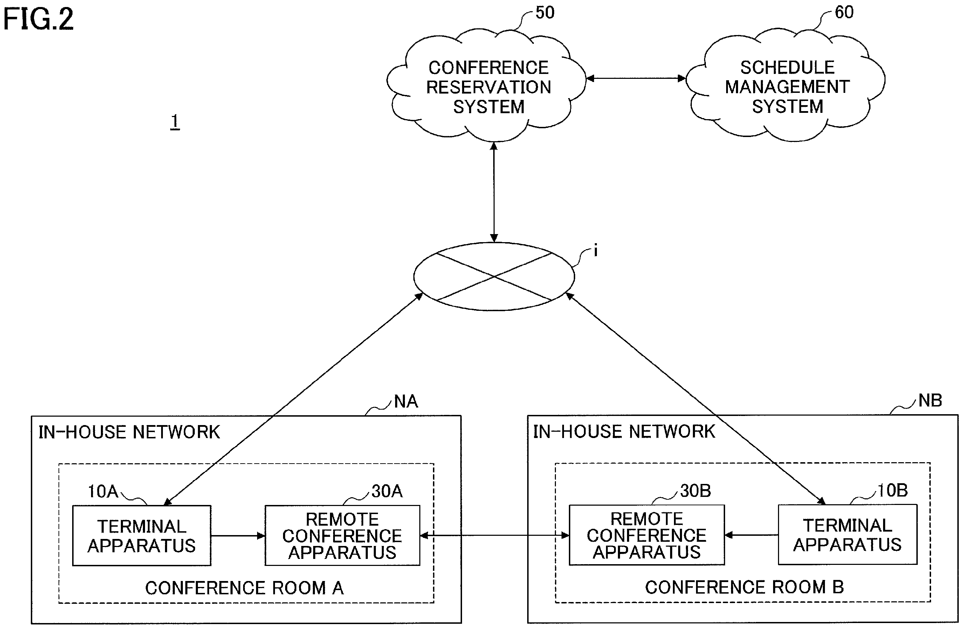

FIG. 2 illustrates an example of a schematic configuration diagram of the communication system 1. The communication system 1 includes the conference reservation system 50 and two in-house networks NA and NB connected via the Internet i. The conference reservation system 50 is constructed in a data center, etc., and operates in cooperation with a schedule management system 60. The in-house networks NA and NB are in-company networks (for example, a Local Area Network (LAN)) in which communication control for the Internet i is implemented by firewalls, etc., respectively. However, connection to the conference reservation system 50 may be possible from networks other than the in-house networks NA and NB, such as a mobile phone network, etc.

For example, the terminal apparatus 10A and the remote conference apparatus 30A installed in the same conference room A are present in a LAN by which mutual communication is possible, and can communicate with each other by using preset IP addresses, etc. The terminal apparatus 10 and the remote conference apparatus 30 may communicate via a server, etc., that mediates the communication. It is assumed that the conference rooms A and B exist in different companies, etc., however; the conference rooms A and B may be connected to the in-house network in the same company, or may communicate with each other via the Internet.

The schedule management system 60 is one or more information processing apparatuses that manage schedules of any users on the cloud, for example. One example of this schedule management includes management of reservations of conference rooms. Note that as the schedule management system 60, Google Calendar (registered trademark), or Office 365 (registered trademark), etc., are known. The schedule management system 60 may be anything as long as the schedule management system 60 meets technical specifications.

The conference reservation system 50 is one or more information processing apparatuses that manage the usage of conference rooms and reservation information. First, the conference reservation system 50 acquires, from the schedule management system 60, the reservation information of the conference room reserved in the schedule management system 60. The conference reservation system 50 does not need to use the external schedule management system 60, and the conference reservation system 50 may also serve as the schedule management system 60. One of the reasons why the external schedule management system 60 is used in the present embodiment is that the development cost can be suppressed by using the external schedule management system 60.

The conference reservation system 50 communicates with one or more terminal apparatuses 10 disposed in the respective conference rooms, and transmits, for example, reservation information of the current day. The reservation information is periodically updated, and is used for managing the status for each conference. For example, the reservation information is used for managing a conference from check in to check out.

In the company network NA, the terminal apparatus 10A and the remote conference apparatus 30A are disposed, and in the company network NB, the terminal apparatus 10B and the remote conference apparatus 30B are disposed. The terminal apparatuses 10A and 10B are information processing apparatuses serving as user interfaces between the users and the conference reservation system 50 in the respective conference rooms. For example, the terminal apparatuses 10A and 10B transmit the identification information of the conference rooms A and B managed by the terminal apparatuses 10A and 10B, to acquire, from the conference reservation system 50, the reservation information related to the reservation of the conference rooms A and B, and display the reservation situation of the current day. With respect to the terminal apparatus 10, the conference reservation system 50 has a function of a Web server, and the terminal apparatus 10 displays information transmitted from the Web server on a display device, by functions such as applications and browser software. The terminal apparatus 10 can communicate with the remote conference apparatus 30 in a wired or wireless manner via the in-house networks NA and NB.

Furthermore, the terminal apparatuses 10A and 10B have a function of accepting a check in operation to check into a conference room by a participant, and checking the participants into the conference room. When a participant performs an operation for check in, the terminal apparatus 10A or 10B reports a check in request to the conference reservation system 50. The conference reservation system 50 authenticates the check in request, and when the authentication is successful, the check in is permitted.

Furthermore, with respect to a conference held at two or more sites, when the conference reservation system 50 detects that check in has been completed at all of the plurality of conference rooms, the conference reservation system 50 transmits, to at least one of the terminal apparatuses 10A and 10B, a remote conference start report including the above connection destination information.

The terminal apparatus 10, which has acquired the remote conference start report, transmits the remote conference start report to the remote conference apparatus 30 in the same conference room. As described above, the conference reservation system 50 collectively instructs connection between the remote conference apparatuses 30 at the respective sites, so that the conference can be smoothly started in a state where it is possible to hold the remote conference at the respective sites.

The terminal apparatus 10 is, for example, a general information processing apparatus such as a smartphone, a tablet device, and a notebook Personal Computer (PC), etc. Any information processing apparatus having a communication function, a display function, and an input function may be used.

The remote conference apparatus 30 is an apparatus having a function of a video conference terminal. The remote conference apparatuses 30 in the conference room A and the conference room B mutually transmit and receive image data and audio data, display the image data on a display device, and output the audio data from a speaker, so that users at remote locations from each other can perform remote communication such as a conference. The communication system 1 is also applied to a communication system or a data communication system used by users at two or more sites, other than a conference. Furthermore, the communication system 1 includes a data providing system for transmitting image data or audio data in one direction, from one of the remote conference apparatuses 30 to a plurality of remote conference apparatuses 30, via a server. Note that a video conference is sometimes referred to as a teleconference.

The remote conference apparatus 30 may be the video conference terminal per se, but may be another apparatus having the functions of a video conference terminal. For example, there are cases where an electronic blackboard has the functions of a video conference terminal. An electronic blackboard is a so-called electronic device that acquires, by a touch panel, the coordinates (positions) of an electronic pen or a fingertip on a screen input by moving the electronic pen or fingertip so as to trace the screen, and displays strokes formed by connecting these coordinates on a display integrated with the touch panel. Any type of touch panel system may be used. An electronic blackboard may be referred to as different names according to the product, such as an electronic whiteboard and an electronic information board, etc. Furthermore, the electronic blackboard has a function of a computer, and, therefore, the electronic blackboard may be referred to as an information processing apparatus. A tablet terminal equipped with a touch panel is used as an electronic blackboard in some cases.

An electronic blackboard capable of communicating with another site can transmit and receive data of drawing images that are contents drawn by a user. The drawing image data is image data including one or more strokes. Therefore, the content drawn at one electronic blackboard is also displayed on another electronic blackboard, while the content drawn at the other electronic blackboard is also displayed on the one electronic blackboard.

### <Hardware configuration example-all embodiments>

Next, hardware configurations of the remote conference apparatus 30, the terminal apparatus 10, and the conference reservation system 50 in the communication system 1 according to the present embodiment will be described.

### «Hardware configuration example of remote conference apparatus-all embodiments»

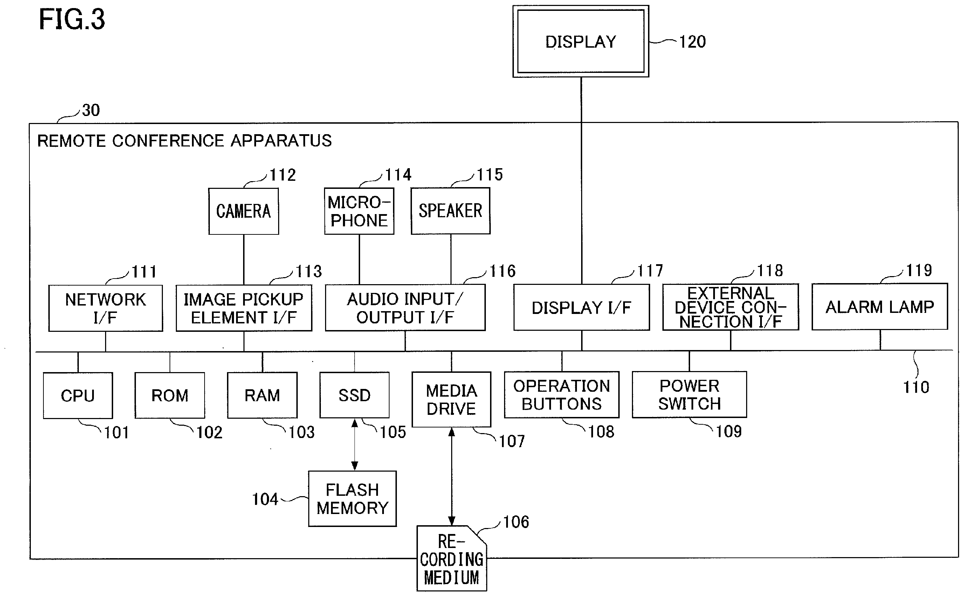

FIG. 3 illustrates an example of a hardware configuration diagram of the remote conference apparatus 30. As illustrated in FIG. 3, the remote conference apparatus 30 includes a Central Processing Unit (CPU) 101 for controlling the operations of the entire remote conference apparatus 30, and a Read-Only Memory (ROM) 102 for storing programs used for driving the CPU 101 such as an Initial Program Loader (IPL). Furthermore, a Random Access Memory (RAM) 103 used as a work area of the CPU 101, and a flash memory 104 for storing various kinds of data such as programs for a remote conference apparatus, image data, and audio data, etc., are provided. Furthermore, a Solid State Drive (SSD) 105 that controls reading and writing of various kinds of data with respect to the flash memory 104 under the control of the CPU 101, and a media drive 107 that controls reading and writing (storage) of data with respect to a recording medium 106 such as a flash memory, are provided. Furthermore, operation buttons 108 that are operated in the case of selecting another one of the remote conference apparatuses 30 as a communication partner, a power switch 109 for switching on/off the power of the remote conference apparatus 30, and a network interface (I/F) 111 for transmitting data by using the internet i, etc., are provided.

Furthermore, the remote conference apparatus 30 includes a built-in camera 112 that captures an image of a subject and obtains image data under the control of the CPU 101, an image pickup element I/F 113 that controls the driving of the camera 112, a built-in microphone 114 to which sound is input, and a built-in speaker 115 for outputting sound. Furthermore, an audio input/output I/F 116 for processing input and output of audio signals between the microphone 114 and the speaker 115 under the control of the CPU 101, is provided. Furthermore, a display I/F 117 for transmitting display image data to a display 120 under control of the CPU 101, an external device connection I/F 118 for connecting various external devices, an alarm lamp 119 for reporting an abnormality of various functions of the remote conference apparatus 30, and a bus line 110 such as an address bus and a data bus for electrically connecting the above respective constituent elements, are provided.

Note that the camera 112, the microphone 114, and the speaker 115 are not necessarily built in the remote conference apparatus 30, and may be externally attached. Furthermore, the display 120 may be built in the remote conference apparatus 30. Furthermore, the display 120 is assumed to be a display device such as a liquid crystal panel; however, the display 120 is not limited thereto, and a projection device such as a projector may be used. The hardware configuration of the remote conference apparatus 30 illustrated in FIG. 3 is merely an example, and hardware elements other than the above may be added.

The program of the remote conference apparatus provided from the program providing server described above is stored in the flash memory 104, for example, and is loaded in the RAM 103 and executed under the control of the CPU 101.

### «Hardware configuration example of conference reservation system and terminal apparatus-all embodiments»

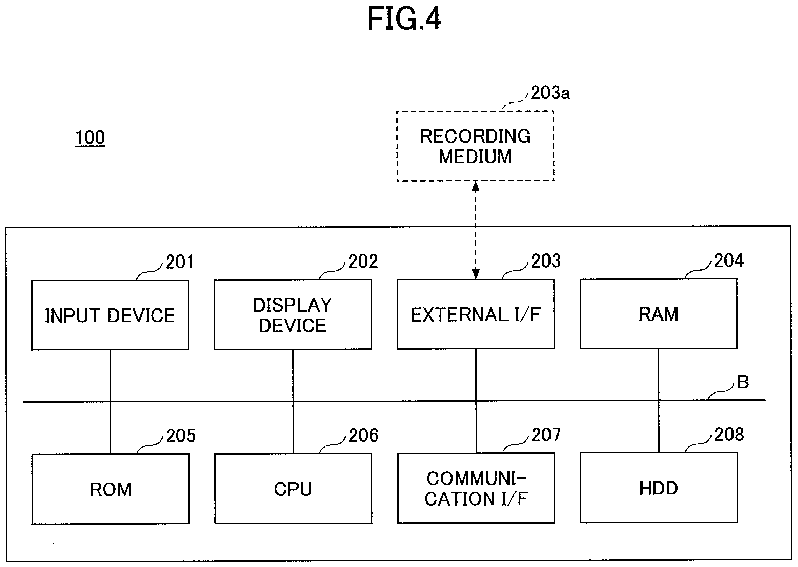

The conference reservation system 50 and the terminal apparatus 10 are implemented by, for example, a computer system having the hardware configuration illustrated in FIG. 4. FIG. 4 is a hardware configuration diagram of an example of a computer system according to the present embodiment.

A computer system 100 illustrated in FIG. 4 includes an input device 201, a display device 202, an external I/F 203, a RAM 204, a ROM 205, a CPU 206, a communication I/F 207, and a Hard Disk Drive (HDD) 208, etc., which are mutually connected via a bus B.

The input device 201 includes a keyboard and a mouse, a touch panel, etc., and is used by a user to input operation signals. The display device 202 includes a display, etc., and displays processing results obtained by the computer system 100.

The communication I/F 207 is an interface for connecting the computer system 100 to the in-house network NA or NB. Accordingly, the computer system 100 can perform data communication via the communication I/F 207.

The HDD 208 is a nonvolatile storage device that stores programs and data. The stored programs and data include, for example, an Operating System (OS) that is basic software for controlling the entire computer system 100, and application software that provides various functions on the OS, etc. The HDD 208 manages the stored programs and data by a predetermined file system and/or a database (DB).

The external I/F 203 is an interface with respect to an external device. The external device includes a recording medium 203a, etc. Accordingly, the computer system 100 can read and/or write data in the recording medium 203a via the external I/F 203. Examples of the recording medium 203a are a flexible disk, a Compact Disk (CD), a Digital Versatile Disk (DVD), a secure digital (SD) memory card, and a Universal Serial Bus (USB) memory.

The ROM 205 is a nonvolatile semiconductor memory (storage device) capable of holding programs and data even when the power is turned off. The ROM 205 stores programs and data such as the Basic Input/Output System (BIOS) executed when the computer system 100 is activated, OS settings, and network settings, etc. The RAM 204 is a volatile semiconductor memory (storage device) that temporarily holds programs and data.

The CPU 206 is an arithmetic device that implements control and functions of the entire computer system 100 by loading programs and data from a storage device such as the ROM 205 and the HDD 208 into the RAM 204 and executing processes.

### <Functions-first embodiment>

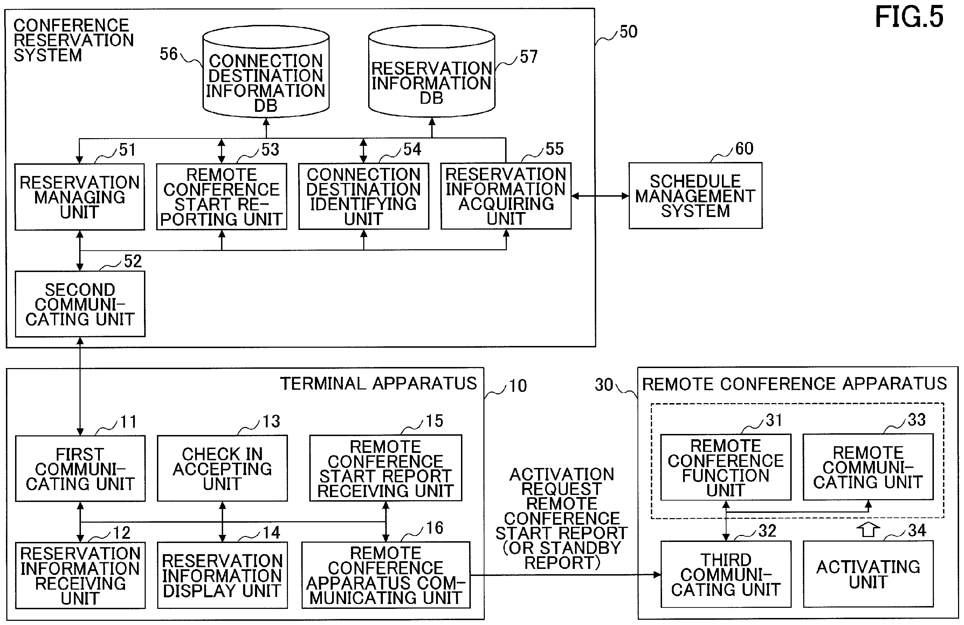

Next, functions of the terminal apparatus 10, the conference reservation system 50, and the remote conference apparatus 30 will be described with reference to FIG. 5. FIG. 5 is an example of a functional block diagram illustrating functions of the terminal apparatus 10, the conference reservation system 50, and the remote conference apparatus 30 in a block form.

### «Functions of conference reservation system-first embodiment»

The conference reservation system 50 includes a reservation managing unit 51, a second communicating unit 52, a remote conference start reporting unit 53, a connection destination identifying unit 54, and a reservation information acquiring unit 55. Each of these functional units included in the conference reservation system 50 is a function or a means implemented by any one of the constituent elements illustrated in FIG. 4 operating according to a command from the CPU 206 in accordance with a program loaded in the RAM 204 from the HDD 208. This program is distributed from a server for program distribution or distributed in a state of being stored in a storage medium. Furthermore, the conference reservation system 50 includes a reservation information DB 57 and a connection destination information DB 56 held in the HDD 208 or the RAM 204, etc.

The second communicating unit 52 transmits and receives various kinds of data to and from the terminal apparatus 10 via the in-house networks NA and NB and the Internet i. In the present embodiment, the second communicating unit 52 transmits, to the terminal apparatus 10, at least the reservation information on the current day, and receives a check in request from the terminal apparatus 10. Furthermore, the second communicating unit 52 transmits an activation request, a standby report, and a remote conference start report to the terminal apparatus 10.

The reservation information acquiring unit 55 acquires reservation information from the schedule management system 60. The reservation information of each company is registered in the schedule management system 60, and, therefore, the reservation information acquiring unit 55 specifies an account (user name and password) of the schedule management system 60 registered in advance for each company to log into the schedule management system 60, and acquires the reservation information registered in association with an account having the domain included in the account. For example, when the user name of the account in the schedule management system 60 registered in advance for each company is "a@xfood.com", the reservation information acquiring unit 55 acquires the reservation information registered by an account "xxx@xfood.com" (xxx is optional).

Note that the reservation information acquiring unit 55 receives a report at the timing when new reservation information is registered in the schedule management system 60, and accesses the schedule management system 60 to acquire the reservation information. Alternatively, the reservation information acquiring unit 55 may periodically (for example, once per hour) access the schedule management system 60 to acquire the reservation information.

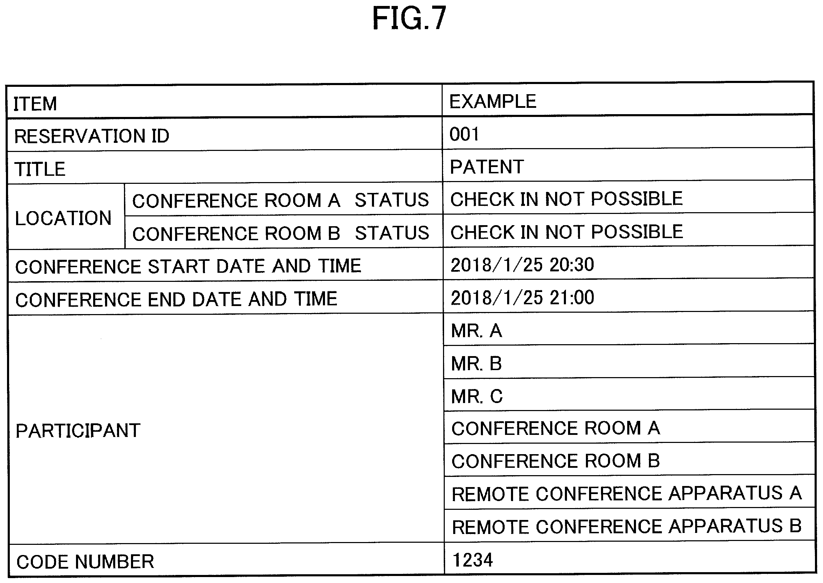

The reservation information acquired by the reservation information acquiring unit 55 is stored in the reservation information DB 57. The reservation information will be described with reference to FIG. 7.

The reservation managing unit 51 acquires a report such as check in from the terminal apparatus 10, and determines whether check in can be performed by authenticating the participant with a code number, etc., which will be described later. When it is determined that check in is possible, the status of the reservation information in the reservation information DB 57 is updated to "checked in". The status includes the states of, for example, "check in not possible", "check in possible", "checked in", and "conference has started".

The connection destination identifying unit 54 determines whether a participant has checked into another conference room in which the remote conference (whether another conference room has become "checked in"), based on the reservation information. When the other conference room has become "checked in", the connection destination identifying unit 54 identifies a plurality of the remote conference apparatuses 30 to perform the remote conference based on the reservation information. Among all of the plurality of the remote conference apparatuses 30, the connection destination identifying unit 54 determines the other remote conference apparatuses 30 to be connection destinations, as viewed from the remote conference apparatus 30 that has just been updated as "checked in".

When reservation information updated to "checked in" is detected, the remote conference start reporting unit 53 transmits a request to activate the remote conference apparatus 30 of the corresponding conference room, to the terminal apparatus 10 via the second communicating unit 52. Furthermore, the remote conference start reporting unit 53 transmits a remote conference start report, including connection destination information indicating the remote conference apparatus 30 that is the connection destination identified by the connection destination identifying unit 54, to the remote conference apparatus 30 in the conference room updated as "checked in". Note that a standby report is transmitted via the second communicating unit 52 to the remote conference apparatus 30 that is on standby until being connected.

As described above, a plurality of the remote conference apparatuses 30 performing a remote conference transmits a remote conference start report to all of the remote conference apparatuses 30 except for the own apparatus, so that the plurality of the remote conference apparatuses 30 can surely start connection.

**[Table 1]**

| CONFERENCE ROOM | REMOTE CONFERENCE APPARATUS | CONNECTION DESTINATION INFORMATION |
|---|---|---|
| CONFERENCE ROOM A | REMOTE CONFERENCE APPARATUS A | 399929991000 |
| CONFERENCE ROOM B | REMOTE CONFERENCE APPARATUS B | 399929991001 |
| CONFERENCE ROOM C | REMOTE CONFERENCE APPARATUS C | 399929991002 |
| - | REMOTE CONFERENCE APPARATUS P | 399929991003 |

Table 1 schematically indicates the information stored in the connection destination information DB 56. In the connection destination information DB 56, connection destination information of the remote conference apparatus 30 in each conference room is registered. Therefore, if the remote conference apparatus 30 is registered as a participant, the connection destination information can be identified. This connection destination information is information for identifying the remote conference apparatus that is the connection destination, and the connection destination information is used for connecting the remote conference apparatuses. The connection destination information may be any information by which the connection destination can be identified, such as identification information of the remote conference apparatus itself or identification information on the network of the remote conference apparatus itself such as an IP address, etc., or identification information associated with a user using the remote conference apparatus such as a user ID, etc.

Furthermore, when a conference room is registered as a participant, if this conference room is associated with the remote conference apparatus 30, connection destination information of the remote conference apparatus 30 can be identified. Conference rooms are not associated with the remote conference apparatuses 30 that are not fixed to any conference room.

### «Functions of terminal apparatus-first embodiment»

The terminal apparatus 10 includes a first communicating unit 11, a reservation information receiving unit 12, a check in accepting unit 13, a reservation information display unit 14, a remote conference start report receiving unit 15, and a remote conference apparatus communicating unit 16. Each of these functional units included in the terminal apparatus 10 is a function or a means implemented by any one of the constituent elements illustrated in FIG. 4 operating by a command from the CPU 206 according to a program loaded in the RAM 204 from the HDD 208. This program is distributed from a server for program distribution or distributed in a state of being stored in a storage medium.

The first communicating unit 11 transmits and receives various kinds of data to and from the conference reservation system 50 via the in-house network NA (or NB) and the Internet i. In the present embodiment, for example, the first communicating unit 11 specifies the identification information of the conference room (for example, the conference rooms A or B, etc.), acquires, for example, the reservation information of the current day, from the conference reservation system 50, and transmits a check in request according to an operation of the participant. Furthermore, the first communicating unit 11 receives an activation request, a standby report, and a remote conference start report from the conference reservation system 50.

The reservation information receiving unit 12 communicates with the conference reservation system 50 via the first communicating unit 11, and transmits the identification information of the conference room where the terminal apparatus 10 is installed, etc., to acquire the reservation information of the conference room where the terminal apparatus 10 is installed. The timing of acquiring the reservation information may be periodical, for example, once per minute, or may be acquired according to an operation of the participant. Alternatively, the reservation information may be acquired at the time of activation of the terminal apparatus 10. It is preferable to acquire the reservation information at least once a day.

Furthermore, it is preferable that the reservation information to be acquired includes at least the reservation information of the current day; however, the reservation information may be acquired by the day before. The reservation information for one day does not necessarily have to be acquired at once; the pieces of reservation information may be acquired one by one at different timings. This timing is, for example, 1 hour before, or 30 minutes before, etc., each conference.

In addition to acquiring the reservation information by the pull method, the reservation information acquiring unit 55 may acquire the reservation information by the push method. Furthermore, when the reservation information acquiring unit 55 receives, for example, a report that the reservation information of the current day acquired from the conference reservation system 50 has been updated, the reservation information may be acquired by the pull method.

The reservation information display unit 14 displays the acquired reservation information on the screen (display device) of the terminal apparatus 10. The reservation information display unit 14 always displays the list of the reservation information of the current day. However, the list of reservation information may be not visible in conjunction with the terminal apparatus 10 turning off the power of only the display device, for the purpose of energy saving, when there is no operation for a certain period of time. However, in this case also, the terminal apparatus 10 is in the activated state. The terminal apparatus 10 may display the reservation information according to the operation of the participant or may display the reservation information in conjunction with the entry of a participant into the conference room.

The check in accepting unit 13 accepts, for example, input of a code number reported to participants in advance, or captures an image of a bar code (or a two-dimensional code) including the code number reported to participants in advance to accept input of the code number. The check in accepting unit 13 transmits a check in request together with this code number to the conference reservation system 50 to acquire a report as to whether the check in is permitted. Note that the terminal apparatus 10 may acquire the code number together with the reservation information and may authenticate the code number at the terminal.

After the check in, the remote conference start report receiving unit 15 receives a request to activate the remote conference apparatus 30, from the conference reservation system 50. Furthermore, when the conference reservation system 50 detects check in at two conference rooms in which the remote conference is to be held, the remote conference start report receiving unit 15 receives a remote conference start report including the connection destination information.

The remote conference apparatus communicating unit 16 transmits a request to activate the remote conference apparatus 30 in the same conference room as the terminal apparatus 10. Furthermore, the remote conference apparatus communicating unit 16 transmits a remote conference start report including the connection destination information, to the remote conference apparatus 30. Furthermore, when a standby report is acquired from the conference reservation system 50, the remote conference apparatus communicating unit 16 may maintain the remote conference apparatus 30 in an activated state. In this case, the remote conference apparatus 30 in the same conference room is maintained in a standby state until called from the remote conference apparatus 30 of the other conference room in which the remote conference is to be held. That is, there are cases in which there is no need to do anything in response to the standby report.

In FIG. 5, the remote conference apparatus communicating unit 16 and the remote conference apparatus 30 are directly connected; however, the terminal apparatus 10 and the remote conference apparatus 30 communicate with each other via the first communicating unit 11 through the in-house networks NA and NB such as LAN. In this case, the remote conference apparatus communicating unit 16 transmits an activation request, etc., by HTTP communication, etc., via the Web Application Programming Interface (API) provided by the remote conference apparatus 30. The Web API is a procedure or a rule for calling a certain program via a network. Note that the terminal apparatus 10 and the remote conference apparatus 30 may be connected by a communication cable such as a USB cable, etc.

### «Functions of remote conference apparatus-first embodiment»

The remote conference apparatus 30 includes a remote conference function unit 31, a third communicating unit 32, a remote communicating unit 33, and an activating unit 34. Each of these functional units included in the remote conference apparatus 30 is a function or a means implemented by any one of the constituent elements illustrated in FIG. 3 operating according to a command from the CPU 101 according to a program loaded from the SSD 105 to the RAM 103. This program is distributed from a server for program distribution or distributed in a state of being stored in a storage medium.

The third communicating unit 32 acquires an activation request, a standby report, and a remote conference start report (not necessarily all of these pieces of information are acquired), from the terminal apparatus 10 via the in-house networks NA and NB or a communication cable. Upon acquiring an activation request, the third communicating unit 32 sends an activation request to the activating unit 34, and upon acquiring a remote conference start report or a standby report, the third communicating unit 32 sends the remote conference start report or the standby report to the remote communicating unit 33.

The activating unit 34 activates the remote conference apparatus 30. The remote conference apparatus 30 is in a sleep state before the start of the remote conference, and at least the communication function is operating. The remote conference apparatus 30 is activated to be in a state in which all of the functions can be used, according to the activation request.

The remote communicating unit 33 establishes a session (connection) with the remote conference apparatus 30 in another conference room by using the connection destination information. As a method of establishing a session, for example, there is a method in which connection destination information is transmitted to a management system on the Internet, and the management system calls the remote conference apparatus 30 that is the connection destination. The remote conference apparatus 30 that is the connection destination is in the standby state (activated state), and, therefore, the connection can be started. Note that the connection method is not limited thereto, and any method is sufficient as long as two remote conference apparatuses 30 can communicate with each other. In addition to this, the remote communicating unit 33 transmits and receives image data, audio data, and document data to and from the remote conference apparatus 30 that is the connection destination.

The remote conference function unit 31 provides basic functions for the remote conference apparatus 30 to perform a remote conference. That is, images of the surroundings are captured by the camera to generate image data, sound is acquired from the microphone to generate sound data, and these pieces of data are sent to the remote communicating unit 33. Furthermore, the remote communicating unit 33 displays the received image data on the display 120, and outputs the sound data from the speaker 115.

### <Reservation screen-first embodiment>

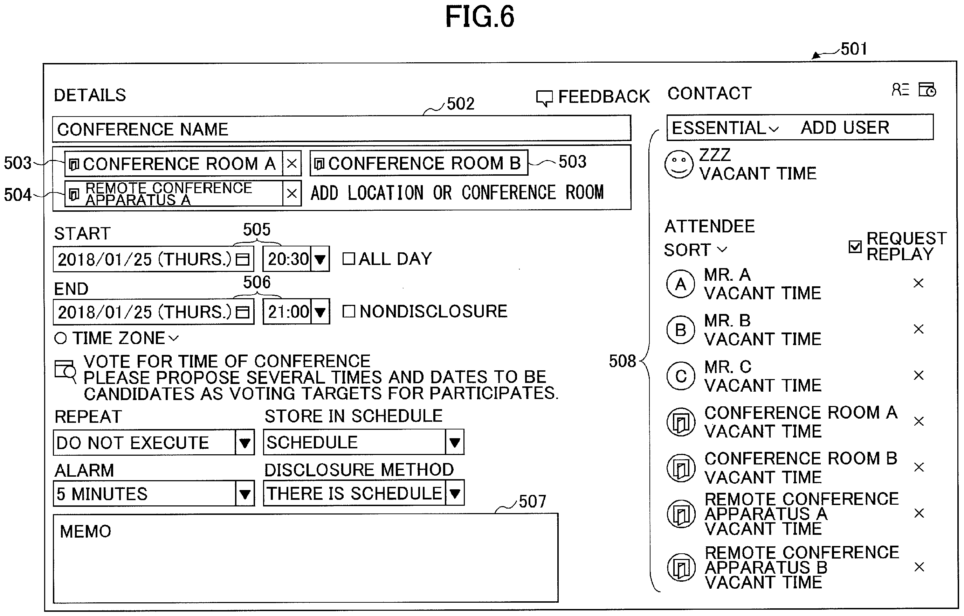

Next, an operation performed by a participant to reserve a conference room will be described with reference to FIG. 6. FIG. 6 illustrates an example of a reservation screen 501 displayed on a Personal Computer (PC) operated by a participant reserving a conference room (a reserving person). It is assumed that the reserving person is one of the participants in the conference; however, anyone can make a reservation. The reserving person causes the PC to communicate with the schedule management system 60 and logs in with the account of the company to which the reserving person belongs, issued by the schedule management system 60. Therefore, participants of the same company are identified by the domain included in the account.

The reservation screen 501 includes a title field 502, a conference room field 503, a remote conference apparatus field 504, a conference start date and time field 505, a conference end date and time field 506, a memo field 507, and a participant field 508, etc.
- The title field 502 is a field in which a title, such as the agenda of the conference, is input.
- The conference room field 503 is a field in which the conference room, to be reserved by the participant, is set. A conference room selectable by this company is registered in advance in the schedule management system 60, and the reserving person can select a conference room from a pop-up menu or a pull-down menu, etc. Note that in the conference room field 503, a plurality of conference rooms in which a remote conference is to be held, can be set.
- The remote conference apparatus field 504 is a field in which the remote conference apparatus 30 used by a participant is set. The remote conference apparatus 30 that can be selected by this company is registered in advance in the schedule management system 60, and the reserving person can select the remote conference apparatus 30 from a pop-up menu or a pull-down menu, etc. The reason why the remote conference apparatus is set independently from the conference room is that there is the remote conference apparatus 30 (mobile type) that is not fixed in the conference room. For the remote conference apparatus 30 fixed to the conference room, the schedule management system 60 preferably has the same information as the connection destination information DB 56 so that it is possible to determine whether the remote conference apparatus 30 is fixed to a conference room. Alternatively, the remote conference apparatus 30 is automatically set in accordance with the selection of a conference room.
- The conference start date and time field 505 is a field in which the date on which the conference is held and the time at which the conference is started are set. The date and time can be selected from a pulldown menu, etc.
- The conference end date and time field 506 is a field in which the date on which the conference is held and the time at which the conference is ended are set. The date and time can be selected from a pulldown menu, etc.
- The memo field 507 is a field in which any information related to the conference is set.
- The participant field 508 is a field used for setting participants and for displaying the set participants. The conference room and the remote conference apparatus 30 are resources of the conference room; in the present embodiment, these are handled as one of the participants. Note that the participant is also a user of the conference room, and the participant field 508 is an example of a user field. In FIG. 6, three employees, two conference rooms, and two remote conference apparatuses 30 are registered as participants. Note that participants that can be selected by the company are registered in advance in the schedule management system 60, and the reserving person can select participants from a pop-up menu or a pull-down menu, etc.

The conference room set by the reserving person in the conference room field 503 is also applied to the participant field 508, and the remote conference apparatus 30 set in the remote conference apparatus field 504 is also applied to the participant field 508. Conversely, the conference room set by the reserving person in the participant field 508 is also applied to the conference room field 503, and the remote conference apparatus 30 set in the participant field 508 is also applied to the remote conference apparatus field 504.

### <Example of reservation information-first embodiment>

The reservation information set in the reservation screen 501 as illustrated in FIG. 6 is transmitted to the schedule management system 60 and registered in the schedule management system 60. Then, the conference reservation system 50 acquires the reservation information from the schedule management system 60 as appropriate, and manages the reservation information in the reservation information DB 57.

The reservation information will be described with reference to FIG. 7. FIG. 7 illustrates an example of reservation information. The reservation information includes items of a reservation ID, a title, a location and a status, a conference start date and time, a conference end date and time, a participant, and a code number. To provide a supplementary explanation, the reservation ID is an example of reservation identification information for identifying each piece of reservation information. Although the reservation ID is assigned by the conference reservation system 50, the reservation ID may be assigned by the schedule management system 60. The ID is an abbreviation for Identification, meaning an identifier or identification information. An ID is a name, a code, a character string, a numerical value, or a combination of one or more of these, which are used for uniquely distinguishing a particular target from among a plurality of targets.

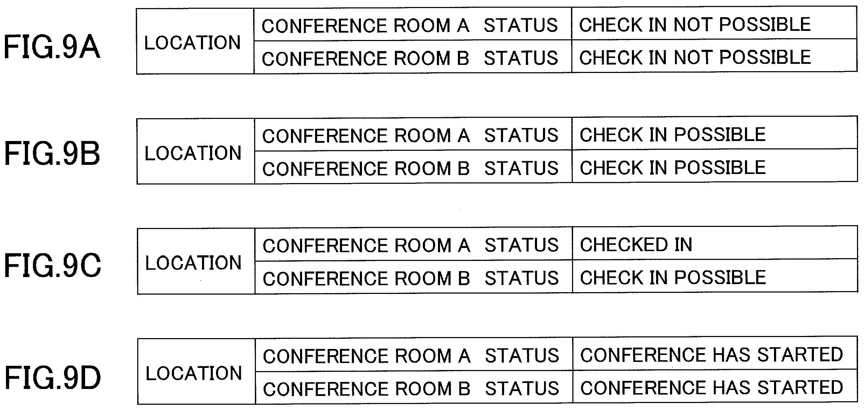

The items from title to participant have been described with reference to FIG. 6. Among these, the location means a conference room, and the status indicates the state of the conference room or the remote conference apparatus. Details of the status will be described with reference to FIGS. 9A to 9D. The code number is the authentication information to be input when the participant checks into the conference room. The code number is reported to the reserving person at the time of reservation, or when the conference reservation system 50 acquires the reservation information from the schedule management system 60, etc.

In FIG. 7, a plurality of conference rooms A and B are registered in one piece of reservation information. Actually, for example, the participants in the conference room A are " Mr. A and Mr. B" and the participant in the conference room B is "Mr. C" (which participant goes to which conference room is arbitrary). Furthermore, the remote conference apparatus 30A is used in the conference room A, and the remote conference apparatus 30B is used in the conference room B. As described above, according to the reservation information of FIG. 7, the reserving person has registered different conference rooms in one piece of reservation information, and, therefore, the conference room A and the conference room B, and the remote conference apparatus 30A and the remote conference apparatus 30B used for holding the remote conference, are associated with each other.

Accordingly, the connection destination identifying unit 54 of the conference reservation system 50 can easily identify the plurality of conference rooms and the remote conference apparatuses 30 that are used to hold the remote conference.

Note that in FIG. 7, the participants are described by names (Mr. A, etc.); however, the conference reservation system 50 is able to distinguish uniquely according to a user name included in the account (for example, name.aaa@xfood.com etc.).

### <Screen example of terminal apparatus-first embodiment>

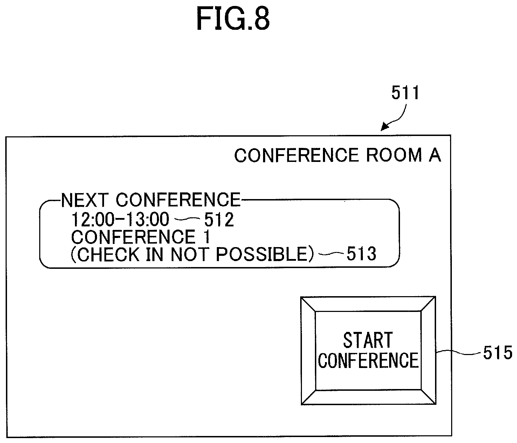

FIG. 8 illustrates an example of a standby screen 511 displayed by the terminal apparatus 10. The standby screen 511 is a screen displayed by the terminal apparatus 10 between conferences. On the standby screen 511, a time period 512 of the next conference from the current time, is displayed. Furthermore, on the standby screen 511, a status 513 of the next conference is displayed. The status 513 is updated by periodically acquiring reservation information from the conference reservation system 50 by the terminal apparatus 10. Participants can check in when this status becomes "check in possible".

The standby screen 511 includes a check in button 515, and when the check in button 515 is pressed, check in is started.

### <Updating status of reservation information-first embodiment>

Next, the updating of the status of the reservation information will be described with reference to FIGS. 9A to 9D. FIGS. 9A to 9D are diagrams illustrating an example of updating the status based on the detection of check in. In FIG. 9A, the status of the conference rooms A and B is "check in not possible". "Check in not possible" means that the conference room cannot be used by participants yet.

In this state, when a predetermined time before the conference start date and time approaches, the reservation managing unit 51 of the conference reservation system 50 changes the status to check in. FIG. 9B illustrates the status changed to "check in possible". "Check in possible" means that participants can use the conference room.

Note that the predetermined time can be appropriately set, for example, as 10 minutes, etc. This status is applied to the standby screen 511 as the terminal apparatus 10 acquires the reservation information, and the participant will be able to check in.

Next, the participant goes to the conference room and inputs, to the terminal apparatus 10, a code number reported in advance, and the terminal apparatus 10 transmits the code number and the reservation ID to the conference reservation system 50. The reservation ID is included in the reservation information of the conference room that has become "check in possible". When the authentication of the code number is successful, the reservation managing unit 51 changes the status to "checked in". Note that a reservation ID may also serve as a code number. In this case, the participant inputs the reservation ID in the terminal apparatus 10.

FIG. 9C illustrates the status changed to "checked in". When the participant has checked into the conference room A, the status of the conference room A becomes "checked in". Similarly, when a participant has checked into the conference room B, the status of the conference room B becomes "checked in". "Checked in" means that the participant has checked into the conference room (the participant is authenticated, by the code number, as the person who has reserved the conference room). Accordingly, when the status of the conference rooms A and B becomes "checked in", the conference reservation system 50 causes the remote conference apparatus 30 to start the remote conference.

When both of the conference rooms A and B become "checked in", a connection is made from the remote conference apparatus 30B of the conference room B to the remote conference apparatus 30A of the conference room A. For example, the connection source and the connection destination are defined as follows: the connection source is the remote conference apparatus that has become "checked in" earlier, and the connection destination is the remote conference apparatus that has become "checked in" later. However, the connection may be made from the remote conference apparatus 30A in the conference room A to the remote conference apparatus 30B in the conference room B.

Accordingly, the status of the conference room B is updated to "conference has started". FIG. 9D illustrates the status updated to "conference has started". The status of the conference room A is also updated to "conference has started". "Conference has started" means that the remote conference has been started and that the communication terminal at the own site has been connected to a communication terminal at another site (communication is in progress, remote conference is in progress).

### <Operation procedure-first embodiment>

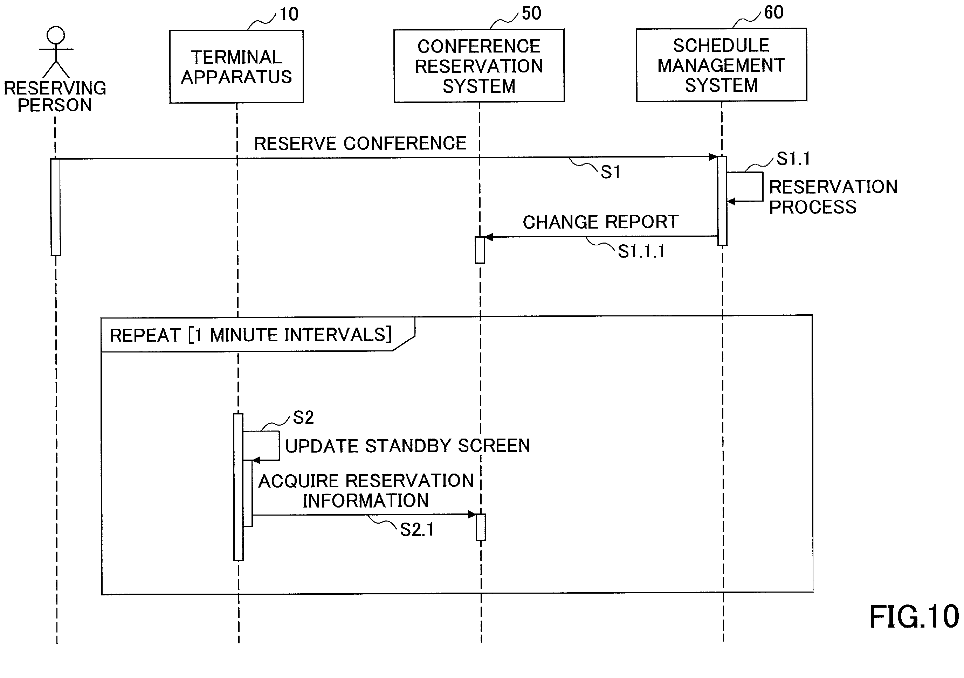

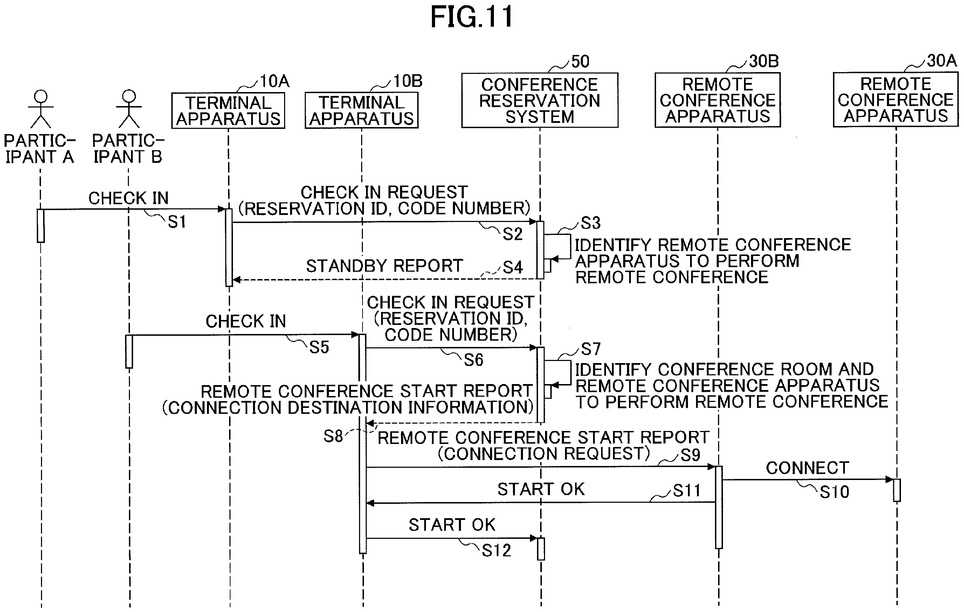

Hereinafter, the operation of the communication system 1 will be described with reference to the sequence diagrams of FIGS. 10 and 11. FIG. 10 is an example of a sequence diagram illustrating a procedure in which a reserving person reserves a conference room and the terminal apparatus 10 acquires reservation information.

Step S1: The reserving person reserves the conference room from the reservation screen 501 illustrated in FIG. 6.

Step S1.1: The schedule management system 60 accepts the reservation and generates reservation information.

Step S1.1.1: The schedule management system 60 reports to the conference reservation system 50 that the reservation information has been added or changed. As described above, the domain of the company using the conference reservation system 50 is registered in the schedule management system 60, and, therefore, the company (conference reservation system 50) is identified from the account of the reserving person who has registered the reservation information.

Step S2: The reservation information display unit 14 of the terminal apparatus 10 repetitively performs a process of updating the standby screen 511.

Step S2.1: During this process, the reservation information receiving unit 12 acquires the reservation information from the conference reservation system 50. Note that the repetition of updating of the standby screen 511 is periodically performed, for example, every minute; however, the updating may be performed irregularly. Accordingly, a conference room is newly reserved, and if this conference is the next conference according to the timeline, information indicating this conference is displayed on the standby screen 511. Furthermore, the status is updated as appropriate.

FIG. 11 is an example of a sequence diagram illustrating a procedure in which one of the remote conference apparatuses 30 that performs a remote conference connects to the another one of the remote conference apparatuses 30.

Step S1: First, a participant A operates the terminal apparatus 10A to check into the conference room A.

Step S2: The check in accepting unit 13 of the terminal apparatus 10A accepts the check in and transmits a check in request including a reservation ID and a code number, to the conference reservation system 50 via the first communicating unit 11.

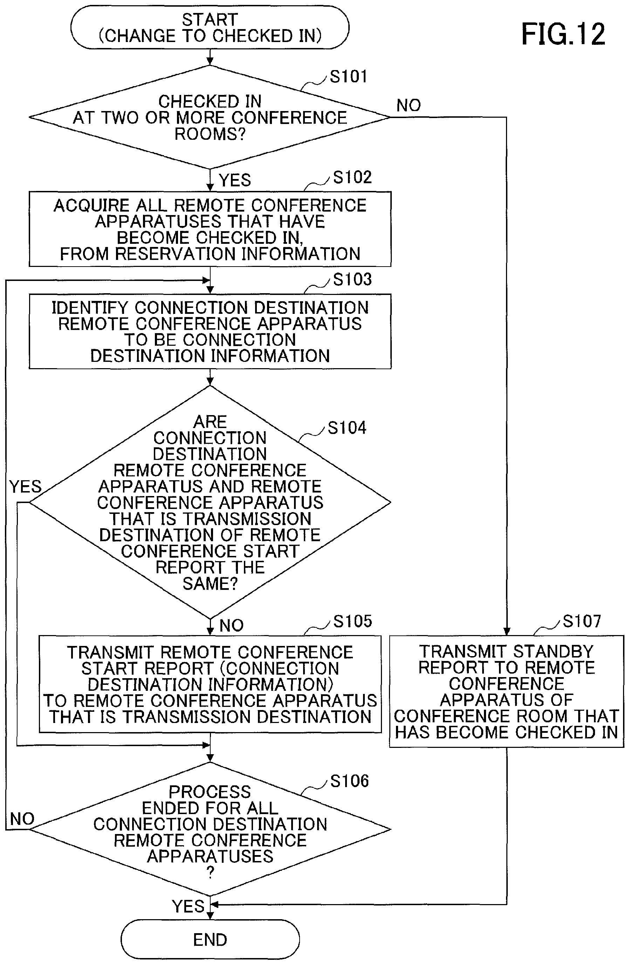

Step S3: The second communicating unit 52 of the conference reservation system 50 acquires the check in request, and the reservation managing unit 51 accepts the check in. In the present embodiment, it is assumed that the authentication based on the code number is successful and the check in is permitted. The reservation managing unit 51 changes the status of the reservation information identified by the reservation ID to "checked in". Based on the reservation information, the connection destination identifying unit 54 identifies the remote conference apparatus 30A in the conference room A and the remote conference apparatus 30B in the conference room B that is the connection destination. The process of step S3 will be described in detail with reference to FIG. 12.

Note that in FIG. 11, the reservation information is identified by the reservation ID; however, the reservation information may be identified by the identification information of the conference room and the time period, or the reservation information may be identified by the identification information of the conference room and the code number. Furthermore, when a participant is identified by touching the terminal apparatus 10 with an integrated circuit (IC) card carried by the participant, the reservation information may be identified from the reservation information and the code number that are associated with the account of the participant. Furthermore, the reservation information may be narrowed down by the current time.

Step S4: The conference room B, with which the conference room A is to hold the remote conference, has not become "checked in", and, therefore, the remote conference start reporting unit 53 of the conference reservation system 50 transmits a standby request to the terminal apparatus 10A. Note that in FIG. 11, the activation request is omitted.

Step S5: Next, the participant B operates the terminal apparatus 10B to check into the conference room B.

Step S6: The check in accepting unit 13 of the terminal apparatus 10B accepts the check in and transmits a check in request including a reservation ID and a code number, to the conference reservation system 50 via the first communicating unit 11.

Step S7: The second communicating unit 52 of the conference reservation system 50 acquires the check in request, and the reservation managing unit 51 accepts the check in. In the present embodiment, it is assumed that the authentication based on the code number is successful and the check in is permitted. The reservation managing unit 51 changes the status of the reservation information of the conference room B identified by the reservation ID, to "checked in". Based on the reservation information, the connection destination identifying unit 54 identifies the remote conference apparatus 30B in the conference room B and the remote conference apparatus 30A in the conference room A that is the connection destination. The process of step S7 will be described in detail with reference to FIG. 12.

Step S8: The statuses of the conference rooms A and B have been changed to "checked in", and, therefore, the remote conference start reporting unit 53 of the conference reservation system 50 acquires the connection destination information of the remote conference apparatus 30 identified by the connection destination identifying unit 54, from the connection destination information DB 56, and transmits a remote conference start report including this connection destination information, to the terminal apparatus 10B. Note that in FIG. 11, the activation request is omitted.

Step S9: The remote conference start report receiving unit 15 of the terminal apparatus 10B receives the remote conference start report via the first communicating unit 11, and the remote conference apparatus communicating unit 16 transmits a remote conference start report to the remote conference apparatus 30B, to make a connection request.

Step S10: The third communicating unit 32 of the remote conference apparatus 30B receives the remote conference start report, and the remote communicating unit 33 connects to the remote conference apparatus 30A by using the connection destination information. Furthermore, transmission and reception of images and sound, etc., between the remote conference apparatuses may be performed directly by the remote conference apparatuses via the network, or may be performed via an apparatus such as a server of the remote conference system.

Step S11: The third communicating unit 32 of the remote conference apparatus 30B transmits signals indicating "start OK", indicating that the remote conference start report has been normally received, to the terminal apparatus 10B. Start OK may simply be a reception confirmation (200 response of HTTP) on the assumption that the remote conference apparatus 30 is normally operating; however, preferably, start OK means that the connection with the remote conference apparatus 30A has been completed.

Step S12: The remote conference apparatus communicating unit 16 of the terminal apparatus 10B receives the start OK, and the first communicating unit 11 transmits the start OK together with the reservation ID to the conference reservation system 50. Accordingly, the reservation managing unit 51 of the conference reservation system 50 can change the status of the conference room B in the reservation information identified by the reservation ID, to "conference has started". Furthermore, the remote conference apparatus 30A in the conference room A also transmits, to the conference reservation system 50 via the terminal apparatus 10B, that the remote conference apparatus 30A has been able to connect with the remote conference apparatus 30B. The reservation managing unit 51 can change the status of the conference room A in the reservation information identified by the reservation ID, to "conference has started".

Note that when a remote conference is held at three or more sites, the terminal apparatus 10B may make a connection request to the remaining terminal apparatus (for example, the terminal apparatus 10C). Whether a connection request is necessary depends on the specification of the remote conference apparatus. For example, when the terminal apparatus 10C is already performing a remote conference with the terminal apparatus 10A, the terminal apparatus 10B may not need to make a connection request to the terminal apparatus 10C.

Furthermore, in the connection method according to the present embodiment, in order to start a remote conference, it is assumed that only one of the two remote conference apparatuses 30A and 30B needs to connect to the other party. Therefore, either the remote conference apparatus 30A or the remote conference apparatus 30B is to connect to the other party. When the remote conference apparatus 30A and the remote conference apparatus 30B need to connect to each other, the terminal apparatus 10A makes a connection request to the terminal apparatus 10B.

As described above, the conference reservation system 50 can identify the remote conference apparatuses 30 that perform the remote conference based on the reservation information, dynamically switch the connection destination, and start the remote conference.

FIG. 12 is an example of a flowchart illustrating a procedure in which the conference reservation system 50 transmits a remote conference start report to each terminal apparatus 10. The process in FIG. 12 starts when the status of the conference room is changed to "checked in".

The connection destination identifying unit 54 refers to the reservation information whose status has been changed to "checked in", and determines whether two or more conference rooms have become "checked in" (step S101). When only one of the conference rooms has become "checked in", one of the remote conference apparatuses 30 is not to be connected to the other remote conference apparatus 30, and, therefore, the remote conference start reporting unit 53 transmits a standby report to the terminal apparatus 10 of the "checked in" conference room. (step S107).

When two or more conference rooms have become "checked in" (YES in S101), the connection destination identifying unit 54 identifies all of the remote conference apparatuses 30 in the conference rooms that have become "checked in", from the reservation information (step S102). For example, when the reservation information as illustrated in FIG. 7 is stored, the connection destination identifying unit 54 matches the name of the remote conference apparatus included among the participants against the names of the remote conference apparatuses stored in advance, and further refers to the connection destination information DB 56, and identifies the connection destination information associated with the name of the remote conference apparatus, and identifies the remote conference apparatus to be a connection target. The remote conference apparatus 30 whose status has already become "conference has started", may be excluded.

Next, the connection destination identifying unit 54 determines the remote conference apparatus to be the connection destination (this is referred to as a "connection destination remote conference apparatus") one by one, from among the remote conference apparatuses identified in step S102 (step S103). The determination may be done in any order. For example, when the statuses in the reservation information are "checked in" with respect to the remote conference apparatuses 30A and 30B, one of the remote conference apparatuses 30A and 30B is determined to be the connection destination.

Next, the connection destination identifying unit 54 determines whether the connection destination remote conference apparatus, and the remote conference apparatus 30 that is the transmission destination of the remote conference start report, are the same (step S104). The remote conference apparatus 30 that is the transmission destination of the remote conference start report is the remote conference apparatus 30 in the conference room whose status has been changed to "checked in"; that is, the remote conference apparatus 30 that is connected to the terminal apparatus 10 that has triggered the process of FIG. 12.

When the determination in step S104 is YES, for example, the connection destination remote conference apparatus is the remote conference apparatus 30A, and the remote conference apparatus that is the transmission destination of the remote conference start report is the remote conference apparatus 30A, and, therefore, the remote conference apparatus 30A cannot be connected to itself, so the process proceeds to step S106.

When the determination in step S104 is NO, in order to connect the remote conference apparatus 30 that is the transmission destination of the remote conference start report, to the connection destination remote conference apparatus, the connection destination identifying unit 54 determines to transmit the connection destination information of the connection destination remote conference apparatus, to the remote conference apparatus 30 that is the transmission destination of the remote conference start report. Accordingly, the remote conference start reporting unit 53 transmits a remote conference start report (connection destination information) to the remote conference apparatus 30 that is the transmission destination of the remote conference start report (step S105).

Next, the connection destination identifying unit 54 determines whether the process has been completed for all of the connection destination remote conference apparatuses (step S106). When the determination in step S106 is NO, the process returns to step S103. When the determination in step S106 is YES, the process of FIG. 12 ends.

By the above process, the conference reservation system 50 can connect the remote conference apparatus 30 in the conference room that has become "checked in", to all of the other remote conference apparatuses 30.

Furthermore, in the description of FIGS. 11 and 12, the conference reservation system 50 transmits a remote conference start report to the terminal apparatus 10, by being triggered by the check in. However, it is possible to determine the connection destination, as long as it is after the conference reservation system 50 has acquired the reservation information from the schedule management system 60. For example, the connection destination may be determined following step S2.1 in FIG. 10. However, it is preferable that the transmission of the remote conference start report is performed after the conference rooms of the two sites have become "checked in". However, only the connection destination information included in the remote conference start report may be transmitted before transmitting the remote conference start report. At the time of step S2.1 of FIG. 10, there are no conference rooms that have become "checked in", and, therefore, in the process of FIG. 12, regardless of whether the status of the reservation information has become "checked in", all of the remote conference apparatuses for performing the remote conference are to be identified in step S102.

Furthermore, although it has been described that the conference reservation system 50 performs the process of FIG. 12, the process of FIG. 12 may be performed by the terminal apparatus 10. The terminal apparatus 10 includes the connection destination information DB 56, and may perform the process of FIG. 12, and report the connection destination of the remote conference apparatus 30, to the remote conference apparatus 30 in the same conference room. Furthermore, the remote conference apparatus 30 may perform the process of FIG. 12.

### <When reservation information is divided for each conference room-first embodiment>

In the reservation information illustrated in FIG. 7, two conference rooms, in which a remote conference is to be held, are registered in one piece of reservation information. However, in some cases, a reserving person may make a reservation for one conference room at a time.

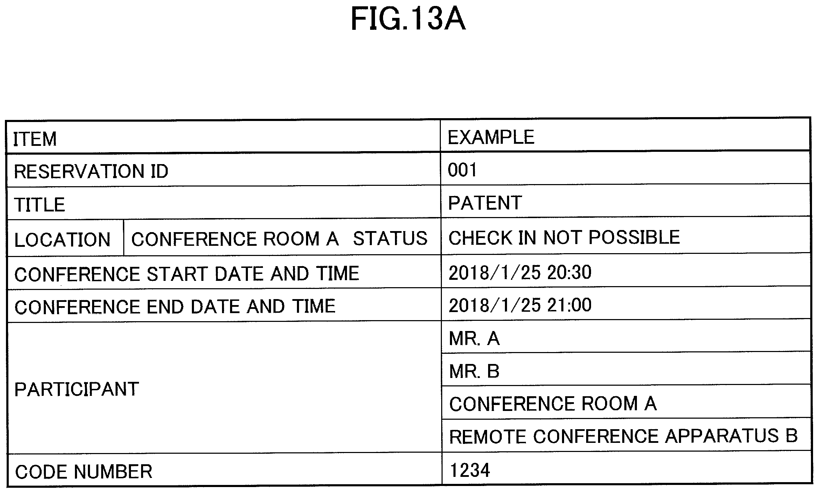

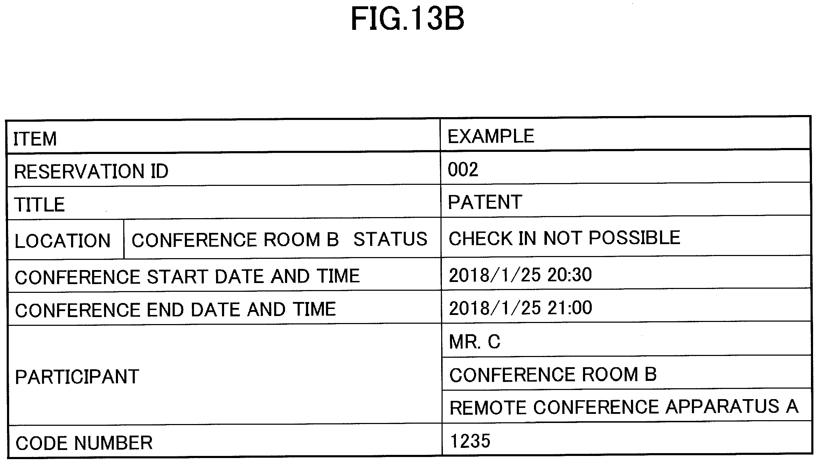

FIGS. 13A and 13B illustrate other examples of the reservation information. In FIGS. 13A and 13B, conference rooms A and B are reserved separately; FIG. 13A illustrates reservation information A of the conference room A, and FIG. 13B illustrates reservation information B of the conference room B. It is already known to the reserving person that the remote conference will be held in the conference rooms that are reserved with these two pieces of reservation information.

The participants in the reservation information A are Mr. A and Mr. B, the conference room A, and the remote conference apparatus 30B. That is, the reserving person sets the remote conference apparatus 30B of the conference room B in which the remote conference will be held with conference room A, as a participant in the reservation information A. Similarly, the participants in the reservation information B are Mr. C, conference room B, and the remote conference apparatus 30A. The reserving person sets the remote conference apparatus 30A of the conference room A with which the remote conference will be held with conference room B, as a participant in the reservation information B.

The reserving person is aware of the information that the remote conference will be held in the conference rooms A and B, from participants or another reserving person, etc., and sets the remote conference apparatus 30B used in the conference room B and the remote conference apparatus 30A used in the conference room A, as participants.

In the case of such reservation information, the connection destination identifying unit 54 can identify the remote conference apparatus 30 that is the connection destination, based on the remote conference apparatuses 30A and 30B that are the participants. For example, when pieces of reservation information of a conference, held in the same time period, are extracted, and the remote conference apparatus 30 is set as a participant in one piece of reservation information, it can be determined that this remote conference apparatus 30 is a connection destination.

The connection destination identifying unit 54 merges the participants of the pieces of reservation information illustrated in FIGS. 13A and 13B determined to perform the remote conference with the remote conference apparatus 30, and handles the participants as one set of participants as illustrated in FIG. 7. That is, the connection destination identifying unit 54 eliminates any duplication in the participants, and sets the participants in one piece of reservation information. Accordingly, it is possible to identify the remote conference apparatus 30 to which the connection destination information is to be transmitted, by the process as illustrated in FIG. 12.

Note that the participants in the pieces of reservation information in FIGS. 13A and 13B do not necessarily need to be merged, and when these pieces of reservation information are changed to the status of "checked in", the remote conference start reporting unit 53 is to transmit the remote conference start report, in which the remote conference apparatus 30A that is the participant in the reservation information of FIG. 13A is set as the connection destination information, to the terminal apparatus 10 of the conference room B (the conference room that has been "checked in" later).

As described above, even if the reservation information is registered for each conference room, the conference reservation system 50 can dynamically switch the other one of the remote conference apparatuses 30 to which one of the remote conference apparatus 30 is to be connected, based on the remote conference apparatus 30 included in the reservation information.

### <When conference room and remote conference apparatus are not associated-first embodiment>

As indicated in Table 1, when there is the connection destination information DB 56 and the conference room and the remote conference apparatus 30 are associated with each other, the conference reservation system 50 can identify the remote conference apparatus 30 from the conference room, and can identify the conference room from the remote conference apparatus 30.

However, when there is no connection destination information DB 56, and only the conference room is set in the reservation information, the conference reservation system 50 cannot identify the connection destination. In such a case, the reserving person sets the connection destination information per se as a participant, etc.

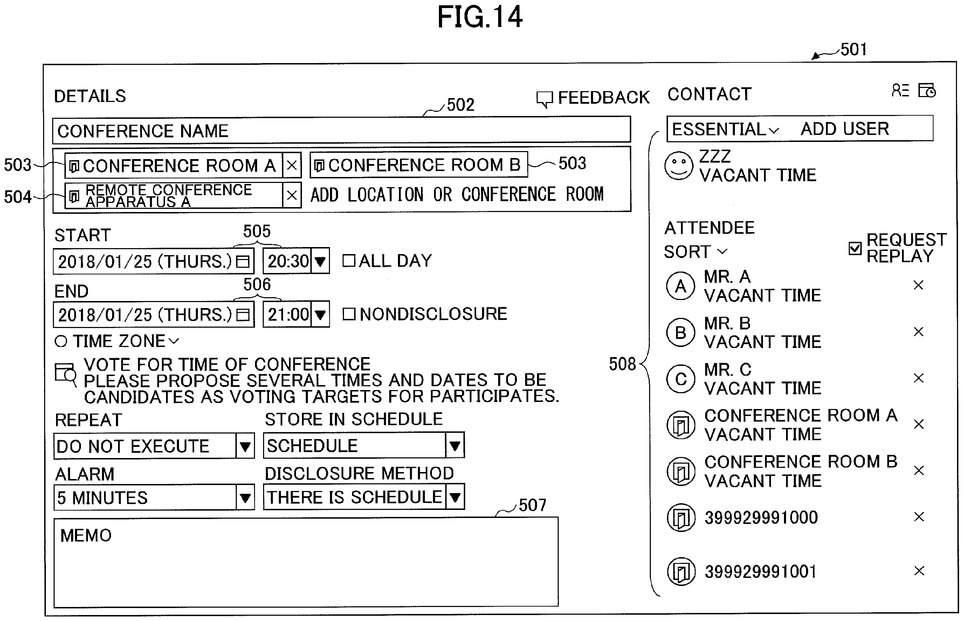

FIG. 14 illustrates an example of the reservation screen 501 in which connection destination information is set as a participant. In FIG. 14, two pieces of connection destination information 509 are registered as participants. A list indicating which remote conference apparatus 30 is set up in which conference room, is distributed to the reserving person by e-mail or by paper, etc. The reserving person sets the connection destination information of the remote conference apparatus 30 to be used in the conference room where the remote conference is to be performed, as a participant.

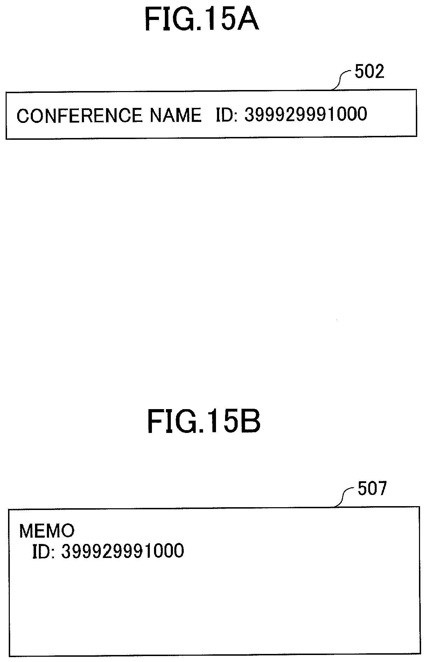

Furthermore, as illustrated in FIGS. 15A and 15B, the connection destination information may be set in a field other than the participant field 508. FIGS. 15A and 15B are diagrams illustrating setting examples of the connection destination information in the reservation screen. FIG. 15A illustrates connection destination information set in the title field 502. In the title field 502, connection destination information is set in the form of "ID: connection destination information", following a space after the title. Note that this connection destination information is the connection destination information that is the destination of the remote conference. In this case, in step S102 of FIG. 12, the connection destination identifying unit 54 identifies the connection destination remote conference apparatus, based on the title field or the memo field of the reservation information. Furthermore, in this case, the connection destination identifying unit 54 can identify the connection destination remote conference apparatus without referring to the connection destination information DB 56.

In FIG. 15A, one piece of connection destination information is indicated; however, the reserving person can set a plurality of pieces of connection destination information "ID: connection destination information", by dividing the plurality of pieces of connection destination information with spaces, etc. Similarly, as illustrated in FIG. 15B, the connection destination information may be set in the memo field 507; any field may be used, as long as the connection destination information is included in the reservation information.

### <Case of explicitly indicating usage of remote conference apparatus-first embodiment>

As indicated in the connection destination information DB 56, when the conference room and the remote conference apparatus 30 are associated with each other, if the reserving person sets a conference room in the participant field 508, the connection destination identifying unit 54 can refer to the connection destination information DB 56 to identify another one of the remote conference apparatuses 30 to which one of the remote conference apparatuses 30 is to be connected. However, there are also cases where the reserving person does not want to connect one of the remote conference apparatuses 30 to another one of the remote conference apparatuses 30. In order to address such a case, the reserving person may explicitly set in the reservation information to use the remote conference apparatus 30.

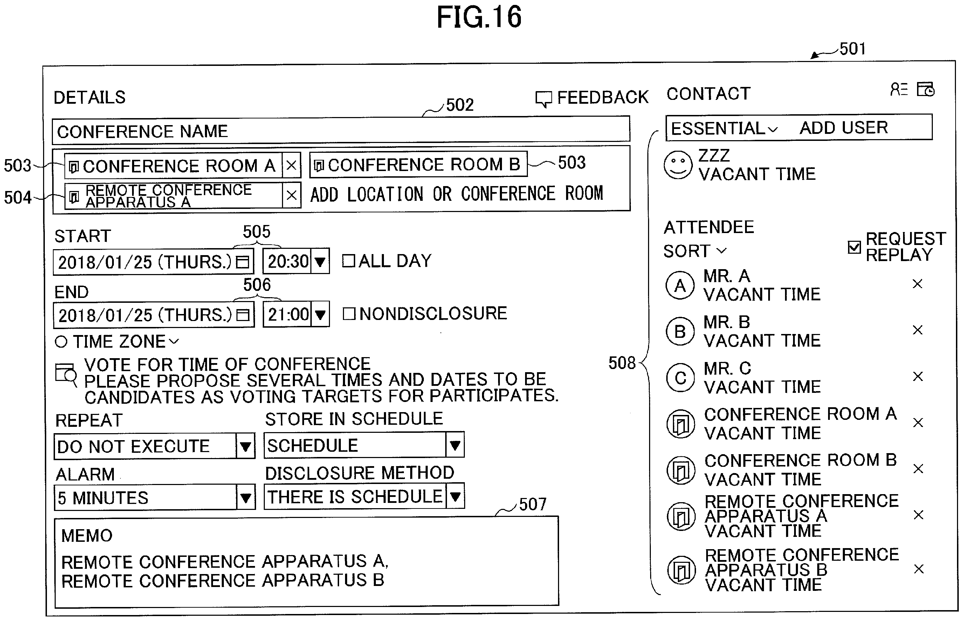

FIG. 16 illustrates an example of the reservation screen 501. In the reservation screen 501 of FIG. 16, the remote conference apparatus 30 is not set in the participant field 508. However, two remote conference apparatuses A and B are registered in the memo field 507. Although the conference reservation system 50 includes the connection destination information DB 56, the conference reservation system 50 does not determine that the remote conference apparatus 30 will be used, based on the conference room in the participant field 508. Only when the remote conference apparatus 30 is registered in the memo field 507, the conference reservation system 50 determines that the remote conference apparatus 30 is to be used.

Accordingly, the reserving person can connect one remote conference apparatus 30 to another remote conference apparatus 30 only if he or she wishes to use the remote conference apparatus 30. Note that describing the remote conference apparatus 30 in the memo field 507 is one example; the remote conference apparatus 30 may be set in any field of the reservation information including the participant field 508. When the remote conference apparatus 30 is set in the reservation information, it is determined that the reserving person has indicated explicit intention to use the remote conference apparatus 30. For example, a tick box may be provided, and the reserving person may set whether to use the remote conference apparatus 30 by using the tick box.

### <Overview-first embodiment>

As described above, the communication system 1 according to the present embodiment can identify a plurality of remote conference apparatuses 30A and 30B that perform a remote conference, by using the reservation information related to the reservation of a conference room. Furthermore, the remote conference is started after waiting for the participants to check into both conference rooms where the remote conference is to be held, and, therefore, a remote conference will not be held in a conference room where nobody is present. Furthermore, the participant only needs to input, to the terminal apparatus 10, a check in operation for using the conference room, and, therefore, it is possible to omit operations of manually inputting the connection destination information of the remote conference.

### [Second embodiment]

In the communication system 1 described in the present embodiment, even when it is not possible to directly determine, from the reservation information, that a remote conference is to be held, it is possible to identify that a remote conference is to be performed from reservation information related to a conference room where the remote conference is to be held, and dynamically connect one of the remote conference apparatuses 30 to another one of the remote conference apparatuses 30.

### <Outline of communication system-second embodiment>

When a plurality of conference rooms are reserved in the same time period, the communication system 1 according to the present embodiment compares the pieces of the reservation information of the conference rooms and identifies a plurality of conference rooms where the remote conference is to be held.

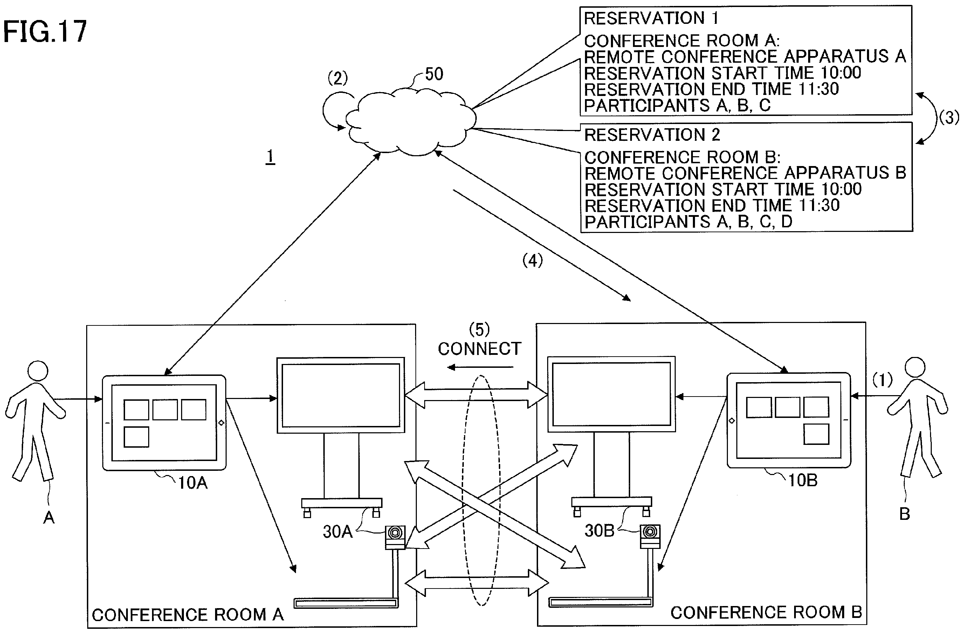

FIG. 17 is an example of a diagram for describing an outline of processes until the remote conference apparatus 30 starts a remote conference.
(1) Participant B operates terminal apparatus 10B in the conference room B and checks into the conference room B. Participant A has already checked into the conference room A.
(2) The conference reservation system 50 identifies the reservation information of the conference room A that is reserved in the same time period as the conference room B.
(3) The conference reservation system 50 compares the two pieces of reservation information of the conference rooms A and B, and determines whether a remote conference is to be held. For example, if the participants are overlapping, it is determined that the conference rooms A and B will be used to hold the remote conference. In FIG. 17, participants A, B, and C are overlapping.
(4) The conference reservation system 50 transmits a remote conference start report, in which the remote conference apparatus 30A in the conference room A is set as the connection destination, to the terminal apparatus 10B in the conference room B.
(5) The remote conference apparatus 30B specifies the remote conference apparatus 30A by the connection destination information, and starts a remote conference.

As described above, in addition to the effect of the first embodiment, even when the connection destination information and the remote conference apparatus are not set in the reservation information, the communication system 1 according to the present embodiment can use the reservation information of the conference room, to dynamically connect one of the remote conference apparatuses 30 in one conference room to another one of the remote conference apparatuses 30 in another conference room.

Note that in the present embodiment, the constituent elements denoted by reference numerals that are the same as those in FIGS. 2 to 4 have the same functions as those in FIGS. 2 to 4, and, therefore, only the main constituent elements of the present embodiment may be described.

### <Functions-second embodiment>

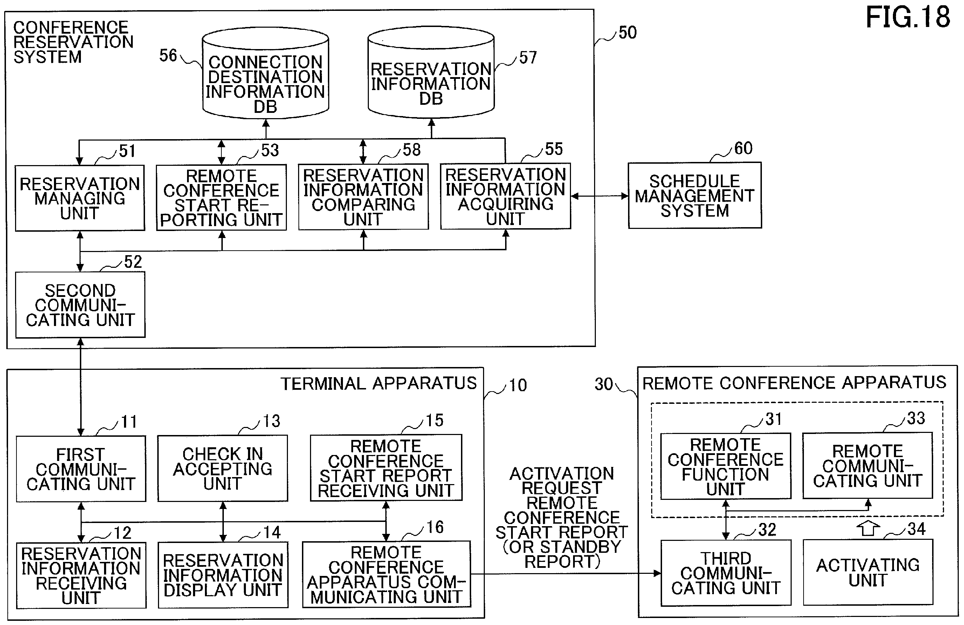

Next, the functions of the terminal apparatus 10, the conference reservation system 50, and the remote conference apparatus 30 will be described with reference to FIG. 18. Note that in the description of FIG. 18, differences from FIG. 5 will mainly be described. The functions of the terminal apparatus 10 and the remote conference apparatus 30 may be the same as those in FIG. 5. Furthermore, the conference reservation system 50 is different from that of FIG. 5 in that a reservation information comparing unit 58 is included.

The reservation information comparing unit 58 acquires the time period of the conference in the reservation information, acquires the reservation information of the same time period as above from the reservation information DB 57, and compares the acquired pieces of reservation information. For example, the reservation information comparing unit 58 compares at least one of the participant and the title. Accordingly, the reservation information comparing unit 58 detects pieces of reservation information of a plurality of conference rooms where a remote conference is to be held. The remote conference apparatus 30 is included in the pieces of reservation information of the plurality of conference rooms where a remote conference is to be held, and, therefore, the reservation information comparing unit 58 can identify another one of the remote conference apparatuses 30 to be the connection destination, to which one of the remote conference apparatuses 30 is to be connected. Therefore, the reservation information comparing unit 58 has the same function as the connection destination identifying unit 54 in terms of identifying the other remote conference apparatus 30 that is the connection destination.

### <Example of reservation information-second embodiment>

Similar to the first embodiment, the reservation information set in the reservation screen 501 is transmitted to the schedule management system 60. However, in the present embodiment, the remote conference apparatus 30 of another conference room is not registered as a participant in one conference room.

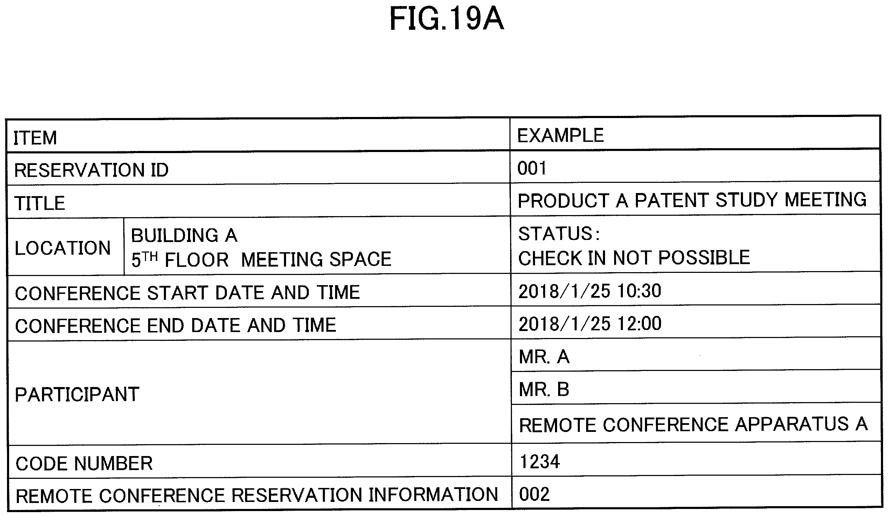

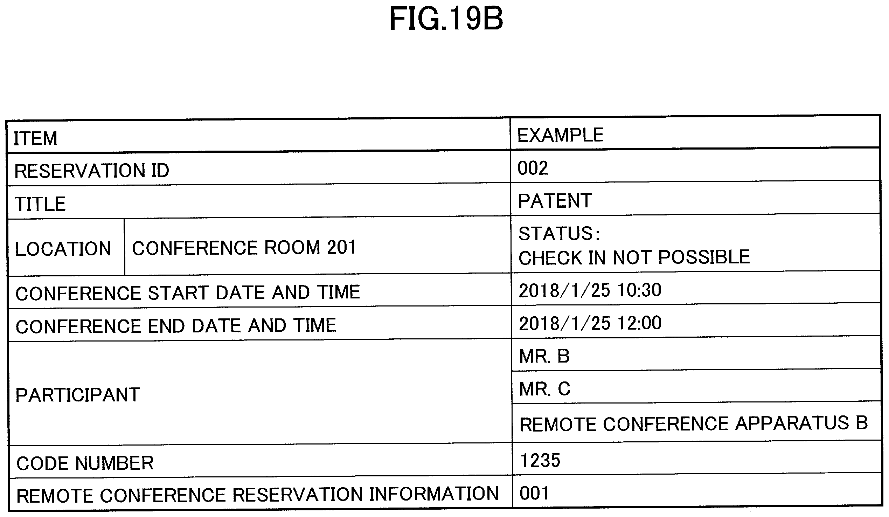

With reference to FIGS. 19A and 19B, reservation information will be described. FIGS. 19A and 19B illustrate examples of the reservation information according to the present embodiment. FIG. 19A illustrates reservation information (1) of the conference room A, and FIG. 19B illustrates reservation information (2) of the conference room B. In the present embodiment, there is an item of remote conference reservation information, which will be described later.

Different conference rooms are reserved with reservation information (1) and (2); however, a remote conference is scheduled to be held in these two conference rooms. It can be presumed that there is a possibility that a remote conference will be held in these two conference rooms, because the time period of conference is the same. However, not all conferences held in the same time period will be held as one remote conference.

When a remote conference is held in two conference rooms, the participants may be common. The following are three conceivable methods of setting participants when a reserving person reserves a conference room.
(i) Only participants who go to each conference room to participate in the conference, are set in the reservation information.
(ii) All of the participants are set in both of the two pieces of reservation information, regardless of which conference room the participant is going to in order to participate in the conference.
(iii) One or more participants are overlapping, but participants are set in the reservation information without considering which conference room the participants are going to in order to participate in the conference.

Therefore, unless the setting method (i) is performed, there are one or more overlapping participants among the two pieces of reservation information.

For example, the participants in reservation information (1) are "Mr. A and Mr. B", and the participants in the reservation information (2) are "Mr. B and Mr. C". The reservation information comparing unit 58 of the conference reservation system 50 can detect the reservation information of two conference rooms where a remote conference is to be held, because the same participant "Mr. B" is included among the participants in the pieces of reservation information.

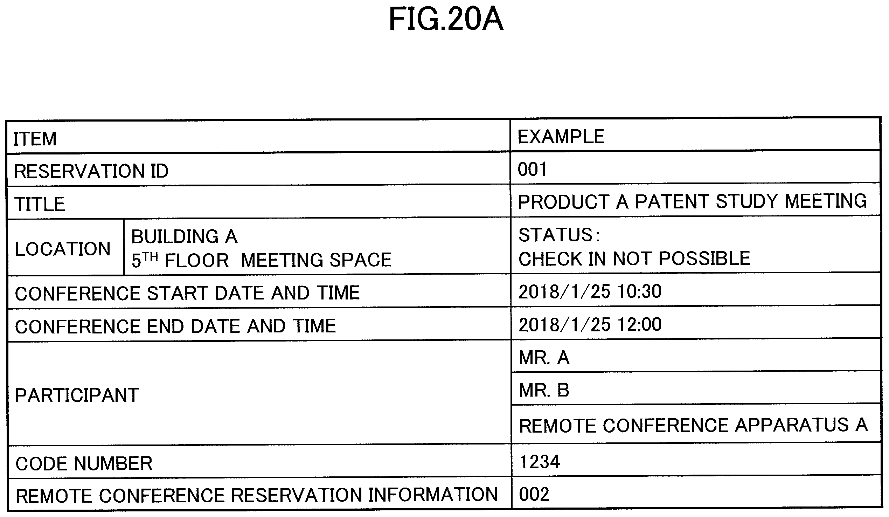

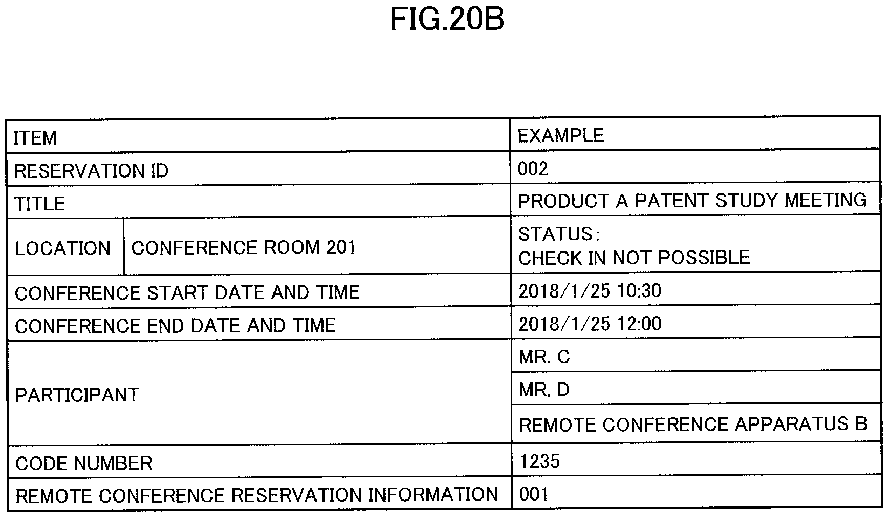

However, if the participants in the two pieces of reservation information are not overlapping at all as in (i) above, there is a possibility that it cannot be detected that the conference will be held as a remote conference. Therefore, as illustrated in FIGS. 20A and 20B, it is effective to determine whether the conference will be held as a remote conference, based on the title.

The participants in reservation information (3) (FIG. 20A) are "Mr. A and Mr. B", and the participants in the reservation information (4) (FIG. 20B) are "Mr. C and Mr. D". Therefore, none of the participants are common. However, the title is "Product A patent study conference" in both of the pieces of reservation information (3) and (4). Therefore, when the titles are the same, the reservation information comparing unit 58 of the conference reservation system 50 can detect that the conference will be held as a remote conference. Accordingly, it is possible to identify the pieces of reservation information of the conference rooms where a remote conference is to be held, even when the participants are not common at all.

When pieces of reservation information of conference rooms where a remote conference is to be held, are detected, the reservation information comparing unit 58 sets the reservation ID of the other piece of reservation information, in the remote conference reservation information of one piece of reservation information. Similarly, the reservation information comparing unit 58 sets the reservation ID of one piece of reservation information, in the remote conference reservation information of the other piece of reservation information. Accordingly, it is possible to associate the two pieces of reservation information that are set for holding a remote conference.

As described above, when it is detected that the same conference in different pieces of reservation information, will be held as a remote conference, a reservation ID is set in the remote conference reservation information of each of the pieces of reservation information corresponding to the remote conference to be held. Therefore, when a participant checks into one of the conference rooms later than the check in of the other conference room, the conference reservation system 50 does not need to detect the reservation information of the same remote conference.

### <Operation procedure-second embodiment>

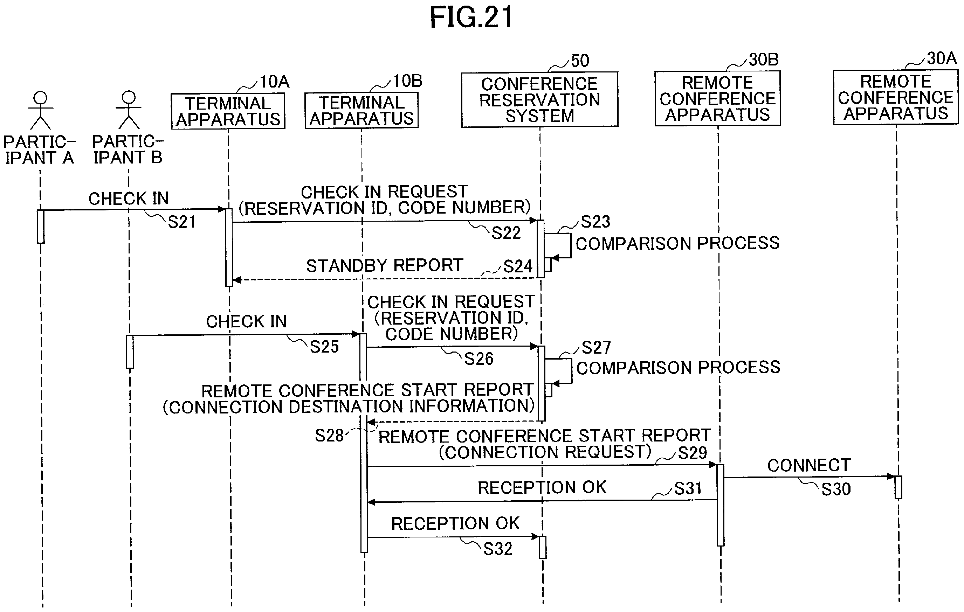

Hereinafter, the operation of the communication system 1 will be described with reference to the sequence diagram of FIG. 21. Note that the procedure by the reserving person to reserve the conference room and the procedure by the terminal apparatus 10 to acquire the reservation information may be the same as in FIG. 10 of the first embodiment, and descriptions thereof will be omitted.

FIG. 21 is an example of a sequence diagram illustrating a procedure in which one of the remote conference apparatuses 30 performing a remote conference connects to the other remote conference apparatus 30.

Step S21: First, participant A operates the terminal apparatus 10A to check into the conference room A.

Step S22: The check in accepting unit 13 of the terminal apparatus 10A accepts the check in, and transmits a check in request including the reservation ID and the code number, to the conference reservation system 50 via the first communicating unit 11.

Step S23: The second communicating unit 52 of the conference reservation system 50 acquires the check in request, and the reservation managing unit 51 accepts the check in. In the present embodiment, it is assumed that the authentication based on the code number is successful and the check in is permitted. The reservation managing unit 51 changes the status of the reservation information to "checked in". Accordingly, the reservation information comparing unit 58 compares the reservation information of the same time period as the reservation information of the conference room A, thereby identifying reservation information of another conference room where the remote conference is to be held, if any. The reservation information comparing unit 58 sets a reservation ID in the remote conference reservation information of each piece of reservation information.

Step S24: The reservation information of the other conference room where the remote conference is to be held, is identified. However, the conference room B with which the conference room A holds a remote conference, has not become "checked in", and, therefore, the remote conference start reporting unit 53 of the conference reservation system 50 transmits a standby report to the terminal apparatus 10A. Note that in FIG. 21, the activation request is omitted.

Step S25: Next, participant B operates the terminal apparatus 10B to check into the conference room B.

Step S26: The check in accepting unit 13 of the terminal apparatus 10B accepts the check in and transmits a check in request including the reservation ID and the code number, to the conference reservation system 50 via the first communicating unit 11.

Step S27: The second communicating unit 52 of the conference reservation system 50 acquires the check in request, and the reservation managing unit 51 accepts the check in. In the present embodiment, it is assumed that the authentication based on the code number is successful and the check in is permitted. The reservation managing unit 51 changes the status of the reservation information of the conference room B to "checked in". When the reservation information comparing unit 58 refers to the reservation information of the conference room B, the reservation ID has already been set in the remote conference reservation information, and, therefore, it is determined that there is no need to compare the reservation information.

Step S28: The statuses of the pieces of reservation information of the conference rooms A and B have been changed to "checked in", and, therefore, the remote conference start reporting unit 53 of the conference reservation system 50 acquires, from the connection destination information DB 56, the connection destination information of the remote conference apparatus 30A of the conference room A, to identify the remote conference apparatus 30A, and transmits a remote conference start report including this connection destination information, to the terminal apparatus 10B. For example, when reservation information as illustrated in FIGS. 19A to 20B is stored, the remote conference start reporting unit 53 matches the name of the remote conference apparatus included as a participant in the reservation information against the name of the remote conference apparatus stored in advance, and further refers to the connection destination information DB 56 to identify the connection destination information associated with the name of the remote conference apparatus, thereby identifying the remote conference apparatus to be the connection target. Note that the activation request is omitted.

Step S29: The remote conference start report receiving unit 15 of the terminal apparatus 10B receives the remote conference start report via the first communicating unit 11, and the remote conference apparatus communicating unit 16 transmits a remote conference start report to the remote conference apparatus 30B, to make a connection request.

Step S30: The third communicating unit 32 of the remote conference apparatus 30B receives the remote conference start report, and the remote communicating unit 33 connects to the remote conference apparatus 30A using the connection destination information.

Step S31: The third communicating unit 32 of the remote conference apparatus 30B transmits signals indicating start OK indicating that the remote conference start report has been normally received, to the terminal apparatus 10B.

Step S32: The remote conference apparatus communicating unit 16 of the terminal apparatus 10B receives the start OK, and the first communicating unit 11 transmits the start OK together with the reservation ID to the conference reservation system 50. Accordingly, the reservation managing unit 51 of the conference reservation system 50 can change the status of the reservation information to "conference has started".

Note that in the connection method of FIG. 21, as long as one of the two remote conference apparatuses 30 performs the connection, the other one is not required to perform connection, and only the remote conference apparatus 30B in the conference room B performs the connection to the remote conference apparatus 30A in the conference room A. However, only the remote conference apparatus 30A in the conference room A may perform the connection to the remote conference apparatus 30B in the conference room B, or both of the remote conference apparatuses 30A and 30B may perform the connection.

Furthermore, comparison of the reservation information is possible as long as it is after reservation information has been registered. In the present embodiment, the connection destination information may be transmitted to the terminal apparatus 10 before transmitting the remote conference start report.

### «Comparison of reservation information-second embodiment»

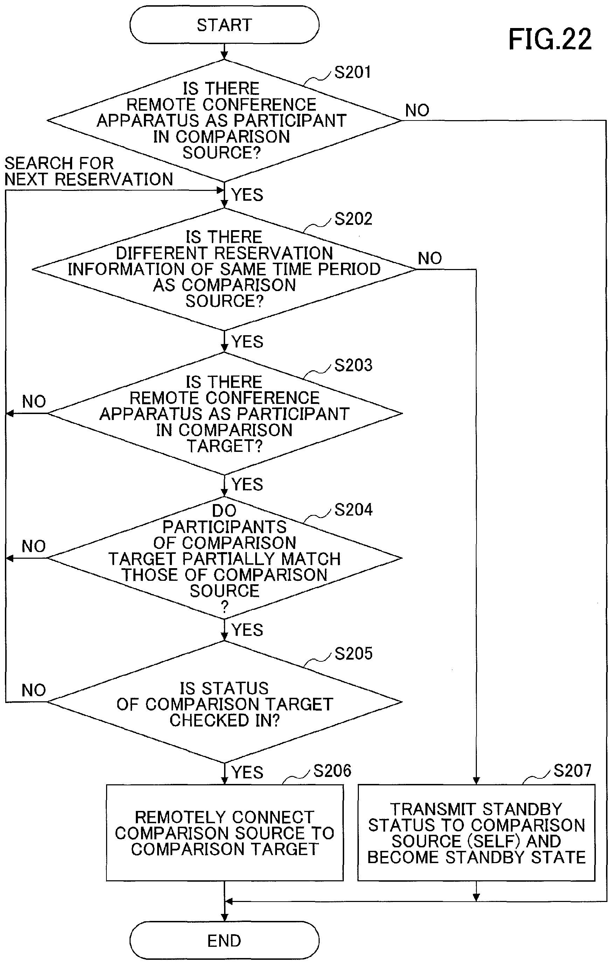

Details of the comparison of reservation information will be described with reference to FIG. 22. FIG. 22 is an example of a flowchart illustrating a procedure in which the reservation information comparing unit 58 compares pieces of reservation information. The process of FIG. 22 can be performed, for example, at the timing when new reservation information is acquired or at the timing when the status of reservation information is updated to "checked in".

The process of FIG. 22 is performed by focusing on one piece of reservation information whose status has been updated to "checked in". This reservation information is referred to as the reservation information that is the comparison source. The reservation information comparing unit 58 determines whether there is any remote conference apparatus 30 as a participant in the reservation information of the comparison source (step S201).

When the determination in step S201 is NO, the remote conference is not performed in the first place, so the process in FIG. 22 ends.

When the determination in step S201 is YES, the reservation information comparing unit 58 determines whether there is another piece of reservation information of the same time period as the reservation information that is the comparison source (step S202). The same time period may include a case where the conference is held at exactly the same time, or a case in which the time periods are overlapping each other by a threshold value or more. Also, a case where the time periods partially overlap may be included. Note that another piece of reservation information of the same time period as reservation information of the comparison source, is referred to as comparison target reservation information.

When the determination in step S202 is NO, the reservation information of a conference, which is to be held as a remote conference with the conference identified by the reservation information that is the comparison source, cannot be found, and, therefore, the remote conference start reporting unit 53 transmits a standby report to the remote conference apparatus 30 included in the reservation information of the comparison source, via the terminal apparatus 10 (step S207).

When the determination in step S203 is YES, the reservation information comparing unit 58 determines whether there is any remote conference apparatus 30 as a participant in the reservation information that is the comparison target (step S203).

When the determination in step S203 is NO, a remote conference is not performed, and, therefore, the process returns to step S202 and the next piece of reservation information to be compared becomes the target of determination.

When the determination in step S203 is YES, the reservation information comparing unit 58 determines whether the participants in the reservation information of the comparison source and the participants in the reservation information of the comparison target match at least partially (step S204).

When the determination in step S204 is NO, a remote conference is not performed, and, therefore, the process returns to step S202, and the next piece of reservation information to be compared becomes the target of determination.

When the determination in step S204 is YES, the reservation information comparing unit 58 determines whether the status of the reservation information that is the comparison target is "checked in" (step S205).

When the determination in step S205 is NO, a connection is not to be made with the remote conference apparatus 30 included in the reservation information that is the comparison target, and, therefore, the process returns to step S202, and the next piece of reservation information to be compared becomes the target of determination. When the process returns to step S202, after steps S203, S204, and S205, and when there are no more comparison targets, the remote conference start reporting unit 53 transmits a standby report to the remote conference apparatus 30 included in the reservation information that is the comparison source, via the terminal apparatus 10 (step S207).

When the determination in step S205 is YES, the remote conference apparatus 30 included in the reservation information that is the comparison source can be connected to the remote conference apparatus 30 included in the reservation information that is the comparison target, and, therefore, the remote conference start reporting unit 53 transmits a remote conference start report, in which the comparison target is set as the connection destination, to the remote conference apparatus 30 that is the comparison source, via the terminal apparatus 10 (step S206).

As described above, the conference reservation system 50 can identify the two conference rooms where the remote conference is to be held, from the reservation information, and cause one of the remote conference apparatuses 30 used in one of the two conference rooms to connect to the other remote conference apparatus 30.

Note that when the determination is made based on the title of the reservation information, the titles are to be compared in step S204. The title may be compared together with the comparing of the participants.

### <Example of screen displayed by terminal apparatus-second embodiment>

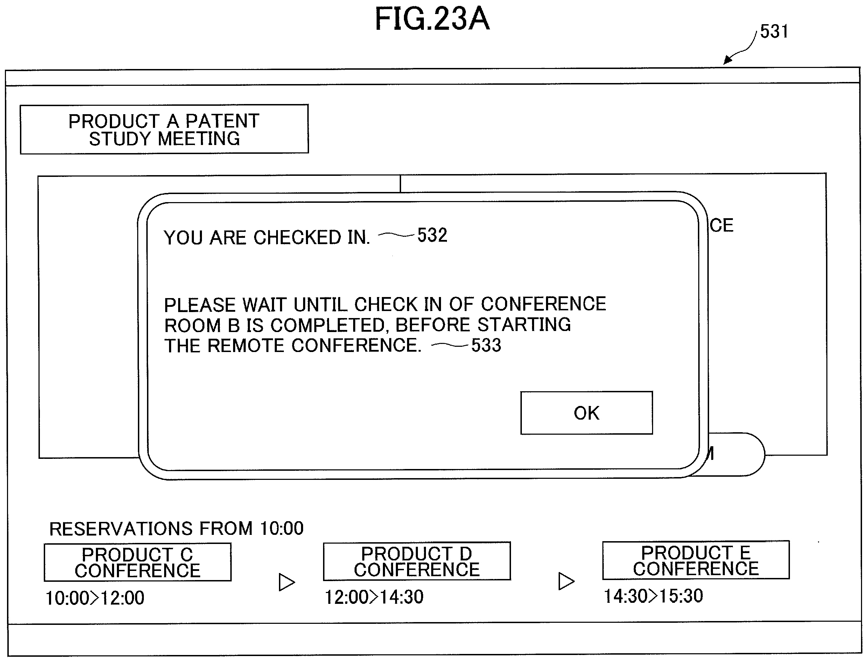

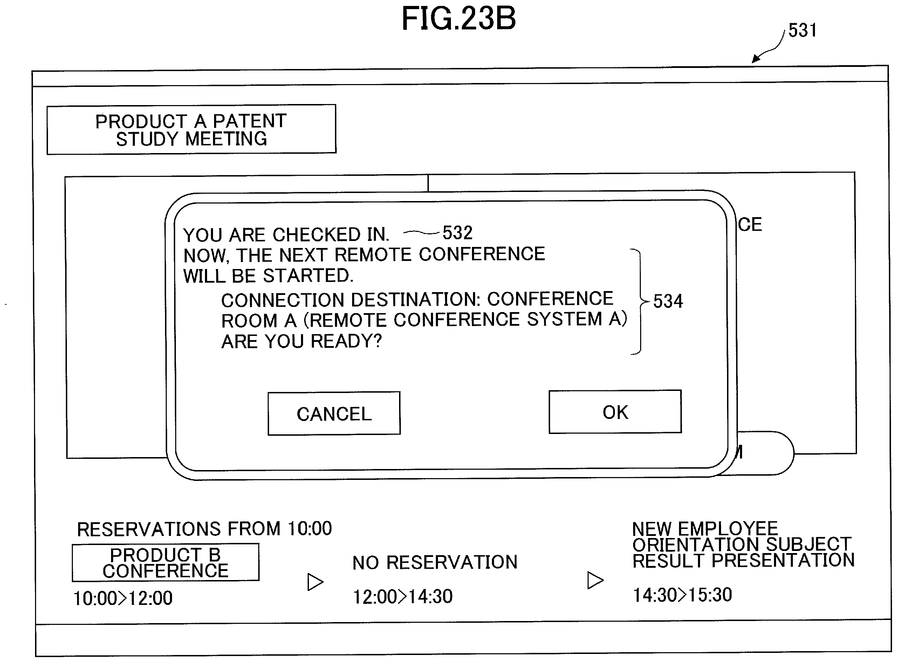

With reference to FIGS. 23A and 23B, an example of a screen displayed by the terminal apparatus 10 when starting a remote conference will be described. FIG. 23A illustrates an example of a check in confirmation screen 531 displayed by the terminal apparatus 10A in the conference room A after the check in. The check in confirmation screen 531 of FIG. 23A is displayed in step S24 of FIG. 21. In the check in confirmation screen 531, a message 532 "You are checked in." and a message 533 "Please wait until check in of the conference room B is completed, before starting the remote conference," are displayed. Such messages are transmitted from the conference reservation system 50. The participant can read the messages and recognize that the check in is not completed at the conference room B.

FIG. 23B illustrates an example of the check in confirmation screen 531 displayed by the terminal apparatus 10B in the conference room B after the check in. The check in confirmation screen 531 of FIG. 23B is displayed in step S28 of FIG. 21. In the check in confirmation screen, the message 532 "You are checked in." and a message 534 for confirming whether a remote conference can be held, are displayed. Such messages are transmitted from the conference reservation system 50. The participant can read the messages and determine whether the remote conference can be held, before starting the remote conference.

Note that the remote conference apparatus 30B in the conference room B may automatically connect to the remote conference apparatus 30A, without the messages illustrated in FIG. 23B being displayed.

### <Overview-second embodiment>

As described above, in addition to the effect of the first embodiment, even if the connection destination information and the remote conference apparatus are not set in the reservation information, the communication system 1 according to the present embodiment can use the reservation information of the conference room to dynamically connect the remote conference apparatus 30 of one conference room to the remote conference apparatus 30 of the other conference room.

### [Third embodiment]

Note that in the present embodiment, the constituent elements denoted by reference numerals that are the same as those in FIGS. 2 to 4 have the same functions as those in FIGS. 2 to 4.

### <Outline up to connecting remote conference apparatus-third embodiment>

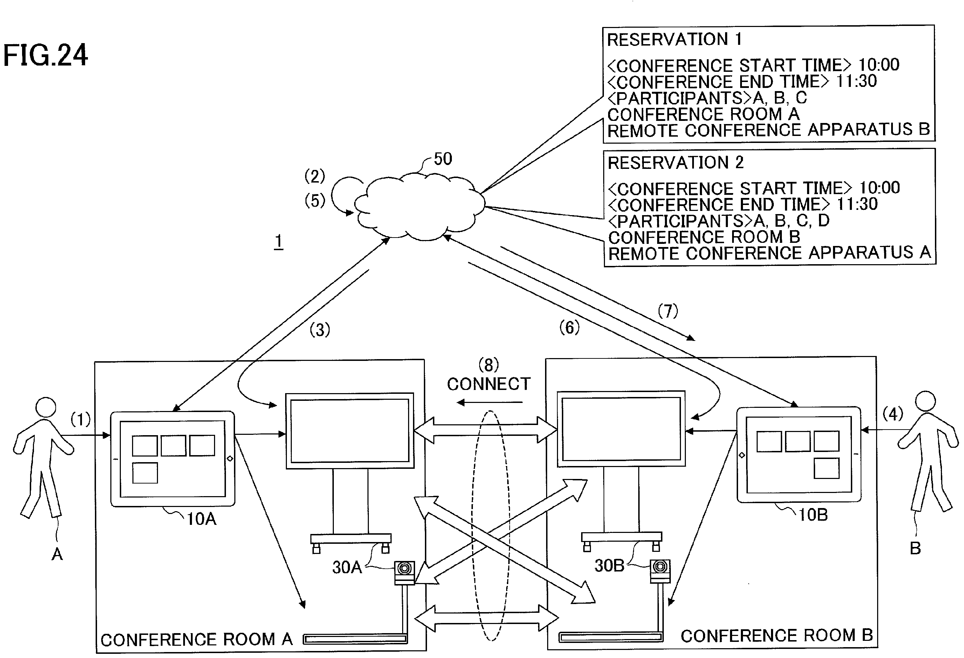

FIG. 24 is an example of a diagram for describing a process until remote conference apparatuses are connected to each other. As illustrated in FIG. 24, in a conference reservation system 50, reservation information including a conference start time, a conference end time, and participants, is registered. In the present embodiment, the remote conference apparatus 30 may also be treated as a participant; however, such a registration method is only an example. In FIG. 24, a remote conference apparatus B is set in the reservation information of conference room A, and a remote conference apparatus A is set in the reservation information of the conference room B.

Hereinafter, either one of the remote conference apparatuses 30A and 30B is referred to as the remote conference apparatus 30, and either one of terminal apparatuses 10A and 10B is referred to as a terminal apparatus 10. Note that in the reservation information, the reference numeral 30 of the remote conference apparatus is omitted.
(1) Participant A operates the terminal apparatus 10A in the conference room A and checks into the conference room A. The terminal apparatus 10A transmits a check in request to the conference reservation system 50.
(2) The conference reservation system 50 accepts the check in to the conference room A and updates the status of the reservation information of the conference room A, to "checked in".
(3) The conference reservation system 50 transmits an activation request to activate the remote conference apparatus 30A in the conference room A in which check in is detected, to the remote conference apparatus 30A, via the terminal apparatus 10A. Note that when the remote conference apparatus 30A has already been activated, the activation process is unnecessary.
(4) Participant B operates the terminal apparatus 10B in the conference room B and checks into the conference room B. The terminal apparatus 10B transmits a check in request to the conference reservation system 50.
(5) The conference reservation system 50 accepts the check in to the conference room B, and updates the status of the reservation information of the conference room B, to "checked in".
(6) The conference reservation system 50 transmits an activation request to activate the remote conference apparatus 30B in the conference room B in which check in is detected, to the remote conference apparatus 30B, via the terminal apparatus 10B. Note that when the remote conference apparatus 30B has already been activated, the activation process is unnecessary.
(7) Both of the conference rooms have become "checked in", and, therefore, the conference reservation system 50 reports, to the remote conference apparatus 30B, a remote conference start report including the connection destination information for connecting to the remote conference apparatus 30A, and causes the remote conference apparatus 30B to start the remote conference. Accordingly, it is possible to start the remote conference in a state where the participants are prepared. Note that in the reservation information of the conference room B, it is registered that the remote conference apparatus 30 to which the remote conference apparatus 30B is to be connected, is the remote conference apparatus 30A in the conference room A.
(8) The remote conference apparatus 30B specifies the remote conference apparatus 30A in the connection destination information and connects to the remote conference apparatus 30A, thereby starting a remote conference.

As described above, the communication system 1 according to the present embodiment waits for the participants to check into the respective conference rooms in which a remote conference is to be held, and holds a remote conference after the conference rooms become "checked in", so that a remote conference is not held in a conference room where nobody is present. Furthermore, when check in is performed at a plurality of sites at the same time, inconveniences may arise such as the possibility that the plurality of sites start connection at the same time and the connection cannot be made normally; however, these inconveniences can be improved as the conference reservation system 50 controls the conference starting procedures at the respective sites.

The conference reservation system 50 appropriately determines the remote conference apparatus 30 to make a request for connection, so that both remote conference apparatuses do not have to make a connection to each other. For example, the remote conference apparatus 30B that has become "checked in" later is connected to the remote conference apparatus 30A that has become "checked in" earlier. Only one of the remote conference apparatuses 30 needs to connect to the other remote conference apparatus 30, and the determination method based on the check in timing is one example.

Furthermore, the participant only needs to input a check in operation to the terminal apparatus 10 for using the conference room A, and, therefore, it is possible to omit the operations of manually inputting the connection destination information of the remote conference.

### <Terms-third embodiment>

A site means a location where the terminal apparatus 10 and the remote conference apparatus 30 are installed. In this way, the site conceptually indicates the location; however, the site may indicate the terminal apparatus 10 per se or the remote conference apparatus 30 per se. Furthermore, the site may not only indicate a location but also participants at the site. Specific examples of a site are a conference room, a branch office, a company, a department within a company, and a satellite office, etc.; a location where the participant is present is the site.

In the case where there are two or more sites, it is not necessary for the sites to be at remote locations from each other, and two or more conference rooms in the same company are also two or more sites.

An equipment is an object (apparatus, device, or system, etc.) that can be used at a site. For example, a communication terminal refers to equipment that enables communication between a participant at one site and another participant at another site. In the present embodiment, the term "remote conference apparatus" will be used.

Starting the usage of a site means that a person who can use a site according to a reservation, has started using the reserved site. In the present embodiment, the term "check in" will be used. Registration of starting the usage will be expressed by the term "checked in" in the present embodiment. The usage start request will be expressed by the term "check in request".

Reservation information is information including items necessary for managing the reservation of the equipment. Details will be described later.

A connection request is a request to connect one piece of equipment to another piece of equipment. The connection may be referred to as communication start, conference start, session establishment, calling, etc.

### <Functions-third embodiment>

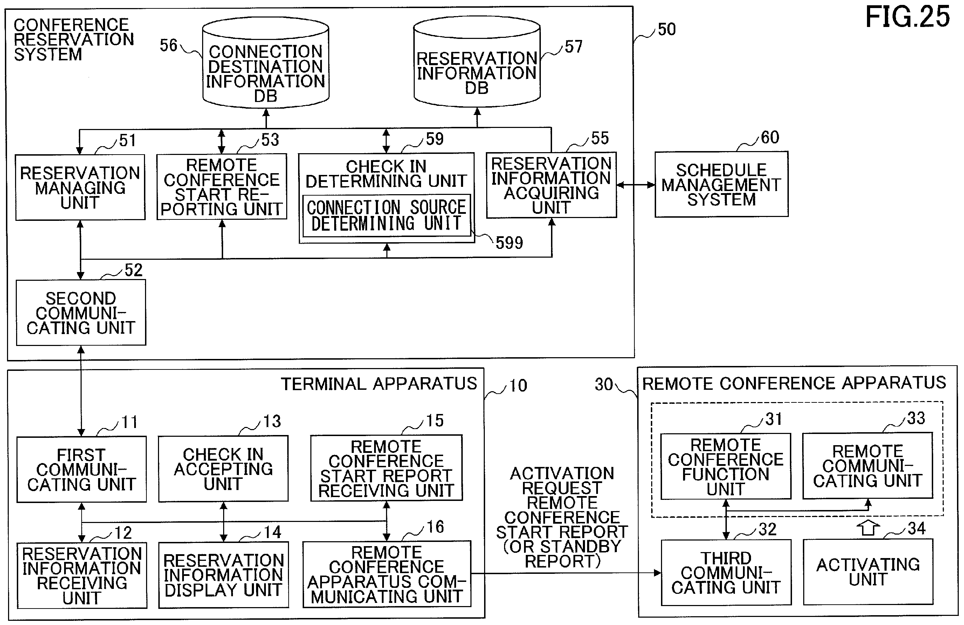

Next, functions of the terminal apparatus 10, the conference reservation system 50, and the remote conference apparatus 30 will be described with reference to FIG. 25. FIG. 25 is an example of a functional block diagram illustrating functions of the terminal apparatus 10, the conference reservation system 50, and the remote conference apparatus 30 in a block form.

### «Functions of conference reservation system-third embodiment»

The conference reservation system 50 includes a reservation managing unit 51, a second communicating unit 52, a remote conference start reporting unit 53, a check in determining unit 59, and a reservation information acquiring unit 55. Each of these functional units included in the conference reservation system 50 is a function or a means implemented by any one of the constituent elements illustrated in FIG. 4 operating according to a command from the CPU 206 in accordance with a program loaded in the RAM 204 from the HDD 208. This program is distributed from a server for program distribution or distributed in a state of being stored in a storage medium. Furthermore, the conference reservation system 50 includes a reservation information DB 57 and a connection destination information DB 56 held in the HDD 208, or the RAM 204, etc.

The second communicating unit 52 transmits and receives various kinds of data to and from the terminal apparatus 10 via the in-house networks NA and NB and the Internet i. In the present embodiment, the second communicating unit 52 transmits, to the terminal apparatus 10, at least the reservation information on the current day, and receives a check in request from the terminal apparatus 10. Furthermore, the second communicating unit 52 transmits an activation request, a standby report, and a remote conference start report to the terminal apparatus 10.

The reservation information acquiring unit 55 acquires reservation information from the schedule management system 60. The reservation information of each company is registered in the schedule management system 60, and, therefore, the reservation information acquiring unit 55 specifies an account (user name and password) of the schedule management system 60 registered in advance for each company to log into the schedule management system 60, and acquires the reservation information registered in association with an account having the domain included in the account. For example, when the user name of the account in the schedule management system 60 registered in advance for each company is "a@xfood.com", the reservation information acquiring unit 55 acquires the reservation information registered by an account "xxx@xfood.com" (xxx is optional).

Note that the reservation information acquiring unit 55 receives a report at the timing when new reservation information is registered in the schedule management system 60, and accesses the schedule management system 60 to acquire the reservation information. Alternatively, the reservation information acquiring unit 55 may periodically (for example, once per hour) access the schedule management system 60 to acquire the reservation information.

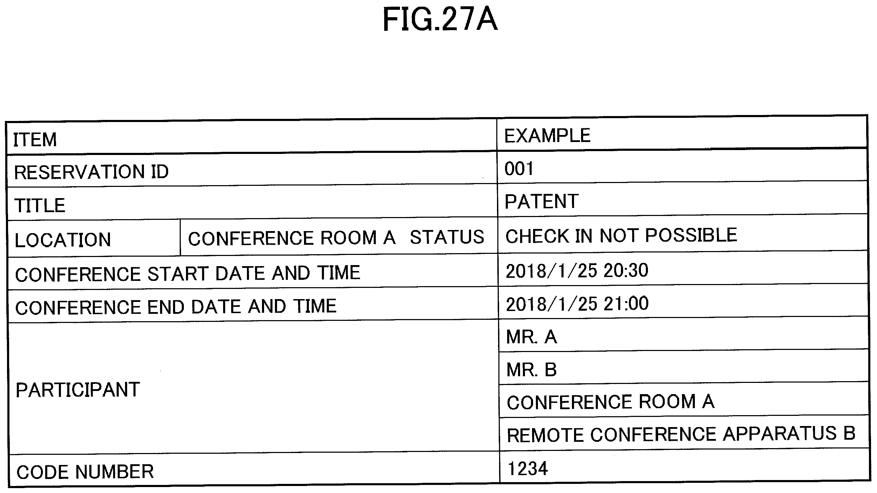

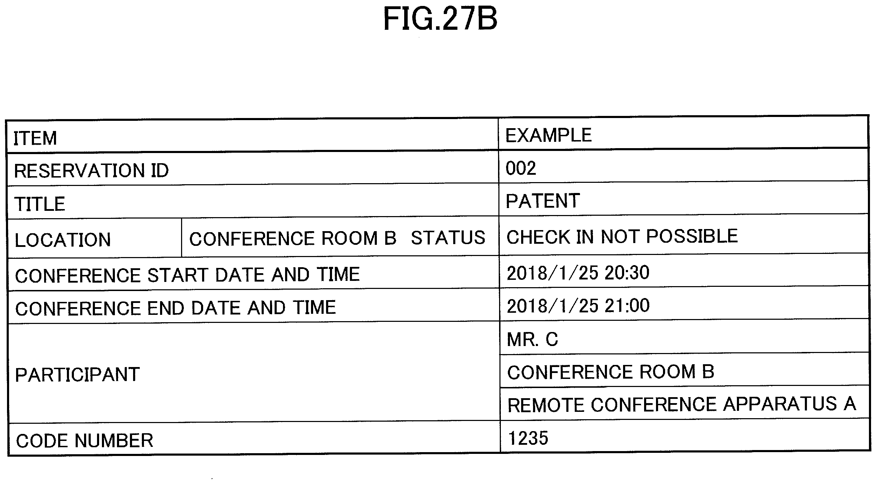

The reservation information acquired by the reservation information acquiring unit 55 is stored in the reservation information DB 57. The reservation information will be described with reference to FIGS. 27A and 27B.

The reservation managing unit 51 acquires a report such as check in from the terminal apparatus 10, and determines whether check in can be performed by authenticating the participant with a code number, etc., which will be described later. When it is determined that check in is possible, the status of the reservation information in the reservation information DB 57 is updated to "checked in". The status includes the states of, for example, "check in not possible", "check in possible", "checked in", "on standby for remote conference" (or starting remote conference), and "conference has started".

The check in determining unit 59 identifies, based on the reservation information, the reservation information of the other conference room in which the remote conference is to be held, and determines whether a plurality of conference rooms in which the remote conference is to be held, have become "checked in". When at least two or more conference rooms have become "checked in", the check in determining unit 59 causes a connection source determining unit 599 to determine the remote conference apparatus 30 that is to be the connection source and the remote conference apparatus 30 that is to be the connection destination. For example, when a remote conference is held at two sites, the check in determining unit 59 identifies a plurality of remote conference apparatuses 30 to hold the remote conference, according to the remote conference apparatuses 30 set as participants in two pieces of reservation information.

The check in determining unit 59 includes the connection source determining unit 599. The connection source determining unit 599 determines one of the remote conference apparatuses 30 (connection source) to be connected to the other remote conference apparatus 30 (connection destination). In the remote conference held at two sites, the connection destination is determined if the connection source is determined. The case of three or more sites will be described later. For example, in a state in which a "checked in" remote conference apparatus 30 already exists, it is determined to connect the remote conference apparatus 30, which is newly updated as becoming "checked in", to the remote conference apparatus 30 that has already become "checked in". Note that the remote conference apparatus 30 that is a connection source may be the remote conference apparatus 30 that has become "checked in" earlier, or may be determined in a random manner.

When reservation information updated to "checked in" is detected, first, the remote conference start reporting unit 53 transmits a request to activate the remote conference apparatus 30 of the corresponding conference room, to the terminal apparatus 10 via the second communicating unit 52. Furthermore, the remote conference start reporting unit 53 transmits a remote conference start report, including connection destination information indicating the remote conference apparatus 30 that is the connection destination determined by the connection source determining unit 599, to the remote conference apparatus 30 that is the connection source. Note that a standby report is transmitted via the second communicating unit 52 to the remote conference apparatus 30 that is the connection destination (the remote conference apparatus 30 that is on standby until being connected).

**[Table 1]**

| CONFERENCE ROOM | REMOTE CONFERENCE APPARATUS | CONNECTION DESTINATION INFORMATION |
|---|---|---|
| CONFERENCE ROOM A | REMOTE CONFERENCE APPARATUS A | 399929991000 |
| CONFERENCE ROOM B | REMOTE CONFERENCE APPARATUS B | 399929991001 |
| CONFERENCE ROOM C | REMOTE CONFERENCE APPARATUS C | 399929991002 |
| - | REMOTE CONFERENCE APPARATUS P | 399929991003 |

Table 1 schematically indicates the information stored in the connection destination information DB 56. In the connection destination information DB 56, connection destination information of the remote conference apparatus 30 in each conference room is registered. Therefore, if the remote conference apparatus 30 is registered as a participant, the connection destination information can be identified. This connection destination information is information for identifying the remote conference apparatus that is the connection destination, and the connection destination information is used for connecting the remote conference apparatuses. The connection destination information may be any information by which the connection destination can be identified, such as identification information of the remote conference apparatus itself or identification information on the network of the remote conference apparatus itself such as an IP address, etc., or identification information associated with a user using the remote conference apparatus such as a user ID, etc.

Furthermore, when a conference room is registered as a participant, if this conference room is associated with the remote conference apparatus 30, connection destination information of the remote conference apparatus 30 can be identified. Conference rooms are not associated with the remote conference apparatuses 30 that are not fixed to any conference room.

### «Functions of terminal apparatus-third embodiment»

The terminal apparatus 10 includes a first communicating unit 11, a reservation information receiving unit 12, a check in accepting unit 13, a reservation information display unit 14, a remote conference start report receiving unit 15, and a remote conference apparatus communicating unit 16. Each of these functional units included in the terminal apparatus 10 is a function or a means implemented by any one of the constituent elements illustrated in FIG. 4 operating by a command from the CPU 206 according to a program loaded in the RAM 204 from the HDD 208. This program is distributed from a server for program distribution or distributed in a state of being stored in a storage medium.

The first communicating unit 11 transmits and receives various kinds of data to and from the conference reservation system 50 via the in-house network NA (or NB) and the Internet i. In the present embodiment, for example, the first communicating unit 11 acquires, for example, the reservation information of the current day, from the conference reservation system 50, and transmits a check in request according to an operation of the participant. Furthermore, the first communicating unit 11 receives an activation request, a standby report, and a remote conference start report from the conference reservation system 50.

The reservation information receiving unit 12 communicates with the conference reservation system 50 via the first communicating unit 11, and transmits the identification information (for example, the conference rooms A and B, etc.) of the conference room where the terminal apparatus 10 is installed, etc., to acquire the reservation information of the conference room where the terminal apparatus 10 is installed. The timing of acquiring the reservation information may be periodical, for example, once per minute, or may be acquired according to an operation of the participant. Alternatively, the reservation information may be acquired at the time of activation of the terminal apparatus 10. It is preferable to acquire the reservation information at least once a day.

Furthermore, it is preferable that the reservation information to be acquired includes at least the reservation information of the current day; however, the reservation information may be acquired by the day before. The reservation information for one day does not necessarily have to be acquired at once, the pieces of reservation information may be acquired one by one at different timings. This timing is, for example, 1 hour before, or 30 minutes before, etc., each conference.

In addition to acquiring the reservation information by the pull method, the reservation information acquiring unit 55 may acquire the reservation information by the push method. Furthermore, when the reservation information acquiring unit 55 receives, for example, a report that the reservation information of the current day acquired from the conference reservation system 50 has been updated, the reservation information may be acquired by the pull method.

The reservation information display unit 14 displays the acquired reservation information on the screen (display device) of the terminal apparatus 10. The reservation information display unit 14 always displays the list of the reservation information of the current day. However, the list of reservation information may be not visible in conjunction with the terminal apparatus 10 turning off the power of only the display device, for the purpose of energy saving, when there is no operation for a certain period of time. However, in this case also, the terminal apparatus 10 is in the activated state. The terminal apparatus 10 may display the reservation information according to the operation of the participant or may display the reservation information in conjunction with the entry of a participant into the conference room.

The check in accepting unit 13 accepts, for example, input of a code number reported to participants in advance, or captures an image of a bar code (or a two-dimensional code) including the code number reported to participants in advance to accept input of the code number. The check in accepting unit 13 transmits a check in request together with this code number to the conference reservation system 50 to acquire a report as to whether the check in is permitted. Note that the terminal apparatus 10 may acquire the code number together with the reservation information and may authenticate the code number at the terminal.

After the check in, the remote conference start report receiving unit 15 receives a request to activate the remote conference apparatus 30, from the conference reservation system 50. Furthermore, when the conference reservation system 50 detects check in at two conference rooms in which the remote conference is to be held, the remote conference start report receiving unit 15 receives a remote conference start report including the connection destination information (there are cases of receiving a standby report).

The remote conference apparatus communicating unit 16 transmits a request to activate the remote conference apparatus 30 in the same conference room (own site) as the terminal apparatus 10. Furthermore, the remote conference apparatus communicating unit 16 transmits a remote conference start report including the connection destination information, to the remote conference apparatus 30. Furthermore, when a standby report is acquired from the conference reservation system 50, the remote conference apparatus communicating unit 16 may maintain the remote conference apparatus 30 in an activated state. In this case, the remote conference apparatus 30 in the same conference room (own site) is maintained in a standby state until called from the remote conference apparatus 30 of the other conference room in which the remote conference is to be held. That is, there are cases in which there is no need to do anything in response to the standby report.

In FIG. 25, the remote conference apparatus communicating unit 16 and the remote conference apparatus 30 are directly connected; however, the terminal apparatus 10 and the remote conference apparatus 30 communicate with each other via the first communicating unit 11 through the in-house networks NA and NB such as LAN. In this case, the remote conference apparatus communicating unit 16 transmits an activation request, etc., by HTTP communication, etc., via the Web Application Programming Interface (API) provided by the remote conference apparatus 30. The Web API is a procedure or a rule for calling a certain program via a network. Note that the terminal apparatus 10 and the remote conference apparatus 30 may be connected by a communication cable such as a USB cable, etc.

### «Functions of remote conference apparatus-third embodiment»

The remote conference apparatus 30 includes a remote conference function unit 31, a third communicating unit 32, a remote communicating unit 33, and an activating unit 34. Each of these functional units included in the remote conference apparatus 30 is a function or a means implemented by any one of the constituent elements illustrated in FIG. 3 operating according to a command from the CPU 101 according to a program loaded from the SSD 105 to the RAM 103. This program is distributed from a server for program distribution or distributed in a state of being stored in a storage medium.

The third communicating unit 32 acquires an activation request, a standby report, and a remote conference start report (not necessarily all of these pieces of information are acquired), from the terminal apparatus 10 via the in-house networks NA and NB or a communication cable. Upon acquiring an activation request, the third communicating unit 32 sends an activation request to the activating unit 34, and upon acquiring a remote conference start report or a standby report, the third communicating unit 32 sends the remote conference start report or the standby report to the remote communicating unit 33.

The activating unit 34 activates the remote conference apparatus 30. The remote conference apparatus 30 is in a sleep state before the start of the remote conference, and at least the communication function is operating. The remote conference apparatus 30 is activated to be in a state in which all of the functions can be used, according to the activation request.

The remote communicating unit 33 establishes a session (connection) with the remote conference apparatus 30 in another conference room by using the connection destination information. As a method of establishing a session, for example, there is a method in which connection destination information is transmitted to a management system on the Internet, and the management system calls the remote conference apparatus 30 that is the connection destination. The remote conference apparatus 30 that is the connection destination is in the standby state (activated state), and, therefore, the connection can be started. Note that the connection method is not limited thereto, and any method is sufficient as long as two remote conference apparatuses 30 can communicate with each other. In addition to this, the remote communicating unit 33 transmits and receives image data, audio data, and document data to and from the remote conference apparatus 30 that is the connection destination.

The remote conference function unit 31 provides basic functions for the remote conference apparatus 30 to perform a remote conference. That is, images of the surroundings are captured by the camera to generate image data, sound is acquired from the microphone to generate sound data, and these pieces of data are sent to the remote communicating unit 33. Furthermore, the remote communicating unit 33 displays the received image data on the display 120, and outputs the sound data from the speaker 115.

### <Reservation screen-third embodiment>

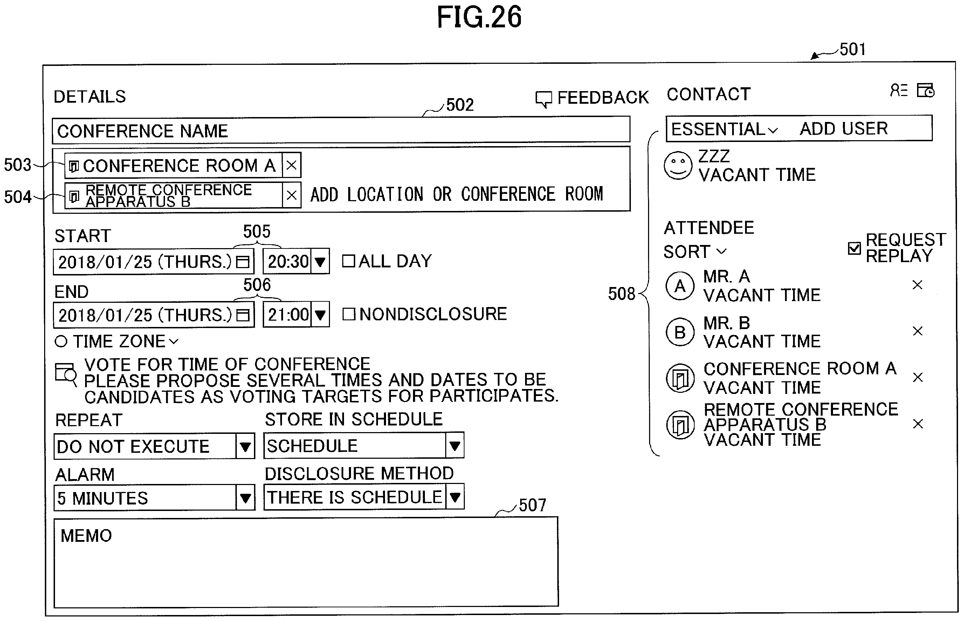

Next, an operation performed by a participant to reserve a conference room will be described with reference to FIG. 26. FIG. 26 illustrates an example of a reservation screen 501 displayed on a Personal Computer (PC) operated by a participant reserving a conference room (reserving person). It is assumed that the reserving person is one of the participants in the conference; however, anyone can make a reservation. The reserving person causes the PC to communicate with the schedule management system 60 and logs in with the account of the company to which the reserving person belongs, issued by the schedule management system 60. Therefore, participants of the same company are identified by the domain included in the account.

The reservation screen 501 includes a title field 502, a conference room field 503, a remote conference apparatus field 504, a conference start date and time field 505, a conference end date and time field 506, a memo field 507, and a participant field 508, etc.
- The title field 502 is a field in which a title, such as the agenda of the conference, is input.
- The conference room field 503 is a field in which the conference room, to be reserved by the participant, is set. A conference room selectable by this company is registered in advance in the schedule management system 60, and the reserving person can select a conference room from a pop-up menu or a pull-down menu, etc. Note that in the conference room field 503, a plurality of conference rooms in which a remote conference is to be held, can be set.
- The remote conference apparatus field 504 is a field in which the remote conference apparatus 30 used by a participant is set. The remote conference apparatus 30 that can be selected by this company is registered in advance in the schedule management system 60, and the reserving person can select the remote conference apparatus 30 from a pop-up menu or a pull-down menu, etc. The reason why the remote conference apparatus is set independently from the conference room is that there is the remote conference apparatus 30 (mobile type) that is not fixed in the conference room. For the remote conference apparatus 30 fixed to the conference room, the schedule management system 60 preferably has the same information as the connection destination information DB 56 so that it is possible to determine whether the remote conference apparatus 30 is fixed to a conference room. Alternatively, the remote conference apparatus 30 is automatically set in accordance with the selection of a conference room.

- The conference start date and time field 505 is a field in which the date on which the conference is held and the time at which the conference is started are set. The date and time can be selected from a pulldown menu, etc.
- The conference end date and time field 506 is a field in which the date on which the conference is held and the time at which the conference is ended are set. The date and time can be selected from a pulldown menu, etc.
- The memo field 507 is a field in which any information related to the conference is set.
- The participant field 508 is a field used for setting participants and for displaying the set participants. The conference room and the remote conference apparatus 30 are resources of the conference room; in the present embodiment, these are handled as one of the participants. Note that the participant is also a user of the conference room, and the participant field 508 is an example of a user field. In FIG. 26, two employees (Mr. A and Mr. B), one conference room (conference room A), and one remote conference apparatus 30B are registered as participants. Note that participants that can be selected by the company are registered in advance in the schedule management system 60, and the reserving person can select participants from a pop-up menu or a pull-down menu, etc.

The conference room set by the reserving person in the conference room field 503 is also applied to the participant field 508, and the remote conference apparatus 30 set in the remote conference apparatus field 504 is also applied to the participant field 508. Conversely, the conference room set by the reserving person in the participant field 508 is also applied to the conference room field 503, and the remote conference apparatus 30 set in the participant field 508 is also applied to the remote conference apparatus field 504.

Note that the reserving person can set the connection destination information per se in the participant field 508 or the conference room field 503. Furthermore, the reserving person can set the connection destination information per se in the memo field 507. That is, the information convertible to the connection destination information, such as the conference room name or the remote conference apparatus name, or the connection destination information, may be included in the reservation information.

### <Example of reservation information-third embodiment>

The reservation information set in the reservation screen 501 as illustrated in FIG. 26, is transmitted to the schedule management system 60 and registered in the schedule management system 60. Then, the conference reservation system 50 acquires the reservation information from the schedule management system 60 as appropriate, and manages the reservation information in the reservation information DB 57.

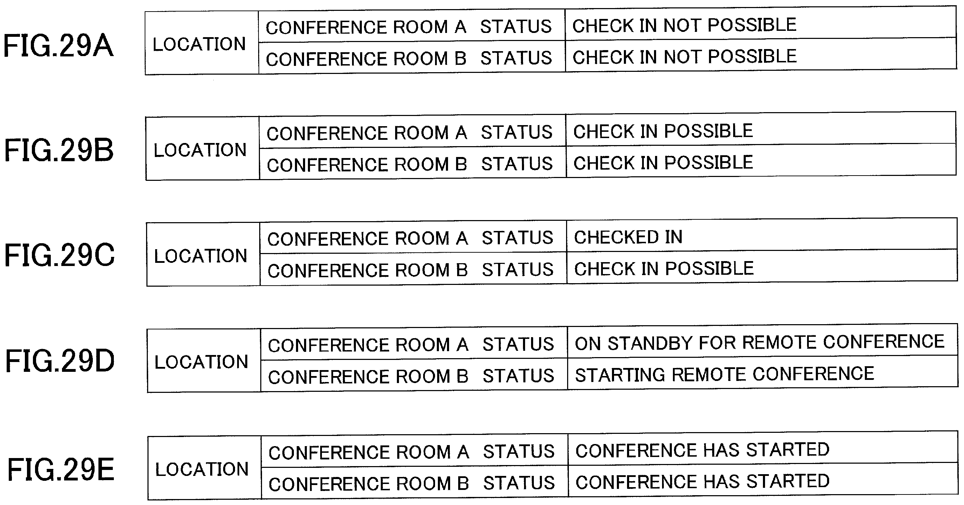

The reservation information will be described with reference to FIGS. 27A and 27B. FIGS. 27A and 27B illustrate examples of reservation information. The reservation information includes items of a reservation ID, a title, a location and a status, a conference start date and time, a conference end date and time, a participant, and a code number. To provide a supplementary explanation, the reservation ID is identification information for identifying each piece of reservation information. Although the reservation ID is assigned by the conference reservation system 50, the reservation ID may be assigned by the schedule management system 60. The items of title to participants are described above with reference to FIG. 26. Among the items, the location means the conference room, and the status indicates the state of the conference room or the equipment. Details of the status will be described with reference to FIGS. 29A to 29E. The code number is reported to the reserving person at the time of reservation, or when the conference reservation system 50 acquires the reservation information from the schedule management system 60, etc.

FIG. 27A illustrates reservation information of the conference room A (reservation information A), and FIG. 27B illustrates reservation information of the conference room B (reservation information B). It is known to the reserving person that the conference, which is reserved with these two pieces of reservation information, is to be held as a remote conference.

The participants in the reservation information A are Mr. A, Mr. B, the conference room A, and the remote conference apparatus 30B. That is, the reserving person sets the remote conference apparatus 30B of the conference room B, in which the remote conference with conference room A is to be held, as a participant in the reservation information A. Similarly, the participants in the reservation information B are Mr. C, the conference room B, and the remote conference apparatus 30A. The reserving person sets the remote conference apparatus 30A of the conference room A, in which the remote conference with the conference room B is to be held, as a participant in the reservation information B.

In this manner, the reserving person knows, from a participant, or another reserving person, etc., that in the conference rooms A and B, a remote conference will be held, and the reserving person sets the remote conference apparatus 30B used in the conference room B and the remote conference apparatus 30A used in the conference room A, as the participants. Even if the remote conference apparatus 30 is not set, if the conference room is set, the conference reservation system 50 can identify the remote conference apparatus 30 from the connection destination information DB 56.

In the case of the reservation information as illustrated in FIGS. 27A and 27B, the check in determining unit 59 can identify the remote conference apparatus 30 that is the connection destination, based on the remote conference apparatuses 30A and 30B that are the participants. For example, when pieces of reservation information of a conference held in the same time period are extracted, and the remote conference apparatus 30 is set as a participant in one of the pieces of reservation information, the check in determining unit 59 can determine that this remote conference apparatus 30 is the connection destination.

Furthermore, when the statuses of conference rooms A and B are changed to "checked in", the connection source determining unit 599 determines the remote conference apparatus 30A in the conference room A that has become "checked in" earlier, to be the connection destination information, and determines the remote conference apparatus 30B in the conference room B that has become "checked in" later, to be the connection source.

Note that in FIGS. 27A and 27B, the participants are described by names (Mr. A, etc.); however, the conference reservation system 50 is able to distinguish uniquely according to a user name included in the account (for example, name.aaa@xfood.com etc.).

### <Screen example of terminal apparatus-third embodiment>

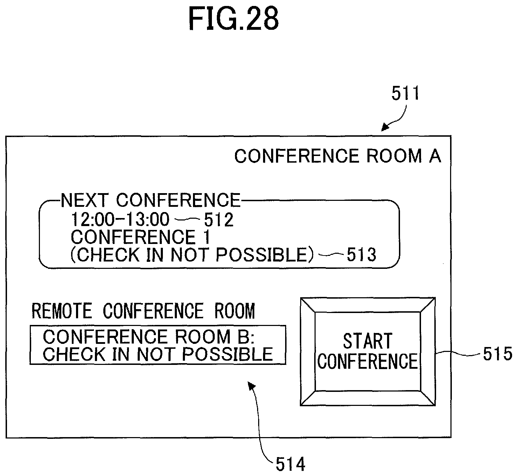

FIG. 28 illustrates an example of a standby screen 511 displayed by the terminal apparatus 10. The standby screen 511 is a screen displayed by the terminal apparatus 10 between conferences. On the standby screen 511, a time period 512 of the next conference from the current time, is displayed. Furthermore, on the standby screen 511, a status 513 of the next conference is displayed. The status 513 is updated by periodically acquiring reservation information from the conference reservation system 50 by the terminal apparatus 10. Participants can check in when this status becomes "check in possible".

The standby screen 511 includes a check in button 515, and when the check in button 515 is pressed, check in is started.

Furthermore, the standby screen 511 includes a remote conference room field 514. In the remote conference room field 514, the check in state, etc., of the conference room at another site with which the conference room at the own site holds the remote conference, is displayed. Therefore, the participant can easily determine whether the counterpart participant of the remote conference has "checked in".

### <Updating status of reservation information-third embodiment>

Next, the updating of the status of the reservation information will be described with reference to FIGS. 29A to 29D. FIGS. 29A to 29D are diagrams illustrating an example of updating the status based on the detection of check in, etc. In FIG. 29A, the status of the conference rooms A and B is "check in not possible". "Check in not possible" means that the conference room cannot be used by participants yet.

In this state, when a predetermined time before the conference start date and time approaches, the reservation managing unit 51 of the conference reservation system 50 changes the status to check in. FIG. 29B illustrates the status changed to "check in possible". "Check in possible" means that participants can use the conference room.

Note that the predetermined time can be appropriately set, for example, as 10 minutes, etc. This status is applied to the standby screen 511 as the terminal apparatus 10 acquires the reservation information, and the participant will be able to check in.

Next, the participant goes to the conference room and inputs, to the terminal apparatus 10, a code number reported in advance, and the terminal apparatus 10 transmits the code number and the reservation ID to the conference reservation system 50. The reservation ID is included in the reservation information of the conference room that has become "check in possible". When the authentication of the code number is successful, the reservation managing unit 51 changes the status to "checked in". Note that a reservation ID may also serve as a code number. In this case, the participant inputs the reservation ID in the terminal apparatus 10.

FIG. 29C illustrates the status changed to "checked in". When the participant has checked into the conference room A, the status of the conference room A becomes "checked in". Similarly, when a participant has checked into the conference room B, the status of the conference room B becomes "checked in". "Checked in" means that the participant has checked into the conference room (the participant is authenticated, by the code number, as the person who has reserved the conference room). Accordingly, when the status of the conference rooms A and B becomes "checked in", the conference reservation system 50 causes the remote conference apparatus 30 to start the remote conference.

When both of the conference rooms A and B have become "checked in", for example, a remote conference start report is transmitted from the conference reservation system 50 to the remote conference apparatus 30B in the conference room B. On the other hand, a standby report is transmitted to the remote conference apparatus 30A to which a connection is to be made. Therefore, as illustrated in FIG. 29D, the status of the conference room A is "on standby for remote conference" and the status of the conference room B is "starting remote conference". "On standby for remote conference" means that the equipment is waiting for a connection from another site.

Note that when the standby report is transmitted from the conference reservation system 50, the terminal apparatus 10 displays "on standby for remote conference" on the display device, and when the remote conference start report is transmitted from the conference reservation system 50, the terminal apparatus 10 displays "starting remote conference" on the display device. Starting remote conference means that the equipment at the own site is making a connection to an equipment at another site.

The remote conference apparatuses 30 in the conference rooms A and B are connected. FIG. 29E illustrates the status when the remote conference apparatuses 30 in the conference rooms A and B have been connected. When the remote conference apparatus 30A completes the connection with the remote conference apparatus 30B, the statuses of the conference rooms A and B are updated to "conference has started". "Conference has started" means that the connection between the equipment at the own site and the equipment at another site has been completed (during communication, during remote conference).

### <Operation procedure-third embodiment>

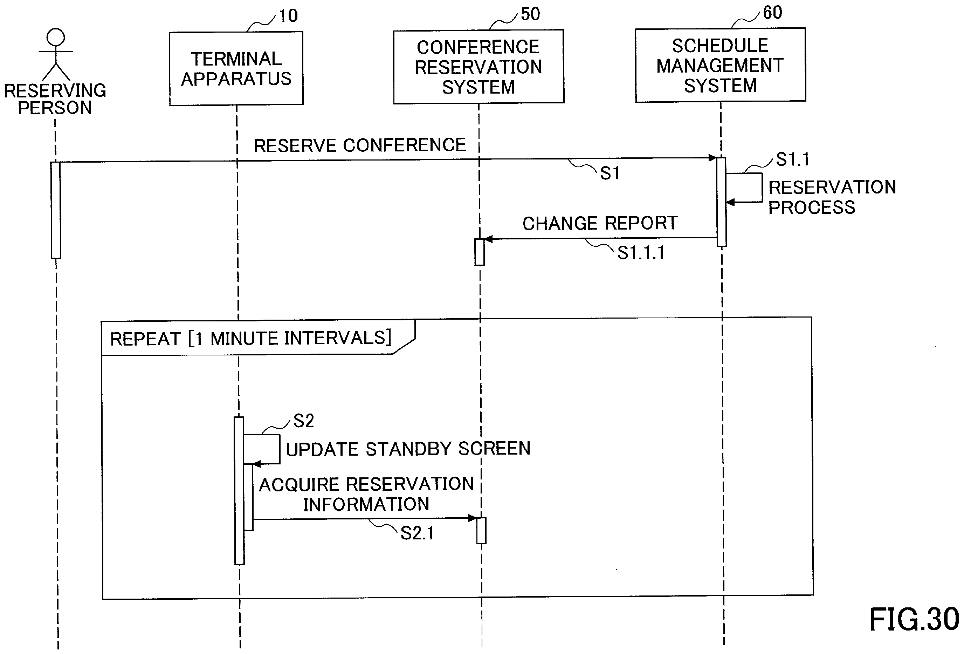

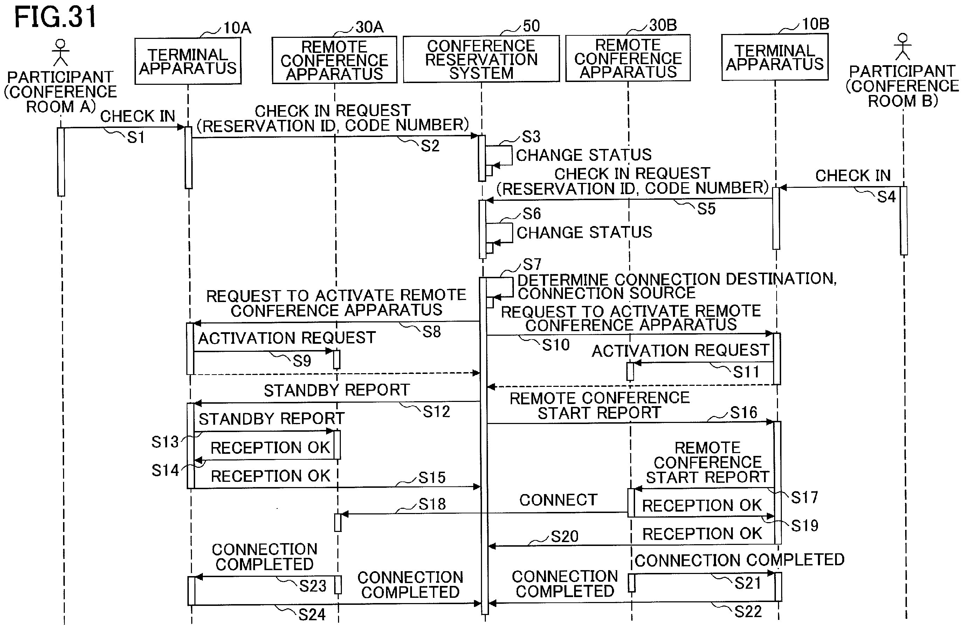

Hereinafter, the operation of the communication system 1 will be described with reference to the sequence diagrams of FIGS. 30 and 31. FIG. 30 is an example of a sequence diagram illustrating a procedure in which a reserving person reserves a conference room and the terminal apparatus 10 acquires reservation information.

Step S1: The reserving person reserves the conference room from the reservation screen 501 illustrated in FIG. 26.

Step S1.1: The schedule management system 60 accepts the reservation and generates reservation information.

Step S1.1.1: The schedule management system 60 reports to the conference reservation system 50 that the reservation information has been added or changed. As described above, the domain of the company using the conference reservation system 50 is registered in the schedule management system 60, and, therefore, the company (conference reservation system 50) is identified from the account of the reserving person who has registered the reservation information.

Step S2: The reservation information display unit 14 of the terminal apparatus 10 repetitively performs a process of updating the standby screen 511.

Step S2.1: During this process, the reservation information receiving unit 12 specifies the identification information of the conference room, and acquires the reservation information from the conference reservation system 50. Note that the repetition of updating of the standby screen 511 is periodically performed, for example, every minute; however, the updating may be performed irregularly. Accordingly, a conference room is newly reserved, and if this conference is the next conference according to the timeline, information indicating this conference is displayed on the standby screen 511. Furthermore, the status is updated as appropriate.

FIG. 31 is an example of a sequence diagram illustrating a procedure in which one of the remote conference apparatuses 30 that performs a remote conference connects to the another one of the remote conference apparatuses 30.

Step S1: First, a participant A operates the terminal apparatus 10A to check into the conference room A.

Step S2: The check in accepting unit 13 of the terminal apparatus 10A accepts the check in, and transmits a check in request including the reservation ID and the code number, to the conference reservation system 50 via the first communicating unit 11. Note that the information for identifying the reservation information need not be the reservation ID, and may be, for example, the identification information of the conference room and the time period.

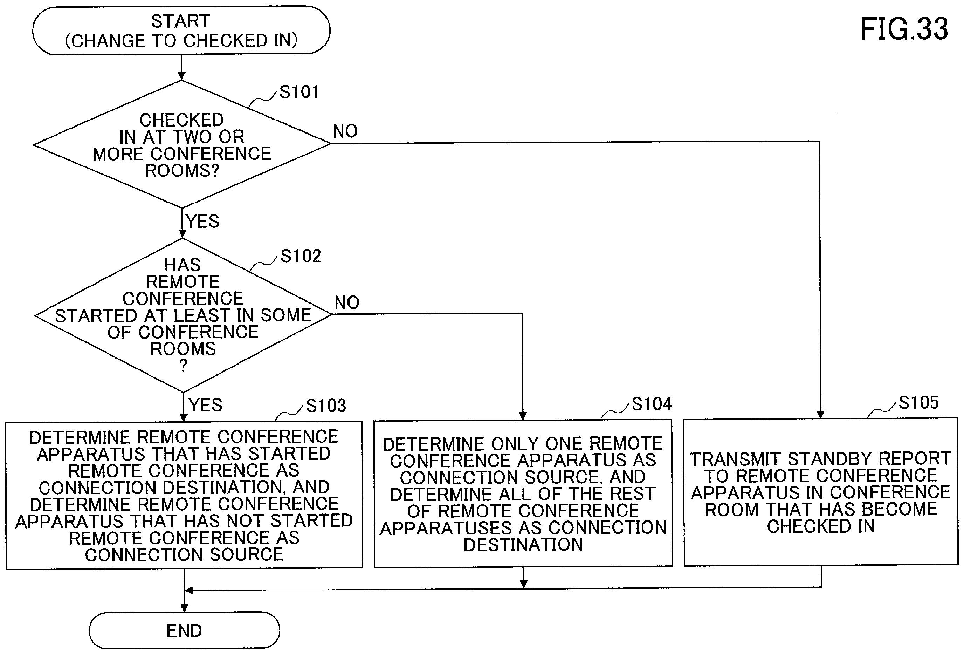

Step S3: The second communicating unit 52 of the conference reservation system 50 acquires the check in request, and the reservation managing unit 51 accepts the check in. In the present embodiment, it is assumed that the authentication based on the code number is successful, and the check in is permitted. The reservation managing unit 51 changes the status of the reservation information identified by the reservation ID to "checked in". The check in determining unit 59 identifies the remote conference apparatus 30B that is the connection destination to which the remote conference apparatus 30A in the conference room A is to be connected, by the reservation information. The connection source determining unit 599 of the conference reservation system 50 does not determine the remote conference apparatus 30 that is the connection source or the remote conference apparatus 30 that is the connection destination, because conference room B, with which the conference room A is to hold the remote conference, has not become "checked in". The process of step S3 will be described in detail with reference to FIG. 33.

Note that in FIG. 31, the reservation information is identified by the reservation ID; however, the reservation information may be identified by the identification information of the conference room and the time period, or the reservation information may be identified by the identification information of the conference room and the code number. Furthermore, when a participant is identified by touching the terminal apparatus 10 with an IC card carried by the participant, the reservation information may be identified from the reservation information and the code number that are associated with the account of the participant. Furthermore, the reservation information may be narrowed down by the current time.

Step S4: Next, the participant B operates the terminal apparatus 10B to check into the conference room B.

Step S5: The check in accepting unit 13 of the terminal apparatus 10B accepts the check in and transmits a check in request including the reservation ID and the code number, to the conference reservation system 50 via the first communicating unit 11.

Step S6: The second communicating unit 52 of the conference reservation system 50 acquires the check in request, and the reservation managing unit 51 accepts the check in. In the present embodiment, it is assumed that the authentication based on the code number is successful and the check in is permitted. The reservation managing unit 51 changes the status of the reservation information of the conference room B identified by the reservation ID, to "checked in".

Step S7: The check in determining unit 59 identifies the remote conference apparatus 30A that is the connection destination to which the remote conference apparatus 30B in the conference room B is to be connected, based on the reservation information. Furthermore, it is determined that both of the conference rooms A and B have become "checked in". Accordingly, the connection source determining unit 599 of the conference reservation system 50 determines the remote conference apparatus 30 that is to be the connection source. Here, it is assumed that the remote conference apparatus 30B in the conference room B is determined to be the connection source, and the remote conference apparatus 30A in the conference room A is determined to be the connection destination.

Step S8: First, the remote conference start reporting unit 53 of the conference reservation system 50 transmits an activation request to the terminal apparatus 10A via the second communicating unit 52. Note that when the remote conference apparatus 30A is always active (does not shift to a sleep state), there is no need to request activation. Furthermore, the activation request can be executed without waiting for the check in at each site, and, therefore, the activation request can be executed for each conference room at the time point when a check in request is made for each conference room.

Step S9: The first communicating unit 11 of the terminal apparatus 10A receives the activation request, and the remote conference apparatus communicating unit 16 transmits the activation request to the remote conference apparatus 30A. Note that the terminal apparatus 10A may transmit a report that the activation is completed, to the conference reservation system 50.

Step S10: Next, the remote conference start reporting unit 53 of the conference reservation system 50 transmits an activation request to the terminal apparatus 10B via the second communicating unit 52. Note that when the remote conference apparatus 30B is always active (does not shift to a sleep state), there is no need to request activation.

Step S11: The first communicating unit 11 of the terminal apparatus 10B receives the activation request, and the remote conference apparatus communicating unit 16 transmits the activation request to the remote conference apparatus 30B. Note that the terminal apparatus 10B may transmit a report that the activation is completed, to the conference reservation system 50.

Step S12: The remote conference apparatuses 30A and 30B of the conference rooms A and B have been activated, and, therefore, the remote conference start reporting unit 53 of the conference reservation system 50 transmits a standby report to the terminal apparatus 10A that is connected to the remote conference apparatus 30A that is the connection destination identified by the connection source determining unit 599.

Step S13: The remote conference start report receiving unit 15 of the terminal apparatus 10A receives the standby report via the first communicating unit 11, and the remote conference apparatus communicating unit 16 transmits the standby report to the remote conference apparatus 30A.

Step S14: The third communicating unit 32 of the remote conference apparatus 30A transmits signals indicating reception OK (hereinafter, "reception OK"), indicating that the standby report has been normally received, to the terminal apparatus 10A. The reception OK may simply be a reception confirmation (200 response of HTTP) on the assumption that the remote conference apparatus 30 is normally operating.

Step S15: The remote conference apparatus communicating unit 16 of the terminal apparatus 10A receives the reception OK, and the first communicating unit 11 transmits the reception OK together with the reservation ID to the conference reservation system 50. Accordingly, the reservation managing unit 51 of the conference reservation system 50 can change the status of the conference room A in the reservation information identified by the reservation ID, to "on standby for remote conference".

Step S16: Next, the remote conference start reporting unit 53 of the conference reservation system 50 transmits a remote conference start report to the terminal apparatus 10B connected to the remote conference apparatus 30B that is the connection source determined by the connection source determining unit 599. The remote conference start reporting unit 53 acquires the connection destination information of the remote conference apparatus 30A that is the connection destination, from the connection destination information DB 56, and includes the connection destination information in the remote conference start report.

Step S17: The remote conference start report receiving unit 15 of the terminal apparatus 10A receives the remote conference start report via the first communicating unit 11, and the remote conference apparatus communicating unit 16 transmits a remote conference start report to the remote conference apparatus 30B.

Step S18: The third communicating unit 32 of the remote conference apparatus 30B receives the remote conference start report, and the remote communicating unit 33 connects to the remote conference apparatus 30A by using the connection destination information.

Step S19: The third communicating unit 32 of the remote conference apparatus 30B transmits reception OK indicating that the remote conference start report has been normally received, to the terminal apparatus 10B. The reception OK may simply be a reception confirmation (200 response of HTTP) on the assumption that the remote conference apparatus 30 is normally operating; however, preferably, reception OK means that connection with the remote conference apparatus 30A has been completed.

Step S20: The remote conference apparatus communicating unit 16 of the terminal apparatus 10B receives reception OK, and the first communicating unit 11 transmits reception OK together with the reservation ID to the conference reservation system 50. Accordingly, the reservation managing unit 51 of the conference reservation system 50 can change the status of the conference room B in the reservation information identified by the reservation ID, to "starting remote conference".

Step S21: The remote communicating unit 33 of the remote conference apparatus 30B completes the connection with the remote conference apparatus 30A. The third communicating unit 32 of the remote conference apparatus 30B transmits signals indicating connection completed (hereinafter, "connection completed") to the terminal apparatus 10B.

Step S22: The remote conference apparatus communicating unit 16 of the terminal apparatus 10B receives connection completed and transmits connection completed together with the reservation ID, to the conference reservation system 50 via the first communicating unit 11. Accordingly, the reservation managing unit 51 of the conference reservation system 50 can change the status of the conference room B in the reservation information identified by the reservation ID, to "remote conference has started".

Step S23: Similarly, the remote communicating unit 33 of the remote conference apparatus 30A completes the connection with the remote conference apparatus 30B. The third communicating unit 32 of the remote conference apparatus 30A transmits connection completed to the terminal apparatus 10A.

Step S24: The remote conference apparatus communicating unit 16 of the terminal apparatus 10A receives connection completed, and transmits the connection completed together with the reservation ID to the conference reservation system 50 via the first communicating unit 11. Accordingly, the reservation managing unit 51 of the conference reservation system 50 can change the status of the conference room A in the reservation information identified by the reservation ID, to "remote conference has started". Note that when the terminal apparatus 10B completes the connection, the terminal apparatus 10A also completes the connection, and, therefore, the terminal apparatus 10A that is the connection destination does not have to transmit the connection completed to the conference reservation system 50.

Furthermore, steps S8 and S10 are in no particular order, steps S12 and S16 are in no particular order, and steps S21 and S23 are in no particular order.

As described above, a remote conference can be started after check in is completed in each conference room.

Note that when a remote conference is held at three or more sites, as one method, the conference reservation system 50 accepts the check in of all of the conference rooms, and then performs the processes from and beyond step S7. In this case, the connection source determining unit 599 determines all of the other remote conference apparatuses 30, except for that of one site, as the connection destinations, and determines the one site as the connection source. A standby report is transmitted to the connection destinations, and a remote conference start report including connection destination information of all of the other remote conference apparatuses 30, is transmitted to the connection source.

Furthermore, when a remote conference is held at three or more bases, as another method, if a "checked in" conference room already exists, the conference reservation system 50 may connect the remote conference apparatus 30 of a conference room that is newly detected as being "checked in", to the remote conference apparatus 30 of the conference room that has already been "checked in".

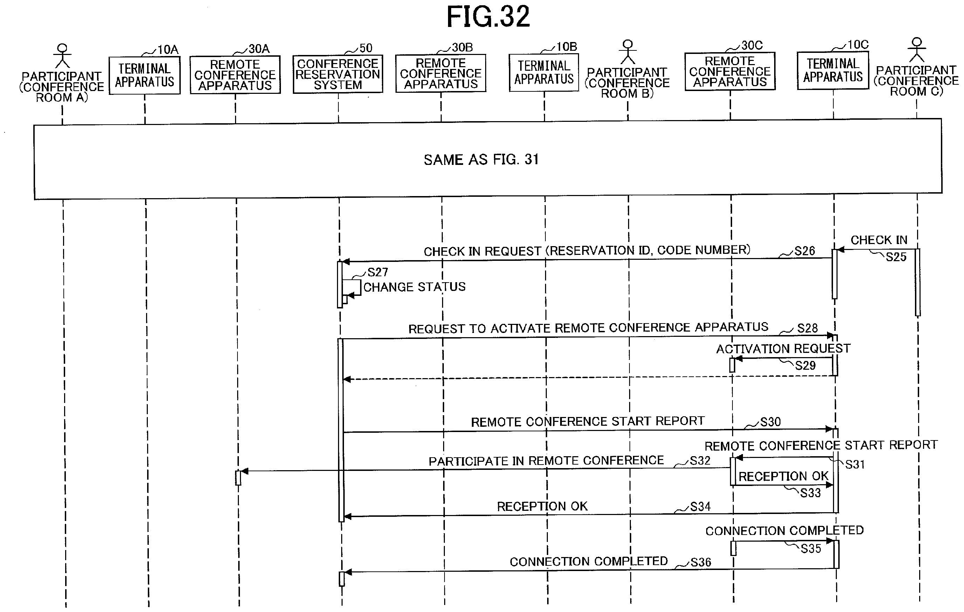

FIG. 32 is an example of a sequence diagram illustrating a procedure in which the remote conference apparatus 30 of the third site connects to the other remote conference apparatuses 30. In the description of FIG. 32, mainly the differences from FIG. 31 will be described. The processes of steps S1 to S24 may be the same as in FIG. 31.

Step S25: Next, a participant C operates the terminal apparatus 10C to check into the conference room C.

Step S26: The check in accepting unit 13 of the terminal apparatus 10C accepts the check in and transmits a check in request including the reservation ID and the code number, to the conference reservation system 50 via the first communicating unit 11.

Step S27: The second communicating unit 52 of the conference reservation system 50 acquires the check in request, and the reservation managing unit 51 accepts the check in. In the present embodiment, it is assumed that the authentication based on the code number is successful and the check in is permitted. The reservation managing unit 51 changes the status of the reservation information identified by the reservation ID to "checked in". The check in determining unit 59 identifies the remote conference apparatuses 30A and 30B that are the connection destinations to which the remote conference apparatus 30C in conference room C is to be connected, based on the reservation information. In the case where the reserving person sets only one of the remote conference apparatuses 30A and 30B in the reservation information, either one is to be identified.

Step S28: The remote conference start reporting unit 53 of the conference reservation system 50 transmits an activation request to the terminal apparatus 10C via the second communicating unit 52. Note that when the remote conference apparatus 30C is always active (does not shift to a sleep state), there is no need to request activation.

Step S29: The first communicating unit 11 of the terminal apparatus 10C receives the activation request, and the remote conference apparatus communicating unit 16 transmits the activation request to the remote conference apparatus 30C. Note that the terminal apparatus 10C may transmit a report that the activation is completed, to the conference reservation system 50.

Step S30: The check in determining unit 59 determines that the conference rooms A and B with which the conference room C is to hold the remote conference, have already become "checked in". The connection source determining unit 599 of the conference reservation system 50 determines the remote conference apparatus 30C that has become "checked in" later, to be the remote conference apparatus 30 that is the connection source. Furthermore, the connection source determining unit 599 may determine either one of the remote conference apparatuses 30A and 30B, to be the connection destination. For example, one of the remote conference apparatuses 30A and 30B set in the reservation information of the conference room C, is determined to be the connection destination. Depending on the specification of the remote conference apparatus 30, both are set as connection destinations. Note that either one of the remote conference apparatuses 30A and 30B may be set as the connection source, and the remote conference apparatus 30C may be set as the connection destination. The remote conference start reporting unit 53 of the conference reservation system 50 transmits a remote conference start report to the terminal apparatus 10C connected to the remote conference apparatus 30C that is the connection source determined by the connection source determining unit 599. The remote conference start reporting unit 53 acquires the connection destination information of, for example, the remote conference apparatus 30A that is the connection destination, from the connection destination information DB 56, and includes the connection destination information in the remote conference start report.

Step S31: The remote conference start report receiving unit 15 of the terminal apparatus 10C receives the remote conference start report via the first communicating unit 11, and the remote conference apparatus communicating unit 16 transmits the remote conference start report to the remote conference apparatus 30C.

Step S32: The third communicating unit 32 of the remote conference apparatus 30C receives the remote conference start report, and the remote communicating unit 33 connects to the remote conference apparatus 30A by using the connection destination information.

Step S33: The third communicating unit 32 of the remote conference apparatus 30C transmits reception OK indicating that the remote conference start report has been normally received, to the terminal apparatus 10C.

Step S34: The remote conference apparatus communicating unit 16 of the terminal apparatus 10C receives the reception OK, and the first communicating unit 11 transmits the reception OK together with the reservation ID, to the conference reservation system 50. Accordingly, the reservation managing unit 51 of the conference reservation system 50 can change the status of the conference room C in the reservation information identified by the reservation ID, to "starting remote conference".

Steps S35 and S36: Similar to the processes with respect to the conference rooms A and B in FIG. 31, connection completed is reported to the terminal apparatus 10C and the conference reservation system 50.

In this way, even in the case of three or more sites, by setting, as a connection source, the remote conference apparatus 30 in the conference room where check in is detected, and connecting this connection source remote conference apparatus 30 to the remote conference apparatus 30 of a conference room that has already become "checked in", it is possible to realize a remote conference among multiple sites of three or more sites. The remote conference apparatus 30 to be the connection source may be any remote conference apparatus 30 that has become "checked in".

### «Determination of remote conference apparatuses of connection source and connection destination-third embodiment»

Next, with reference to FIG. 33, a method of determining the remote conference apparatus that is the connection source and the remote conference apparatus that is the connection destination will be described. FIG. 33 is an example of a flowchart illustrating a procedure in which the connection source determining unit 599 determines the remote conference apparatus that is the connection source and the remote conference apparatus that is the connection destination. The process of FIG. 33 starts when the status of the conference room is changed to "checked in".

The connection source determining unit 599 refers to the reservation information whose status has been changed to "checked in", and determines whether two or more conference rooms, in which the remote conference is to be held, have become "checked in" (step S101). When only one conference room has become "checked in", one remote conference apparatus 30 is not to be connected to another remote conference apparatus 30, so the remote conference start reporting unit 53 transmits a standby report to the terminal apparatus 10 of the "checked in" conference room (step S105).

When two or more conference rooms have become "checked in" (YES in S101), the connection source determining unit 599 determines whether the remote conference has started in at least some of the conference rooms (step S102). That is, when a remote conference is to be held in two conference rooms, it is determined whether the remote conference is already being held in two conference rooms, and when a remote conference is to be held in an M number of conference rooms, it is determined whether a remote conference is already being held in an N (≤M) number of conference rooms.

When the determination in step S102 is YES, the connection source determining unit 599 determines the remote conference apparatus 30, which has started the remote conference, to be the connection destination, and determines the remote conference apparatus 30, which has not started the remote conference, to be the connection source (step S103). In the case where there are a plurality of remote conference apparatuses 30 that are connection destinations, one of the remote conference apparatuses 30 may be a connection destination, or all of the remote conference apparatuses 30 may be connection destinations. The number of connection destinations to which a connection is to be made, depends on the specification of the remote conference apparatus 30.

When the determination in step S102 is NO, the connection source determining unit 599 determines only one remote conference apparatus to be the connection source, and determines all other remote conference apparatuses to be connection destinations (step S104). A remote conference start report is transmitted to the remote conference apparatus that is the only one connection source, and a standby report is transmitted to all of the other remote conference apparatuses.

As described above, the conference reservation system 50 controls the conference starting procedure of each site, and, therefore, it is possible to smoothly start a conference at the plurality of sites.

### <Transition of standby screen displayed by terminal apparatus-third embodiment>

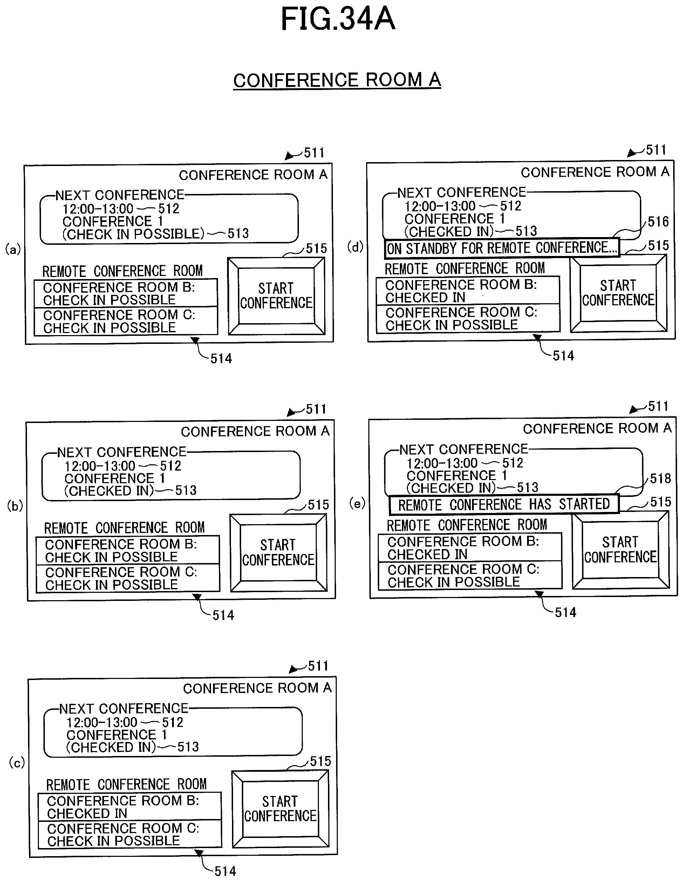

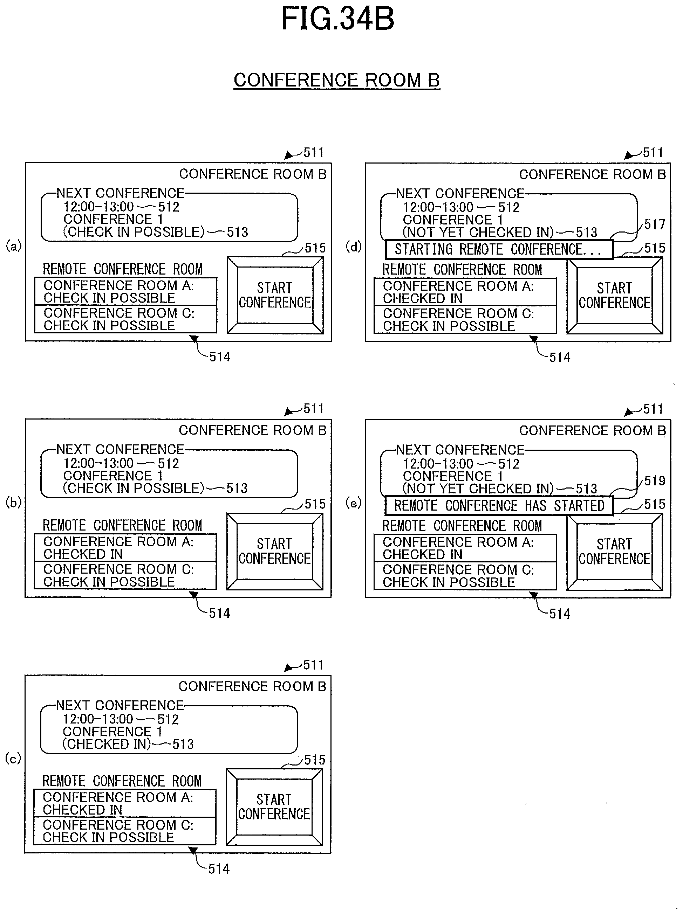

FIGS. 34A and 34B are diagrams for describing examples of the transition of the standby screen 511 displayed by the terminal apparatus 10 when one of the remote conference apparatuses 30 connects to another remote conference apparatus 30. Note that in FIGS. 34A and 34B, a case of a remote conference held at three sites will be described.

First, in FIGS. 34A and 34B, (a) illustrates a state in which none of the conference rooms A to C have been "checked in" ("check in possible").

In FIGS. 34A and 34B, (b) illustrates a state in which the conference room A has become "checked in" and the check in of the conference room A is applied to the standby screen 511 of the terminal apparatus 10B in the conference room B.

In FIGS. 34A and 34B, (c) illustrates a state in which the conference room B has become "checked in" and the check in of the conference room B is applied to the standby screen 511 of the terminal apparatus 10A in the conference room A.

In FIGS. 34A and 34B, (d) illustrates the standby screen 511 in a state where the conference reservation system 50 has transmitted a standby report to the terminal apparatus 10A and has transmitted a conference start report to the terminal apparatus 10B, because the two conference rooms A and B have become "checked in". The terminal apparatus 10A displays a message 516 of "on standby for remote conference" and the terminal apparatus 10B displays a message 517 of "starting remote conference". Accordingly, the participant can recognize the state of the remote conference apparatus 30.

In FIGS. 34A and 34B, (e) illustrates the standby screen 511 displayed by the terminal apparatuses 10A and 10B when the remote conference is started in the conference rooms A and B. Both the terminal apparatuses 10A and 10B display messages 518 and 519 "remote conference has started". Accordingly, the participant can recognize that the remote conference apparatuses 30 have become connected. Note that the message in (e) in FIGS. 34A and 34B is erased after a predetermined time. The messages in (d) and (e) in FIGS. 34A and 34B are transmitted from the conference reservation system 50.

As described above, the terminal apparatus 10 according to the present embodiment can transition the display state of the standby screen according to the connection state of the remote conference.

### <Overview-third embodiment>

As described above, the communication system 1 according to the present embodiment performs a remote conference upon waiting for participants to check in to the respective conference rooms in which a remote conference is to be held, so that a remote conference will not be held with a conference room where nobody is present. Furthermore, when check in is completed at a plurality of sites at the same time, inconveniences may arise such as the possibility that a plurality of sites start connection at the same time and connection cannot be made normally; however, these inconveniences can be improved as the conference reservation system 50 controls conference start procedures at each site. Furthermore, the participant only needs to input a check in operation for using the conference room A to the terminal apparatus 10, so it is possible to omit operations of manually inputting the connection destination information of the remote conference.

### <Other application examples>

For example, in the present embodiment, a plurality of conference rooms, in which a remote conference is to be held, are determined by using the fact that the remote conference apparatus 30 of the other conference room is set in the reservation information of one conference room. However, the connection destination may be determined based on the similarity of pieces of reservation information. For example, with respect to a plurality of conferences held in the same time period, it is possible to determine a plurality of conference rooms in which a remote conference is to be held, based on pieces of reservation information in which one or more participants are common. Alternatively, with respect to a plurality of conferences held in the same time period, it is possible to determine a plurality of conference rooms in which a remote conference is to be held, based on pieces of reservation information including the same title.

Furthermore, the connection destination information is a nonoverlapping number assigned to each remote conference apparatus 30; however, as long as the connection destination information can specify or identify the remote conference apparatus 30, any kind of information can fulfill the function of the connection destination information. For example, an e-mail address or a telephone number may be used. Furthermore, alphabetical letters and symbols may be included in the connection destination information.

Furthermore, according to the present embodiment, in order to start a remote conference, it is assumed that a connection method is performed, in which only one of the two remote conference apparatuses 30A and 30B needs to make a connection to the other party. Therefore, either the remote conference apparatus 30A or the remote conference apparatus 30B is to connect to the other party. When it is necessary for the remote conference apparatus 30A and the remote conference apparatus 30B to make connections to each other, the connection source determining unit 599 determines both the terminal apparatus 10A and the terminal apparatus 10B to be the connection sources, and determines both the terminal apparatus 10B and the terminal apparatus 10A to be connection destinations.

Furthermore, in the present embodiment, it is described that the remote conference apparatus 30 that is the connection source may be determined at the timing of check in, or may be determined in a random manner. However, in some cases, there is the remote conference apparatus 30 that can only wait for a connection due to the original specification, and the remote conference apparatus 30 having a function of starting a connection. In such a case, the remote conference apparatus 30 having a function of starting a connection, is determined to be the connection destination.

Furthermore, the configuration example of FIGS. 5 and 25, etc., indicated in the above embodiment is divided according to the main functions to facilitate the understanding of processes by the terminal apparatus 10, the conference reservation system 50, and the remote conference apparatus 30. The present invention is not limited by how the process units are divided or the names of the process units. The processes of the terminal apparatus 10, the conference reservation system 50, and the remote conference apparatus 30 may be further divided into many process units according to the process contents. Furthermore, the process units may be divided such that a single process unit further includes many processes.

Furthermore, the communication system 1 may include a plurality of the conference reservation systems 50, or the functions of one conference reservation system 50 may be distributed among a plurality of server apparatuses.

The reservation information DB 57 is an example of a reservation information storage unit, the connection destination identifying unit 54 or the reservation information comparing unit 58 is an example of a communication terminal identifying unit, the remote conference start reporting unit 53 is an example of a connection request reporting unit, the check in accepting unit 13 is an example of an accepting unit, the first communicating unit 11 is an example of a first communicating unit, the second communicating unit 52 is an example of a second communicating unit, the reservation managing unit 51 is an example of a reservation managing unit, the connection destination information DB 56 is an example of an association information storage unit, the connection source determining unit 599 is an example of a connection source determining unit, the reservation information receiving unit 12 is an example of the reservation information acquiring unit, and the reservation information display unit 14 is an example of a reservation information display unit.

According to one embodiment of the present invention, a communication system in which equipment is connected after the participant becomes ready, can be provided.

The communication system and the information processing apparatus are not limited to the specific embodiments described in the detailed description, and variations and modifications may be made, provided that they fall under the scope of the accompanying claims.

## Claims

1. A communication system (1) in which a terminal apparatus (10) and a conference reservation system (50) communicate with each other via a network, the terminal apparatus (10) being configured to connect to a first remote conference apparatus (30A), the first remote conference apparatus (30A) being configured to perform communication and to transmit and receive information with a second remote conference apparatus (30B) via the network, wherein
the conference reservation system (50) includes:
a reservation information storage unit (57) configured to store reservation information relating to reservation of each site where the first remote conference apparatus (30A) is disposed;
a connection destination identifying unit (54, 58) configured to identify the second remote conference apparatus (30B) to be a connection destination of the first remote conference apparatus (30A), based on the reservation information; and
a connection request reporting unit (53) configured to transmit, to the terminal apparatus (10), a connection request to connect the first remote conference apparatus (30A) to the second remote conference apparatus (30B) identified by the connection destination identifying unit (54, 58),
wherein
the terminal apparatus (10) is configured to communicate, via the network, with the first remote conference apparatus (30A) disposed at each of a plurality of the sites, and the terminal apparatus (10) includes:
an accepting unit (13) configured to accept a usage start request to start using the site; and
a first communication unit (11) configured to transmit, to the conference reservation system (50), the usage start request to start using the site accepted by the accepting unit (13), and
wherein
the reservation information storage unit (57) is configured to store pieces of the reservation information respectively relating to the reservation of the plurality of the sites,
the connection request reporting unit (53) is configured to transmit, to the terminal apparatus (10) of at least one of the plurality of the sites, the connection request to connect the first remote conference apparatus (30A) to the second remote conference apparatus (30B) among the remote conference apparatuses (30A, 30B) respectively disposed at the plurality of the sites for which the usage start of the corresponding site is registered, upon determining that the usage start is registered in the pieces of the reservation information of at least two or more sites among the plurality of the sites at which the remote conference apparatuses (30A, 30B) configured to communicate with each other are respectively disposed, and wherein the conference reservation system (50) further includes:
a second communication unit (52) configured to receive, from the terminal apparatus, the usage start request to start using the site;
a reservation managing unit (51) configured to register, in the reservation information of the site for which the usage start request is transmitted, usage start of the corresponding site, upon receiving the usage start request by the second communication unit (52), wherein the reservation managing unit (51) is configured to register connection completed in the reservation information, upon receiving, from the terminal apparatus (10), the connection completed indicating that connection between the first remote conference apparatus (30A) and the second remote conference apparatus (30B) at another site among the plurality of the sites is completed,
**characterized in that**
the conference reservation system (50) further includes a connection source determining unit (599) configured to determine, as a connection source, a third remote conference apparatus (30C) at one site among the plurality of the sites for which the usage start is registered, and to determine, as the connection destination, at least one of the remote conference apparatuses (30A, 30B) at all of one or more other sites among the plurality of the sites for which the usage start is registered, upon determining that the connection completed is not registered for any of the pieces of the reservation information of the plurality of the sites for which the usage start is registered, wherein the connection source determining unit (599) of the conference reservation system (50) is configured to:
determine, as the connection source, the third remote conference apparatus (30C) at the site for which the usage start is registered at a latest timing, among the plurality of the sites for which the usage start is registered, upon determining that the connection completed is not registered in any of the pieces of the reservation information for which the usage start of the corresponding site is registered.

2. The communication system (1) according to claim 1, wherein
the first communication unit (11) of the terminal apparatus (10) is configured to:
acquire, from the conference reservation system (50), before accepting the usage start request, reservation identification information of the reservation information relating to the reservation of the site for which the terminal apparatus (10) is set; and
transmit the reservation identification information to the conference reservation system (50), upon accepting the usage start request, and
the reservation managing unit (51) of the conference reservation system (50) is configured to:
register, in the reservation information identified by the reservation identification information, the usage start of the corresponding site.

3. The communication system (1) according to any one of claims 1 to 2, wherein
the reservation information includes identification information of the first remote conference apparatus (30A), and
the connection destination identifying unit (54, 58) of the conference reservation system (50) is configured to:
identify the second remote conference apparatus (30B) to be the connection destination of the first remote conference apparatus (30A) disposed at one site among the sites, based on the identification information of the first remote conference apparatus (30A) included in the reservation information.

4. The communication system (1) according to claim 3, wherein
the reservation information relating to the reservation of each of the sites includes the identification information of the first remote conference apparatus (30A) of the one site among the sites and the identification information of the second remote conference apparatus (30B), and
the connection destination identifying unit (54, 58) of the conference reservation system (50) is configured to:
acquire, from the reservation information, the identification information of the second remote conference apparatus (30B), as the connection destination of the first remote conference apparatus (30A) disposed at the one site among the sites.

5. The communication system (1) according to claim 3, wherein
the reservation information of the one site among the sites includes the identification information of the second remote conference apparatus (30B), and the reservation information of another site among the sites where the second remote conference apparatus (30B) is disposed includes the identification information of the first remote conference apparatus (30A) disposed at the one site among the sites, and
the connection destination identifying unit (54, 58) of the conference reservation system (50) is configured to:
acquire, from the reservation information of the one site among the sites, the identification information of the second remote conference apparatus (30B) disposed at the another site among the sites, as the connection destination of the first remote conference apparatus (30A) disposed at the one site among the sites.

6. The communication system (1) according to claim 4 or 5, wherein
the reservation information includes a user field in which a user using the first remote conference apparatus (30A) is set, and
the identification information of the first remote conference apparatus (30A) is set in the user field.

7. The communication system (1) according to claim 1, wherein
the reservation information includes a user field in which a user using the first remote conference apparatus (30A) is set, and
the connection destination identifying unit (54, 58) of the conference reservation system (50) is configured to:
identify the second remote conference apparatus (30B) of the another site among the sites to be the connection destination of the first remote conference apparatus (30A) disposed at the one site among the sites, by identifying the reservation information in which the another site among the sites is reserved in a same time period as indicated in the reservation information of the one site among the sites and in which one or more users indicated in the user field is overlapping one or more users indicated in the reservation information of the one site among the sites.

8. The communication system (1) according to claim 1, wherein
the reservation information includes a title field in which a title of the reservation information is set, and
the connection destination identifying unit (54, 58) of the conference reservation system (50) is configured to:
identify the second remote conference apparatus (30B) of the another site among the sites to be the connection destination of the first remote conference apparatus (30A) disposed at the one site among the sites, by identifying the reservation information in which the another site among the sites is reserved in a same time period as indicated in the reservation information of the one site among the sites and in which the title is the same as the title of the reservation information of the one site among the sites.

9. An conference reservation system (50) that communicates with a terminal apparatus (10) via a network, the terminal apparatus (10) being configured to connect to a first remote conference apparatus (30A), the first remote conference apparatus (30A) being configured to perform communication and to transmit and receive information with a second remote conference apparatus (30B) via the network, wherein
the conference reservation system (50) includes:
a reservation information storage unit (57) configured to store reservation information relating to reservation of each site where the first remote conference apparatus (30A) is disposed;
a connection destination identifying unit (54, 58) configured to identify the second remote conference apparatus (30B) to be a connection destination of the first remote conference apparatus (30A), based on the reservation information; and
a connection request reporting unit (53) configured to transmit, to the terminal apparatus, a connection request to connect the first remote conference apparatus (30A) to the second remote conference apparatus (30B) identified by the connection destination identifying unit (54, 58),
wherein
the reservation information storage unit (57) is configured to store pieces of the reservation information respectively relating to the reservation of the plurality of the sites,
the connection request reporting unit (53) is configured to transmit, to the terminal apparatus (10) of at least one of the plurality of the sites, the connection request to connect the first remote conference apparatus (30A) to the second remote conference apparatus (30B) among the remote conference apparatuses (30A, 30B) respectively disposed at the plurality of the sites for which the usage start of the corresponding site is registered, upon determining that the usage start is registered in the pieces of the reservation information of at least two or more sites among the plurality of the sites at which the remote conference apparatuses (30A, 30B) configured to communicate with each other are respectively disposed, and wherein the conference reservation system (50) further includes:
a second communication unit (52) configured to receive, from the terminal apparatus, a usage start request to start using the site;
a reservation managing unit (51) configured to register, in the reservation information of the site for which the usage start request is transmitted, usage start of the corresponding site, upon receiving the usage start request by the second communication unit (52), wherein the reservation managing unit (51) is configured to register connection completed in the reservation information, upon receiving, from the terminal apparatus (10), the connection completed indicating that connection between the first remote conference apparatus (30A) and the second remote conference apparatus (30B) at another site among the plurality of the sites is completed,
**characterized by**
a connection source determining unit (599) configured to determine, as a connection source, a third remote conference apparatus (30C) at one site among the plurality of the sites for which the usage start is registered, and to determine, as the connection destination, at least one of the remote conference apparatuses (30A, 30B) at all of one or more other sites among the plurality of the sites for which the usage start is registered, upon determining that the connection completed is not registered for any of the pieces of the reservation information of the plurality of the sites for which the usage start is registered, wherein the connection source determining unit (599) of the conference reservation system (50) is configured to:
determine, as the connection source, the third remote conference apparatus (30C) at the site for which the usage start is registered at a latest timing, among the plurality of the sites for which the usage start is registered, upon determining that the connection completed is not registered in any of the pieces of the reservation information for which the usage start of the corresponding site is registered.

10. A computer program comprising instructions which, when the program is executed by an conference reservation system (50), cause the conference reservation system (50) to perform functions, the conference reservation system (50) being configured to communicate with a terminal apparatus (10) via a network, the terminal apparatus (10) being configured to connect to a first remote conference apparatus (30A), the first remote conference apparatus (30A) being configured to perform communication and to transmit and receive information with a second remote conference apparatus (30B) via the network, the functions performed by the conference reservation system (50) comprising:
storing reservation information, the reservation information relating to reservation of each site where the first remote conference apparatus (30A) is disposed;
identifying the second remote conference apparatus (30B) to be a connection destination of the first remote conference apparatus (30A), based on the reservation information; and
transmitting, to the terminal apparatus (10), a connection request to connect the first remote conference apparatus (30A) to the second remote conference apparatus (30B) identified to be the connection destination of the first remote conference apparatus (30A),
wherein the functions performed by the conference reservation system (50) further comprise: storing pieces of the reservation information respectively relating to the reservation of the plurality of the sites,
transmitting, to the terminal apparatus (10) of at least one of the plurality of the sites, the connection request to connect the first remote conference apparatus (30A) to the second remote conference apparatus (30B) among the remote conference apparatuses (30A, 30B) respectively disposed at the plurality of the sites for which the usage start of the corresponding site is registered, upon determining that the usage start is registered in the pieces of the reservation information of at least two or more sites among the plurality of the sites at which the remote conference apparatuses (30A, 30B) configured to communicate with each other are respectively disposed;
receiving, from the terminal apparatus, a usage start request to start using the site;
registering, in the reservation information of the site for which the usage start request is transmitted, usage start of the corresponding site, upon receiving the usage start request,
registering connection completed in the reservation information, upon receiving, from the terminal apparatus (10), the connection completed indicating that connection between the first remote conference apparatus (30A) and the second remote conference apparatus (30B) at another site among the plurality of the sites is completed,
**characterized by**
determining by a connection source determining unit (599), as a connection source, a third remote conference apparatus (30C) at one site among the plurality of the sites for which the usage start is registered, and determine, as the connection destination, at least one of the remote conference apparatuses (30A, 30B) at all of one or more other sites among the plurality of the sites for which the usage start is registered, upon determining that the connection completed is not registered for any of the pieces of the reservation information of the plurality of the sites for which the usage start is registered, and
determining by the connection source determining unit (599), as the connection source, the third remote conference apparatus (30C) at the site for which the usage start is registered at a latest timing, among the plurality of the sites for which the usage start is registered, upon determining that the connection completed is not registered in any of the pieces of the reservation information for which the usage start of the corresponding site is registered.

## Patentansprüche

1. Kommunikationssystem (1), in dem ein Endgerät (10) und ein Konferenzreservierungssystem (50) miteinander über ein Netzwerk kommunizieren, wobei das Endgerät (10) so konfiguriert ist, dass es sich mit einer ersten entfernten Konferenzvorrichtung (30A) verbindet, wobei die erste entfernte Konferenzvorrichtung (30A) konfiguriert ist zum Durchführen einer Kommunikation und zum Senden und Empfangen von Informationen mit einer zweiten entfernten Konferenzvorrichtung (30B) über das Netzwerk, wobei das Konferenzreservierungssystem (50) beinhaltet:
eine Reservierungsinformationsspeichereinheit (57), die so konfiguriert ist, dass sie Reservierungsinformationen bezüglich der Reservierung jeder Site speichert, an der die erste entfernte Konferenzvorrichtung (30A) angeordnet ist;
eine Verbindungsziel-Identifizierungseinheit (54, 58), die konfiguriert ist zum Identifizieren der zweiten entfernten Konferenzvorrichtung (30B) als ein Verbindungsziel der ersten entfernten Konferenzvorrichtung (30A), basierend auf den Reservierungsinformationen; und
eine Verbindungsanforderungs-Meldeeinheit (53), die so konfiguriert ist, dass sie an das Endgerät (10) eine Verbindungsanforderung sendet, um die erste entfernte Konferenzvorrichtung (30A) mit der zweiten entfernten Konferenzvorrichtung (30B) zu verbinden, die von der Verbindungsziel-Identifizierungseinheit (54, 58) identifiziert worden ist,
wobei
das Endgerät (10) so konfiguriert ist, dass es über das Netzwerk mit der ersten entfernten Konferenzvorrichtung (30A) kommuniziert, die an jedem der mehreren Sites angeordnet ist, und das Endgerät (10) umfasst:
eine Annahmeeinheit (13), die so konfiguriert ist, dass sie eine Nutzungsstartanforderung annimmt, um mit der Nutzung der Site zu beginnen; und
eine erste Kommunikationseinheit (11), die so konfiguriert ist, dass sie an das Konferenzreservierungssystem (50) die Nutzungsstartanforderung sendet, um mit der Nutzung der von der Annahmeeinheit (13) akzeptierten Site zu beginnen, und
wobei
die Reservierungsinformationsspeichereinheit (57) so konfiguriert ist, dass sie Teile der Reservierungsinformationen speichert, die sich jeweils auf die Reservierung der Vielzahl der Sites beziehen,
die Verbindungsanforderungs-Meldeeinheit (53) so konfiguriert ist, dass sie, an das Endgerät (10) von mindestens einer der mehreren Sites, die Verbindungsanforderung zum Verbinden der ersten entfernten Konferenzvorrichtung (30A) mit der zweiten entfernten Konferenzvorrichtung (30B) unter den entfernten Konferenzvorrichtungen (30A, 30B) sendet, die jeweils an der Vielzahl der Sites angeordnet sind, für die der Nutzungsbeginn der entsprechenden Site registriert ist, bei der Bestimmung, dass der Nutzungsbeginn in den Teilen der Reservierungsinformationen von mindestens zwei oder mehr Sites aus der Vielzahl der Sites registriert ist, an denen jeweils die entfernten Konferenzvorrichtungen (30A, 30B) angeordnet sind, die konfiguriert sind, um miteinander zu kommunizieren, und
wobei das Konferenzreservierungssystem (50) ferner umfasst:
eine zweite Kommunikationseinheit (52), die so konfiguriert ist, dass sie von dem Endgerät die Nutzungsstartanforderung empfängt, um mit der Nutzung der Site zu beginnen;
eine Reservierungsverwaltungseinheit (51), die so konfiguriert ist, dass sie in den Reservierungsinformationen der Site, für die die Nutzungsstartanforderung übertragen wird, den Nutzungsstart der entsprechenden Site bei Empfang der Nutzungsstartanforderung durch die zweite Kommunikationseinheit (52) registriert, wobei die Reservierungsverwaltungseinheit (51) so konfiguriert ist, dass sie die abgeschlossene Verbindung in den Reservierungsinformationen registriert, wenn sie von der Endgerätevorrichtung (10) den Verbindungsabschluss empfängt, der anzeigt, dass diese Verbindung zwischen der ersten entfernten Konferenzvorrichtung (30A) und der zweiten entfernten Konferenzvorrichtung (30B) an einer anderen Site aus der Vielzahl der Sites abgeschlossen ist,
**dadurch gekennzeichnet, dass**
das Konferenzreservierungssystem (50) ferner eine Verbindungsquellen-Bestimmungseinheit (599) umfasst, die konfiguriert ist, um als eine Verbindungsquelle eine dritte entfernte Konferenzvorrichtung (30C) an einer Site aus der Vielzahl der Sites zu bestimmen, für die der Nutzungsbeginn registriert ist, und als Verbindungsziel mindestens eine der entfernten Konferenzvorrichtungen (30A, 30B) an allen von einer oder mehreren anderen Sites aus der Vielzahl der Sites zu bestimmen, für die der Nutzungsbeginn registriert ist, wenn festgestellt wird, dass der Verbindungsabschluss für keinen der Teile der Reservierungsinformationen der Vielzahl der Sites registriert ist, für die der Nutzungsbeginn registriert ist, wobei die Verbindungsquellen-Bestimmungseinheit (599) des Konferenzreservierungssystems (50) konfiguriert ist um:
als die Verbindungsquelle die dritte entfernte Konferenzvorrichtung (30C) an der Site, unter der Vielzahl der Sites, für die der Nutzungsbeginn registriert ist, zu bestimmen, für die der Nutzungsbeginn zu einem spätesten Zeitpunkt registriert ist, wenn bestimmt worden ist, dass der Verbindungsabschluss in keinem der Teile der Reservierungsinformationen registriert ist, für die der Nutzungsbeginn der entsprechenden Seite registriert ist.

2. Kommunikationssystem (1) nach Anspruch 1, wobei
die erste Kommunikationseinheit (11) des Endgeräts (10) konfiguriert ist, um:
von dem Konferenzreservierungssystem (50) vor dem Akzeptieren der Nutzungsstartanforderung Reservierungsidentifikationsinformationen der Reservierungsinformationen in Bezug auf die Reservierung der Site, für die das Endgerät (10) eingestellt ist, zu erlangen; und
die Reservierungsidentifikationsinformationen an das Konferenzreservierungssystem (50) beim Akzeptieren der Nutzungsstartanforderung zu übertragen, und
die Reservierungsverwaltungseinheit (51) des Konferenzreservierungssystems (50) konfiguriert ist, um:
in den durch die Reservierungsidentifikationsinformationen identifizierten Reservierungsinformationen den Nutzungsbeginn der entsprechenden Seite zu registrieren.

3. Kommunikationssystem (1) nach einem der Ansprüche 1 bis 2, wobei
die Reservierungsinformationen Identifikationsinformationen der ersten entfernten Konferenzvorrichtung (30A) enthalten, und
die Verbindungsziel-Identifizierungseinheit (54, 58) des Konferenzreservierungssystems (50) konfiguriert ist zum:
Identifizieren der zweiten entfernten Konferenzvorrichtung (30B) als das Verbindungsziel der ersten entfernten Konferenzvorrichtung (30A), die an einer Site unter den Sites angeordnet ist, basierend auf den Identifikationsinformationen der ersten entfernten Konferenzvorrichtung (30A), die in den Reservierungsinformationen enthalten sind.

4. Kommunikationssystem (1) nach Anspruch 3, wobei
die Reservierungsinformationen sich auf die Reservierung jeder der Sites beziehen, die die Identifikationsinformationen der ersten entfernten Konferenzvorrichtung (30A) der einen Site unter den Sites und die Identifikationsinformationen der zweiten entfernten Konferenzvorrichtung (30B) enthalten, und
die Verbindungsziel-Identifizierungseinheit (54, 58) des Konferenzreservierungssystems (50) konfiguriert ist, um:
aus den Reservierungsinformationen die Identifikationsinformationen der zweiten entfernten Konferenzvorrichtung (30B) als das Verbindungsziel der ersten entfernten Konferenzvorrichtung (30A), die an der einen Site unter den Sites angeordnet ist, zu erlangen.

5. Kommunikationssystem (1) nach Anspruch 3, wobei
die Reservierungsinformationen der einen Site unter den Sites die Identifikationsinformationen der zweiten entfernten Konferenzvorrichtung (30B) enthalten und die Reservierungsinformationen einer anderen Site unter den Sites, an denen die zweite entfernte Konferenzvorrichtung (30B) angeordnet ist, die Identifikationsinformationen der ersten entfernten Konferenzvorrichtung (30A) enthalten, die an der einen Site unter den Sites angeordnet ist, und
die Verbindungsziel-Identifizierungseinheit (54, 58) des Konferenzreservierungssystems (50) konfiguriert ist, um:
aus den Reservierungsinformationen der eine Sites unter den Sites die Identifikationsinformationen der zweiten entfernten Konferenzvorrichtung (30B) zu erlangen, die an der anderen Site unter den Sites angeordnet ist, als das Verbindungsziel der ersten entfernten Konferenzvorrichtung (30A), die an der einen Site unter den Sites angeordnet ist.

6. Kommunikationssystem (1) nach Anspruch 4 oder 5, wobei
die Reservierungsinformationen ein Benutzerfeld enthalten, in dem ein Benutzer eingetragen ist, der die erste entfernte Konferenzvorrichtung (30A) verwendet, und
die Identifikationsinformationen der ersten entfernten Konferenzvorrichtung (30A) in das Benutzerfeld gesetzt werden.

7. Kommunikationssystem (1) nach Anspruch 1, wobei
die Reservierungsinformationen ein Benutzerfeld enthalten, in dem ein Benutzer eingetragen ist, der die erste entfernte Konferenzvorrichtung (30A) verwendet, und
die Verbindungsziel-Identifizierungseinheit (54, 58) des Konferenzreservierungssystems (50) konfiguriert ist zum:
Identifizieren der zweiten entfernten Konferenzvorrichtung (30B) einer anderen Site unter den Sites, als Verbindungsziel der ersten entfernten Konferenzvorrichtung (30A), die an der einen Site unter den Sites angeordnet ist, durch Identifizieren der Reservierungsinformationen, in denen die andere Site unter den Sites in demselben Zeitraum reserviert wird, wie in den Reservierungsinformationen der einen Site unter den Sites angegeben ist, und in denen ein oder mehrere im Benutzerfeld angegebene Benutzer mit einem oder mehreren in den Reservierungsinformationen der einen Site unter den Sites angegebenen Benutzer überlappen.

8. Kommunikationssystem (1) nach Anspruch 1, wobei
die Reservierungsinformationen ein Titelfeld umfassen, in dem ein Titel der Reservierungsinformationen eingestellt ist, und
die Verbindungsziel-Identifizierungseinheit (54, 58) des Konferenzreservierungssystems (50) konfiguriert ist zum:
Identifizieren der zweiten entfernten Konferenzvorrichtung (30B) einer anderen Site unter den Sites, als Verbindungsziel der ersten entfernten Konferenzvorrichtung (30A), die an der einen Site unter den Sites angeordnet ist, durch Identifizieren der Reservierungsinformationen, in denen die andere Site unter den Sites in demselben Zeitraum reserviert wird, wie in den Reservierungsinformationen der einen Site unter den Sites angegeben ist, und in denen der Titel derselbe ist wie der Titel der Reservierungsinformationen der einen Site unter den Sites.

9. Konferenzreservierungssystem (50), das mit einem Endgerät (10) über ein Netzwerk kommuniziert, wobei das Endgerät (10) so konfiguriert ist, dass es sich mit einer ersten entfernten Konferenzvorrichtung (30A) verbindet, wobei die erste entfernte Konferenzvorrichtung (30A) konfiguriert ist zum Durchführen einer Kommunikation und zum Senden und Empfangen von Informationen mit einer zweiten entfernten Konferenzvorrichtung (30B) über das Netzwerk, wobei das Konferenzreservierungssystem (50) beinhaltet:
eine Reservierungsinformationsspeichereinheit (57), die so konfiguriert ist, dass sie Reservierungsinformationen bezüglich der Reservierung jeder Site speichert, an der die erste entfernte Konferenzvorrichtung (30A) angeordnet ist;
eine Verbindungsziel-Identifizierungseinheit (54, 58), die konfiguriert ist zum Identifizieren der zweiten entfernten Konferenzvorrichtung (30B) als ein Verbindungsziel der ersten entfernten Konferenzvorrichtung (30A), basierend auf den Reservierungsinformationen; und
eine Verbindungsanforderungs-Meldeeinheit (53), die so konfiguriert ist, dass sie an das Endgerät (10) eine Verbindungsanforderung sendet, um die erste entfernte Konferenzvorrichtung (30A) mit der zweiten entfernten Konferenzvorrichtung (30B) zu verbinden, die von der Verbindungsziel-Identifizierungseinheit (54, 58) identifiziert worden ist,
wobei
die Reservierungsinformationsspeichereinheit (57) so konfiguriert ist, dass sie Teile der Reservierungsinformationen speichert, die sich jeweils auf die Reservierung der Vielzahl der Sites beziehen,
die Verbindungsanforderungs-Meldeeinheit (53) so konfiguriert ist, dass sie, an das Endgerät (10) von mindestens einer der mehreren Sites, die Verbindungsanforderung zum Verbinden der ersten entfernten Konferenzvorrichtung (30A) mit der zweiten entfernten Konferenzvorrichtung (30B) unter den entfernten Konferenzvorrichtungen (30A, 30B) sendet, die jeweils an der Vielzahl der Sites angeordnet sind, für die der Nutzungsbeginn der entsprechenden Site registriert ist, bei der Bestimmung, dass der Nutzungsbeginn in den Teilen der Reservierungsinformationen von mindestens zwei oder mehr Sites aus der Vielzahl der Sites registriert ist, an denen jeweils die entfernten Konferenzvorrichtungen (30A, 30B) angeordnet sind, die konfiguriert sind, um miteinander zu kommunizieren,
wobei das Konferenzreservierungssystem (50) ferner umfasst:
eine zweite Kommunikationseinheit (52), die so konfiguriert ist, dass sie von dem Endgerät die Nutzungsstartanforderung empfängt, um mit der Nutzung der Site zu beginnen;
eine Reservierungsverwaltungseinheit (51), die so konfiguriert ist, dass sie in den Reservierungsinformationen der Site, für die die Nutzungsstartanforderung übertragen wird, den Nutzungsstart der entsprechenden Site bei Empfang der Nutzungsstartanforderung durch die zweite Kommunikationseinheit (52) registriert, wobei die Reservierungsverwaltungseinheit (51) so konfiguriert ist, dass sie die abgeschlossene Verbindung in den Reservierungsinformationen registriert, wenn sie von der Endgerätevorrichtung (10) den Verbindungsabschluss empfängt, der anzeigt, dass diese Verbindung zwischen der ersten entfernten Konferenzvorrichtung (30A) und der zweiten entfernten Konferenzvorrichtung (30B) an einer anderen Site aus der Vielzahl der Sites abgeschlossen ist,
**gekennzeichnet durch**
eine Verbindungsquellen-Bestimmungseinheit (599), die konfiguriert ist, um als eine Verbindungsquelle eine dritte entfernte Konferenzvorrichtung (30C) an einer Site aus der Vielzahl der Sites zu bestimmen, für die der Nutzungsbeginn registriert ist, und als Verbindungsziel mindestens eine der entfernten Konferenzvorrichtungen (30A, 30B) an allen von einer oder mehreren anderen Sites aus der Vielzahl der Sites zu bestimmen, für die der Nutzungsbeginn registriert ist, wenn festgestellt wird, dass der Verbindungsabschluss für keinen der Teile der Reservierungsinformationen der Vielzahl der Sites registriert ist, für die der Nutzungsbeginn registriert ist, wobei die Verbindungsquellen-Bestimmungseinheit (599) des Konferenzreservierungssystems (50) konfiguriert ist um:
als die Verbindungsquelle, die dritte entfernte Konferenzvorrichtung (30C) an der Site, unter der Vielzahl der Sites, für die der Nutzungsbeginn registriert ist, zu bestimmen, für die der Nutzungsbeginn zu einem spätesten Zeitpunkt registriert ist, wenn bestimmt worden ist, dass der Verbindungsabschluss in keinem der Teile der Reservierungsinformationen registriert ist, für die der Nutzungsbeginn der entsprechenden Seite registriert ist.

10. Computerprogramm mit Anweisungen, die, wenn das Programm von einem Konferenzreservierungssystem (50) ausgeführt wird, das Konferenzreservierungssystem (50) veranlassen, Funktionen auszuführen, wobei das Konferenzreservierungssystem (50) konfiguriert ist, um mit einem Endgerät über ein Netzwerk zu kommunizieren (10), wobei das Endgerät (10) so konfiguriert ist, dass es sich mit einer ersten entfernten Konferenzvorrichtung (30A) verbindet, wobei die erste entfernte Konferenzvorrichtung (30A) konfiguriert ist zum Durchführen einer Kommunikation und zum Senden und Empfangen von Informationen mit einer zweiten entfernten Konferenzvorrichtung (30B) über das Netzwerk, wobei die vom Konferenzreservierungssystem (50) durchgeführten Funktionen umfassen:
Speichern von Reservierungsinformationen, wobei sich die Reservierungsinformationen auf die Reservierung jeder Site beziehen, an der die erste entfernte Konferenzvorrichtung (30A) angeordnet ist;
Identifizieren der zweiten entfernten Konferenzvorrichtung (30B) als ein Verbindungsziel der ersten entfernten Konferenzvorrichtung (30A) basierend auf den Reservierungsinformationen; und
Senden einer Verbindungsanforderung an das Endgerät (10), um die erste entfernte Konferenzvorrichtung (30A) mit der zweiten entfernten Konferenzvorrichtung (30B) zu verbinden, die als Verbindungsziel der ersten entfernten Konferenzvorrichtung (30A) identifiziert worden ist,
wobei die von dem Konferenzreservierungssystem (50) durchgeführten Funktionen ferner umfassen: Speichern von Teilen der Reservierungsinformationen, die sich jeweils auf die Reservierung der Vielzahl der Sites beziehen,
Senden, an das Endgerät (10) von mindestens einer der mehreren Sites, der Verbindungsanforderung zum Verbinden der ersten entfernten Konferenzvorrichtung (30A) mit der zweiten entfernten Konferenzvorrichtung (30B) unter den entfernten Konferenzvorrichtungen (30A, 30B), die jeweils an der Vielzahl der Sites angeordnet sind, für die der Nutzungsbeginn der entsprechenden Site registriert ist, bei der Bestimmung, dass der Nutzungsbeginn in den Teilen der Reservierungsinformationen von mindestens zwei oder mehr Sites aus der Vielzahl der Sites registriert ist, an denen jeweils die entfernten Konferenzvorrichtungen (30A, 30B) angeordnet sind, die konfiguriert sind, um miteinander zu kommunizieren,
Empfangen einer Nutzungsstartanforderung von dem Endgerät, um mit der Nutzung der Site zu beginnen;
Registrieren des Nutzungsstarts der entsprechenden Site nach Erhalt der Nutzungsstartanfrage, in den Reservierungsinformationen der Site, für die die Nutzungsstartanfrage übermittelt wird,
Registrieren des Verbindungsabschlusses in den Reservierungsinformationen beim Empfangen, von der Endgerätevorrichtung (10), des Verbindungsabschlusses, der anzeigt, dass diese Verbindung zwischen der ersten entfernten Konferenzvorrichtung (30A) und der zweiten entfernten Konferenzvorrichtung (30B) an einer anderen Site aus der Vielzahl der Sites abgeschlossen ist,
**gekennzeichnet durch**
das Bestimmen, durch eine Verbindungsquellen-Bestimmungseinheit (599), einer dritten entfernten Konferenzvorrichtung (30C) an einer Site aus der Vielzahl der Sites, als eine Verbindungsquelle, für die der Nutzungsbeginn registriert ist, und das Bestimmen mindestens einer der entfernten Konferenzvorrichtungen (30A, 30B) an allen von einer oder mehreren anderen Sites aus der Vielzahl der Sites, für die der Nutzungsbeginn registriert ist, als Verbindungsziel, wenn bestimmt wird, dass der Verbindungsabschluss für keinen der Teile der Reservierungsinformationen der Vielzahl der Sites registriert ist, für die der Nutzungsbeginn registriert ist, und
das Bestimmen, durch die Verbindungsquellen-Bestimmungseinheit (599), der dritten entfernten Konferenzvorrichtungen (30C) an der Site, unter den Sites, für welche der Nutungsbeginn registriert ist, für die der Nutzungsbeginn bei einer spätesten Zeiteinstellung registriert ist, als Verbindungsziel, wenn festgestellt wird, dass der Verbindungsabschluss für keinen der Teile der Reservierungsinformationen registriert ist, für die der Nutzungsbeginn registriert ist.

## Revendications

1. Système de communication (1) dans lequel un appareil terminal (10) et un système de réservation de conférence (50) communiquent entre eux via un réseau, l'appareil terminal (10) étant configuré pour se connecter à un premier appareil de conférence à distance (30A), le premier appareil de conférence à distance (30A) étant configuré pour effectuer une communication et pour transmettre et recevoir des informations avec un deuxième appareil de conférence à distance (30B) via le réseau, dans lequel le système de réservation de conférence (50) comprend :
une unité de stockage d'informations de réservation (57) configuré pour stocker des informations de réservation relatives à la réservation de chaque site où le premier appareil de conférence à distance (30A) est disposé ;
une unité d'identification de destination de connexion (54, 58) configurée pour identifier le deuxième appareil de conférence à distance (30B) comme étant une destination de connexion du premier appareil de conférence à distance (30A), sur la base des informations de réservation ; et
une unité de rapport de demande de connexion (53) configurée pour transmettre, à l'appareil terminal (10), une demande de connexion pour connecter le premier appareil de conférence à distance (30A) au deuxième appareil de conférence à distance (30B) identifié par l'unité d'identification de destination de connexion (54, 58),
dans lequel
l'appareil terminal (10) est configuré pour communiquer, via le réseau, avec le premier appareil de conférence à distance (30A) disposé sur chacun d'une pluralité de sites, et l'appareil terminal (10) comprend :
une unité d'acceptation (13) configurée pour accepter une demande de début d'utilisation pour commencer à utiliser le site ; et
une première unité de communication (11) configurée pour transmettre, au système de réservation de conférence (50), la demande de début d'utilisation pour commencer à utiliser le site accepté par l'unité d'acceptation (13), et
dans lequel
l'unité de stockage d'informations de réservation (57) est configurée pour stocker des éléments des informations de réservation concernant respectivement la réservation de la pluralité des sites, l'unité de rapport de demande de connexion (53) est configurée pour transmettre, à l'appareil terminal (10) d'au moins l'un de la pluralité des sites, la demande de connexion pour connecter le premier appareil de conférence à distance (30A) au deuxième appareil de conférence à distance (30B) parmi les appareils de conférence à distance (30A, 30B) respectivement disposés à la pluralité des sites pour lesquels le début d'utilisation du site correspondant est enregistré,
lorsqu'il est déterminé que le début d'utilisation est enregistré dans les éléments des informations de réservation d'au moins deux ou plusieurs sites parmi la pluralité de sites auxquels les appareils de conférence à distance (30A, 30B) configurés pour communiquer entre eux sont respectivement disposés, et
dans lequel le système de réservation de conférence (50) comprend en outre :
une deuxième unité de communication (52) configurée pour recevoir, depuis l'appareil terminal, la demande de début d'utilisation pour commencer à utiliser le site ;
une unité de gestion de réservation (51) configurée pour enregistrer, dans les informations de réservation du site pour lequel la demande de début d'utilisation est transmise, le début d'utilisation du site correspondant, lors de la réception de la demande de début d'utilisation par la deuxième unité de communication (52), dans lequel l'unité de gestion de réservation (51) est configurée pour enregistrer une connexion achevée dans les informations de réservation, lors de la réception, depuis l'appareil terminal (10), de la connexion achevée indiquant que la connexion entre le premier appareil de conférence à distance (30A) et le deuxième appareil de conférence à distance (30B) sur un autre site parmi la pluralité des sites est achevée,
**caractérisé en ce que**
le système de réservation de conférence (50) comprend en outre une unité de détermination de source de connexion (599) configurée pour déterminer, en tant que source de connexion, un troisième appareil de conférence à distance (30C) à un site parmi la pluralité de sites pour lequel le début d'utilisation est enregistré, et pour déterminer, comme destination de connexion, au moins un des appareils de conférence à distance (30A, 30B) à l'ensemble d'un ou plusieurs autres sites parmi la pluralité de sites pour lesquels le début d'utilisation est enregistré, lors de la détermination que la connexion achevée n'est enregistrée pour aucun des éléments des informations de réservation de la pluralité des sites pour lesquels le début d'utilisation est enregistré, dans lequel l'unité de détermination de source de connexion (599) du système de réservation de conférence (50) est configurée pour :
déterminer, en tant que source de connexion, le troisième appareil de conférence à distance (30C) au site pour lequel le début d'utilisation est enregistré au dernier moment, parmi la pluralité de sites pour lesquels le début d'utilisation est enregistré, lors de la détermination que la connexion achevée n'est enregistrée dans aucun des éléments des informations de réservation pour lesquels le début d'utilisation du site correspondant est enregistré.

2. Système de communication (1) selon la revendication 1, dans lequel la première unité de communication (11) de l'appareil terminal (10) est configurée pour :
acquérir, à partir du système de réservation de conférence (50), avant d'accepter la demande de début d'utilisation, des informations d'identification de réservation des informations de réservation relatives à la réservation du site pour lequel l'appareil terminal (10) est défini ; et
transmettre les informations d'identification de réservation au système de réservation de conférence (50), lors de l'acceptation de la demande de début d'utilisation, et
l'unité de gestion de réservation (51) du système de réservation de conférence (50) est configurée pour :
enregistrer, dans les informations de réservation identifiées par les informations d'identification de réservation, le début d'utilisation du site correspondant.

3. Système de communication (1) selon l'une quelconque des revendications 1 à 2, dans lequel
les informations de réservation comprennent des informations d'identification du premier appareil de conférence à distance (30A), et
l'unité d'identification de destination de connexion (54, 58) du système de réservation de conférence (50) est configurée pour :
identifier le deuxième appareil de conférence à distance (30B) comme étant la destination de connexion du premier appareil de conférence à distance (30A) disposé à un premier site parmi les sites, sur la base des informations d'identification du premier appareil de conférence à distance (30A) incluses dans les informations de réservation.

4. Système de communication (1) selon la revendication 3, dans lequel
les informations de réservation relatives à la réservation de chacun des sites comprennent les informations d'identification du premier appareil de conférence à distance (30A) du premier site parmi les sites et les informations d'identification du deuxième appareil de conférence à distance (30B), et
l'unité d'identification de destination de connexion (54, 58) du système de réservation de conférence (50) est configurée pour :
acquérir, à partir des informations de réservation, les informations d'identification du deuxième appareil de conférence à distance (30B), en tant que destination de connexion du premier appareil de conférence à distance (30A) disposé au site parmi les sites.

5. Système de communication (1) selon la revendication 3, dans lequel
les informations de réservation du premier site parmi les sites comprennent les informations d'identification du deuxième appareil de conférence à distance (30B), et les informations de réservation d'un autre site parmi les sites où le deuxième appareil de conférence à distance (30B) est disposé comprend les informations d'identification du premier appareil de conférence à distance (30A) disposé sur le site parmi les sites, et
l'unité d'identification de destination de connexion (54, 58) du système de réservation de conférence (50) est configuré pour :
acquérir, à partir des informations de réservation du premier site parmi les sites, les informations d'identification du deuxième appareil de conférence distant (30B) disposé sur l'autre site parmi les sites, en tant que destination de connexion du premier appareil de conférence distant (30A) disposé au premier site parmi les sites.

6. Système de communication (1) selon la revendication 4 ou 5, dans lequel
les informations de réservation comprennent un champ utilisateur dans lequel un utilisateur utilisant le premier appareil de conférence à distance (30A) est défini, et
les informations d'identification du premier appareil de conférence à distance (30A) est défini dans le champ utilisateur.

7. Système de communication (1) selon la revendication 1, dans lequel
les informations de réservation comprennent un champ utilisateur dans lequel un utilisateur utilisant le premier appareil de conférence à distance (30A) est défini, et
l'unité d'identification de destination de connexion (54, 58) du système de réservation de conférence (50) est configuré pour :
identifier le deuxième appareil de conférence à distance (30B) de l'autre site parmi les sites pour être la destination de connexion du premier appareil de conférence à distance (30A) disposé sur le site parmi les sites, en identifiant les informations de réservation dans lesquelles l'autre site parmi les sites est réservé dans une même période de temps que celle indiquée dans les informations de réservation du premier site parmi les sites et dans lesquelles un ou plusieurs utilisateurs indiqués dans le champ utilisateur chevauchent un ou plusieurs utilisateurs indiqués dans les informations de réservation du premier site parmi les sites.

8. Système de communication (1) selon la revendication 1, dans lequel
les informations de réservation comprennent un champ de titre dans lequel un titre des informations de réservation est défini, et
l'unité d'identification de destination de connexion (54, 58) du système de réservation de conférence (50) est configuré pour :
identifier le deuxième appareil de conférence à distance (30B) de l'autre site parmi les sites pour être la destination de connexion du premier appareil de conférence à distance (30A) disposé sur le premier site parmi les sites, en identifiant les informations de réservation dans lesquelles l'autre site parmi les sites est réservé dans une même période de temps que celle indiquée dans les informations de réservation du premier site parmi les sites et dans lesquelles le titre est le même que le titre des informations de réservation du premier site parmi les sites.

9. Système de réservation de conférence (50) qui communique avec un appareil terminal (10) via un réseau, l'appareil terminal (10) étant configuré pour se connecter à un premier appareil de conférence à distance (30A), le premier appareil de conférence à distance (30A) étant configuré pour effectuer une communication et pour transmettre et recevoir des informations avec un deuxième appareil de conférence à distance (30B) via le réseau, dans lequel le système de réservation de conférence (50) comprend :
une unité de stockage d'informations de réservation (57) configurée pour stocker des informations de réservation relatives à la réservation de chaque site où le premier appareil de conférence à distance (30A) est disposé ;
une unité d'identification de destination de connexion (54, 58) configurée pour identifier le deuxième appareil de conférence à distance (30B) comme étant une destination de connexion du premier appareil de conférence à distance (30A), sur la base des informations de réservation ; et
une unité de rapport de demande de connexion (53) configurée pour transmettre, à l'appareil terminal, une demande de connexion pour connecter le premier appareil de conférence à distance (30A) au deuxième appareil de conférence à distance (30B) identifié par l'unité d'identification de destination de connexion (54, 58),
dans lequel
l'unité de stockage d'informations de réservation (57) est configurée pour stocker des éléments des informations de réservation concernant respectivement la réservation de la pluralité des sites,
l'unité de rapport de demande de connexion (53) est configurée pour transmettre, à l'appareil terminal (10) d'au moins l'un de la pluralité de sites, la demande de connexion pour connecter le premier appareil de conférence à distance (30A) au deuxième appareil de conférence à distance (30B) parmi les appareils de conférence à distance (30A, 30B) respectivement disposés à la pluralité des sites pour lesquels le début d'utilisation du site correspondant est enregistré, lors de la détermination que le début d'utilisation est enregistré dans les éléments des informations de réservation d'au moins deux ou plusieurs sites parmi la pluralité des sites auxquels les appareils de conférence à distance (30A, 30B) configurés pour communiquer entre eux sont respectivement disposés, et
dans lequel le système de réservation de conférence (50) comprend en outre :
une deuxième unité de communication (52) configurée pour recevoir, depuis l'appareil terminal,
une demande de début d'utilisation pour commencer à utiliser le site ;
une unité de gestion de réservation (51) configurée pour enregistrer, dans les informations de réservation du site pour lequel la demande de début d'utilisation est transmise, le début d'utilisation du site correspondant, lors de la réception de la demande de début d'utilisation par la deuxième unité de communication (52), dans laquelle l'unité de gestion de réservation (51) est configurée pour enregistrer une connexion achevée dans les informations de réservation, lors de la réception, depuis l'appareil terminal (10), de la connexion achevée indiquant que la connexion entre le premier appareil de conférence à distance (30A) et le deuxième appareil de conférence à distance (30B) à un autre site parmi la pluralité des sites est achevée,
**caractérisé par**
une unité de détermination de source de connexion (599) configurée pour déterminer, en tant que source de connexion, un troisième appareil de conférence à distance (30C) à un site parmi la pluralité des sites pour lesquels le début d'utilisation est enregistré, et pour déterminer, en tant que destination de connexion, au moins l'un des appareils de conférence à distance (30A, 30B ) sur l'ensemble d'un ou plusieurs autres sites parmi la pluralité de sites pour lesquels le début d'utilisation est enregistré, lors de la détermination que la connexion achevée n'est enregistrée pour aucune des éléments des informations de réservation de la pluralité de sites pour lesquels le début d'utilisation est enregistré, dans laquelle l'unité de détermination de source de connexion (599) du système de réservation de conférence (50) est configurée pour :
déterminer, en tant que source de connexion, le troisième appareil de conférence à distance (30C) sur le site pour lequel le début d'utilisation est enregistré au dernier moment, parmi la pluralité de sites pour lesquels le début d'utilisation est enregistré, lors de la détermination que la connexion achevée n'est enregistrée dans aucun des éléments des informations de réservation pour lesquels le début d'utilisation du site correspondant est enregistré.

10. Programme informatique comprenant des instructions qui, lorsque le programme est exécuté par un système de réservation de conférence (50), amènent le système de réservation de conférence (50) à exécuter des fonctions, le système de réservation de conférence (50) étant configuré pour communiquer avec un appareil terminal (10) via un réseau, l'appareil terminal (10) étant configuré pour se connecter à un premier appareil de conférence à distance (30A), le premier appareil de conférence à distance (30A) étant configuré pour effectuer une communication et pour transmettre et recevoir des informations avec un deuxième appareil de conférence à distance (30B) via le réseau, les fonctions exécutées par le système de réservation de conférence (50) comprenant :
le stockage d'informations de réservation, les informations de réservation concernant la réservation de chaque site où le premier appareil de conférence à distance (30A) est disposé ;
l'identification du deuxième appareil de conférence à distance (30B) comme étant une destination de connexion du premier appareil de conférence à distance (30A), sur la base des informations de réservation ; et
la transmission, à l'appareil terminal (10), d'une demande de connexion pour connecter le premier appareil de conférence à distance (30A) au deuxième appareil de conférence à distance (30B) identifié comme étant la destination de connexion du premier appareil de conférence à distance (30A),
dans lequel les fonctions exécutées par le système de réservation de conférence (50) comprennent en outre : le stockage d'éléments des informations de réservation concernant respectivement la réservation de la pluralité des sites,
la transmission, à l'appareil terminal (10) d'au moins l'un de la pluralité des sites, de la demande de connexion pour connecter le premier appareil de conférence à distance (30A) au deuxième appareil de conférence à distance (30B) parmi les appareils de conférence à distance (30A, 30B) respectivement disposés sur la pluralité des sites pour lesquels le début d'utilisation du site correspondant est enregistré, lors de la détermination que le début d'utilisation est enregistré dans les informations de réservation d'au moins deux ou plusieurs sites parmi la pluralité des sites auxquels les appareils de conférence à distance (30A, 30B) configurés pour communiquer entre eux sont respectivement disposés ;
la réception, à partir de l'appareil terminal, d'une demande de début d'utilisation pour commencer à utiliser le site ;
l'enregistrement, dans les informations de réservation du site pour lequel la demande de début d'utilisation est transmise, du début d'utilisation du site correspondant, lors de la réception de la demande de début d'utilisation,
l'enregistrement de la connexion achevée dans les informations de réservation, lors de la réception, depuis l'appareil terminal (10), de la connexion achevée indiquant que la connexion entre le premier appareil de conférence à distance (30A) et le deuxième appareil de conférence à distance (30B) sur un autre site parmi la pluralité des sites est achevée,
**caractérisé par**
la détermination par une unité de détermination de source de connexion (599), en tant que source de connexion, d'un troisième appareil de conférence à distance (30C) sur un site parmi la pluralité de sites pour lesquels le début d'utilisation est enregistré, et la détermination, en tant que destination de connexion, au moins l'un des appareils de conférence à distance (30A, 30B) sur l'ensemble d'un ou plusieurs autres sites parmi la pluralité des sites pour lesquels le début d'utilisation est enregistré, lors de la détermination que la connexion achevée n'est enregistré pour aucun des éléments des informations de réservation de la pluralité des sites pour lesquels le début d'utilisation est enregistré, et
la détermination par l'unité de détermination de source de connexion (599), en tant que source de connexion, du troisième appareil de conférence à distance (30C) au site pour lequel le début d'utilisation est enregistré au dernier moment, parmi la pluralité de sites pour lesquels le début d'utilisation est enregistré, lors de la détermination que la connexion achevée n'est enregistrée dans aucuns des éléments des informations de réservation pour lesquels le début d'utilisation du site correspondant est enregistré.
